(19) Europäisches Patentamt / European Patent Office / Office européen des brevets

(11) **EP 3 837 288 B1**

(12) **EUROPEAN PATENT SPECIFICATION**

(45) Date of publication and mention of the grant of the patent:
**06.12.2023 Bulletin 2023/49**

(21) Application number: **19753071.0**

(22) Date of filing: **12.08.2019**

(51) International Patent Classification (IPC):
**C08B 37/00** (2006.01)

(52) Cooperative Patent Classification (CPC):
**C08B 37/0045; C08B 37/0003; C08B 37/0048**

(86) International application number:
**PCT/EP2019/071621**

(87) International publication number:
**WO 2020/035461 (20.02.2020 Gazette 2020/08)**

(54) **ACTIVATED PECTIN-CONTAINING BIOMASS COMPOSITIONS, PRODUCTS, AND METHODS OF PRODUCING**

AKTIVIERTES PEKTIN ENTHALTENDE BIOMASSE ZUSAMMENSETZUNGEN, PRODUKTE UND METHODEN ZUR HERSTELLUNG

COMPOSITIONS DE BIOMASSE CONTENANT DE LA PECTINE ACTIVE, PRODUITS ET PROCEDES DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2018 US 201862718001 P**

(43) Date of publication of application:
**23.06.2021 Bulletin 2021/25**

(73) Proprietor: **CP Kelco ApS**
**4623 Lille Skensved (DK)**

(72) Inventors:
• **HANSEN, Jack Harbo**
  **4623 Lille Skensved (DK)**
• **HENRIKSEN, Wencke Dybvik**
  **4623 Lille Skensved (DK)**
• **PEDERSEN, Heidi Liva**
  **4623 Lille Skensved (DK)**
• **PEDERSEN, Tommy Ewi**
  **4623 Lille Skensved (DK)**
• **STAUNSTRUP, Jan Aae**
  **4623 Lille Skensved (DK)**

(74) Representative: **Murgitroyd & Company**
**Murgitroyd House**
**165-169 Scotland Street**
**Glasgow G5 8PL (GB)**

(56) References cited:
EP-A1- 3 466 983          WO-A2-01/38400
GB-A- 2 311 024

• ANTÓNIO G. SOUSA ET AL: "The impact of rhamnogalacturonan-I side chain monosaccharides on the rheological properties of citrus pectin", FOOD HYDROCOLLOIDS, vol. 47, 30 January 2015 (2015-01-30), pages 130-139, XP055464019, NL ISSN: 0268-005X, DOI: 10.1016/j.foodhyd.2015.01.013
• CHAN SIEW YIN ET AL: "Pectin as a rheology modifier: Origin, structure, commercial production and rheology", CARBOHYDRATE POLYMERS, APPLIED SCIENCE PUBLISHERS, LTD. BARKING, GB, vol. 161, 24 December 2016 (2016-12-24), pages 118-139, XP029917979, ISSN: 0144-8617, DOI: 10.1016/J.CARBPOL.2016.12.033
• SAKAI T ET AL: "PECTIN, PECTINASE, AND PROTOPECTINASE: PRODUCTION, PROPERTIES AND APPLICATIONS", ADVANCES IN APPLIED MICROBIOLOGY, NEW YORK, NY, US, vol. 39, 1 January 1993 (1993-01-01), pages 213-294, XP001146835,

• **GUO XIAOBING ET AL: "Using the high temperature resistant pH electrode to auxiliarily study the sugar beet pectin extraction under different extraction conditions", FOOD HYDROCOLLOIDS, ELSEVIER BV, NL, vol. 70, 30 March 2017 (2017-03-30), pages 105-113, XP085007956, ISSN: 0268-005X, DOI: 10.1016/J.FOODHYD.2017.03.032**

**Description**

**BACKGROUND**

Dietary fiber or roughage is the indigestible portion of food derived from plants. The consumption of foods high in fiber has been found to reduce appetite. Dietary fiber is made up of soluble and insoluble fiber. Soluble fiber, which dissolves in water, is readily fermented in the colon into gases and physiologically active byproducts and can be prebiotic and viscous. Insoluble fiber, which does not dissolve in water, is either metabolically inert and provides bulking or can be prebiotic and metabolically fermented in the large intestine.

Dietary fibers can act by changing the nature of the contents of the gastrointestinal tract and by changing how other nutrients and chemicals are absorbed. Some types of soluble fiber absorb water to become a gelatinous, viscous substance which is fermented by bacteria in the digestive tract. Some types of insoluble fiber have bulking action and are not fermented. Lignin, a major dietary insoluble fiber source, may alter the rate and metabolism of soluble fibers. Other types of insoluble fiber, notably resistant starch, are fully fermented.

Chemically, dietary fiber consists of non-starch polysaccharides such as arabinoxylans, cellulose and many other plant components such as resistant starch, resistant dextrins, inulin, lignin, waxes, chitins, pectins, beta-glucans, and oligosaccharides. A novel position has been adopted by the US Department of Agriculture to include functional fibers as isolated fiber sources that may be included in the diet. The term "fiber" is something of a misnomer, since many types of so-called dietary fiber are not actually fibrous.

Food sources of dietary fiber are often divided according to whether they provide predominantly soluble or insoluble fiber. Plant foods contain both types of fiber in varying degrees, according to the plant's characteristics.

Advantages of consuming fiber are the production of healthful compounds during the fermentation of soluble fiber and insoluble fiber's ability (via its passive hygroscopic properties) to increase bulk, soften stool, and shorten transit time through the intestinal tract.

Often dietary fiber compositions are used in the food or consumer product industry for their functional properties that include viscosifying, water absorbing, bulking, emulsifying and even gelling properties. The addition of a functional dietary fiber can provide textural benefits, nutritional benefits, and in some cases simpler labels replacing less consumer friendly options.

Thus, there remains a need for providing a dietary fiber from pectin-containing plants that can be processed with ease and retain both soluble and insoluble fiber components with high quality properties.

**SUMMARY**

It is an object of the present disclosure to provide a method for producing an activated pectin-containing biomass composition from a starting pectin-containing biomass material, the activated pectin-containing biomass composition, and a product comprising such an activated pectin-containing biomass composition. This can be achieved by the features as defined by the independent claims. Further enhancements are characterized by the dependent claims. It has now surprisingly been found that a starting pectin-containing biomass material comprising insoluble protopectin and insoluble fiber (e.g. cellulosic fiber from citrus peel) can be treated with an activating solution comprising an alcohol and an acid under certain conditions and exposed to a certain amount of mechanical energy under non-laminar flow to transform the insoluble protopectin to soluble pectin in situ and to partially fibrillate a portion of the cellulosic fibers into fibrils. The result is an activated pectin-containing biomass composition containing the soluble pectin component and the insoluble fiber component interacting to form an open network providing for a final composition with increased apparent viscosity and water binding characteristics and a high ratio of soluble pectin to insoluble fiber. Further, the soluble pectin component through this treatment becomes soluble in water, i.e. cold water, and may be extracted without adding heat, thus overcoming some of the disadvantages related to traditional methods of extracting pectin from a pectin-containing biomass material.

Methods for producing an activated pectin-containing biomass composition are provided, such as methods in which citrus peel is the starting pectin-containing biomass material and the resulting activated pectin-containing biomass composition has a coil overlap parameter of at or about 2 or greater. A first method for producing an activated pectin-containing biomass composition is disclosed herein, and the first method comprises A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding hydrochloric acid to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. During this first method, the alcohol present in the mixture is at or greater than about 35 weight percent alcohol, for example at or greater than about 40 weight percent, based on the total weight of the mixture, and an acid solution containing from about 3 wt. % to about 37 wt. % hydrochloric acid is added to the mixture in step B).

A second method for producing an activated pectin-containing biomass composition is disclosed, and the method comprises A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding sulfuric acid to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. During this second method, the alcohol present in the mixture is at or greater than about 35 weight percent alcohol, for example at or greater than about 40 weight percent, based on the total weight of the mixture, and an acid solution containing from about 5 wt. % to about 20 wt. % sulfuric acid is added to the mixture in step B).

A third method for producing an activated pectin-containing biomass composition is disclosed, and the method comprises a) mixing a starting pectin-containing biomass material comprising an insoluble fiber component and an insoluble protopectin component with an aqueous solution of an alcohol to form a mixture; b) treating the mixture of step a) to reduce the calcium content of the starting pectin-containing biomass material to less than or equal to about 6 mg per g dry matter of the starting pectin-containing biomass material to form a calcium-reduced pectin-containing biomass material; c) activating the calcium-reduced pectin-containing biomass material in the mixture of step b) to form an activated pectin-containing biomass composition comprising the insoluble fiber component and a soluble pectin component by subjecting the calcium-reduced pectin-containing biomass material to an activating solution formed by adding sulfuric acid and/or phosphoric acid to the mixture to adjust the pH of the mixture within the range from at or about 0.5 to at or about 2.5, and heating to a temperature greater than at or about 40 °C; d) applying mechanical energy (i) to the mixture of step a), (ii) during step b), (iii) during the activating of step c), or (iv) any combination thereof, and e) separating the activated pectin-containing biomass composition from the mixture. During this third method, the alcohol present in the mixture can be at or greater than about 35 weight percent at or greater than about 40 weight percent alcohol, based on the total weight of the mixture.

A fourth method for producing an activated pectin-containing biomass composition is disclosed, and the method comprises A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding an acid to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. In this fourth method, the starting pectin-containing biomass material can comprise citrus fruit vesicles, such as orange vesicles, lemon vesicles, lime vesicles, grapefruit vesicles, tangerine vesicles, and the like, or any combination thereof. In this method, the starting pectin-containing biomass material is in contact with the activating solution for a time period of at least 30 minutes. During the fourth method the alcohol present in the mixture can be at or greater than about 35 weight percent or at or greater than about 40 weight percent, based on the total weight of the mixture.

Activated pectin-containing biomass compositions are also provided comprising an insoluble fiber component of cellulosic material and a soluble pectin component, and while not being limited thereto, such compositions can contain from about 55 to about 80 weight percent insoluble fiber component and from about 20 to about 45 weight percent soluble pectin component. Moreover, when produced from citrus fruit as the starting pectin-containing biomass material, the activated pectin-containing biomass compositions have a coil overlap parameter of at or about 2 or greater.

## BRIEF DESCRIPTION OF THE FIGURES

The accompanying drawings illustrate presently exemplary embodiments of the disclosure and serve to explain, by way of example, the principles of the disclosure.

FIG. 1 is a diagrammatic illustration of a graph with data plotted from energy Table 1 according to an exemplary embodiment of the present disclosure.

FIG. 2 is a diagrammatic illustration of a graph with data plotted from energy Table 2 according to an exemplary embodiment of the present disclosure.

FIG. 3 is a plot of Qvisc versus calcium for certain experiments in Example 10.

FIG. 4 is a plot of Qvisc versus calcium for certain experiments in Example 10.

FIG. 5 is a plot of Qvisc versus pectin recovery for certain experiments in Example 10.

## DETAILED DESCRIPTION

Activated pectin-containing biomass compositions described herein include an insoluble fiber component and a soluble pectin component. The activated pectin-containing biomass compositions are derived from starting pectin-containing biomass material (i) that is combined with an activating solution and subjected to heat of greater than at or about 40 degrees Celsius for activation and (ii) to which mechanical energy is applied either before activation, during activation or in both instances; wherein throughout the method the alcohol is present in the mixture at or greater than about 35 weight percent or at or greater than about 40 weight percent, based on the total percent of the mixture. This results in improved processing and functionality as compared to pectin-containing biomass compositions derived from starting pectin-containing biomass material without being subjected to activation and mechanical energy.

Much of the pectin in the starting pectin-containing biomass material is in the form of protopectin (i.e., insoluble pectin having a very high degree of esterification (DE) that is unavailable) that must be hydrolyzed to become functional. By mixing a starting pectin-containing biomass material with an activating solution containing alcohol and acid and applying heat (i.e. activating or activation), the protopectin can be hydrolyzed without degrading or extracting the resulting pectin, and therefore results in an activated pectin-containing biomass composition having significantly more soluble pectin than would otherwise be available using conventional methods. Furthermore, applying mechanical energy to the starting pectin-containing biomass material, either before or during contact with the activating solution or in both instances, has been found to advantageously enable a greater amount of protopectin to be hydrolyzed and therefore results in the formation of greater amounts of water soluble pectin. The pectin-containing biomass compositions comprise a soluble pectin component with improved functionality, such as higher intrinsic viscosity and higher pectin yield, and an insoluble fiber component with improved functionality, such as higher water binding capacity.

*Activated pectin-containing biomass compositions*

The properties of the activated pectin-containing biomass composition may be characterized by the coil overlap parameter of the composition, which is a means to evaluate the quality and quantity of the pectin within the activated pectin-containing biomass composition. That is, the coil overlap parameter may be used to indicate the functionality of the activated pectin-containing biomass composition. As used herein, the coil overlap parameter is determined by the following formula:

$$\text{Coil Overlap Parameter} = \text{IV}_{\text{pectin}} \text{ X Pectin Recovery,}$$

wherein the $\text{IV}_{\text{pectin}}$ is the intrinsic viscosity of the pectin extracted from the activated pectin-containing biomass composition, and the pectin recovery is the amount of pectin extracted from the activated pectin-containing biomass composition divided by the total amount of activated pectin-containing biomass composition. Thus, the unit of coil overlap parameter is dl/g. The intrinsic viscosity and pectin recovery of the pectin each may be measured using any suitable method, such as for example, the methods as described herein.

The activated pectin-containing biomass composition can have a coil overlap parameter of at or about 1.2 or greater, particularly when using citrus fruit as the starting pectin-containing biomass material. The activated pectin-containing biomass composition can have a coil overlap parameter from at or about 1.2 to at or about 4.5. The activated pectin-containing biomass composition can have a coil overlap parameter from at or about 2 to at or about 4.5. The activated pectin-containing biomass composition can have a coil overlap parameter from at or about 2.5 to at or about 4.5. The activated pectin-containing biomass composition can have a coil overlap parameter from at or about 2 to at or about 3.5. Further, the activated pectin-containing biomass composition can have a coil overlap parameter of 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4.0, 4.1, 4.2, 4.3, 4.4, 4.5, 4.6, or 4.7. The activated pectin-containing biomass composition of this disclosure may have a coil overlap parameter value between any of these recited coil overlap parameter values.

When the activated pectin-containing biomass composition is derived from other pectin-containing materials such as apples, Jerusalem artichokes or beets, the coil overlap parameter varies according to the amount of natural protopectin available for conversion to soluble pectin. The activated pectin-containing biomass composition when using a starting pectin biomass material selected from apple, Jerusalem artichoke or beet can have a coil overlap parameter within the range of at or about 0.5 to at or about 2.0. Further the activated pectin-containing biomass composition can have at least about 300 percent greater than that of a coil overlap parameter of the starting pectin-containing biomass material.

The activated pectin-containing biomass composition can have an apparent viscosity from at or about 150 mPa·s to at or about 3500 mPa·s when measured in a 2 wt. % aqueous solution at a temperature of 25 °C and pH 4.0 using a Brookfield Viscometer as disclosed in Protocol 2 herein, particularly when using citrus fruit as the starting pectin-containing biomass material. The apparent viscosity can be from at or about 250 mPa·s to at or about 3100 mPa·s, from at or about 350 mPa·s to at or about 3100 mPa·s, from at or about 500 mPa·s to at or about 3100 mPa·s, from at or about 600 mPa·s to at or about 3100 mPa·s, from at or about 800 mPa·s to at or about 3100 mPa·s, from at or about 1000 mPa·s to at or about 3100 mPa·s, from at or about 1200 mPa·s to at or about 3100 mPa·s, from at or about 1500 mPa·s to at or about 3100 mPa·s, from at or about 2000 mPa·s to at or about 3100 mPa·s, and from at or about 2500 mPa·s to at or about 3100 mPa·s. The activated pectin-containing biomass composition of this disclosure also may have an apparent viscosity between any of these recited viscosity values.

The activated pectin-containing biomass compositions has a Quick viscosity (Qvisc) when measured as disclosed in Example 10 herein of at least about 50 mPa·s, for instance in a range from about 50 mPa·s to about 400 mPa·s, or from about 150 mPa·s to about 300 mPa·s, particularly when using citrus fruit as the starting pectin-containing biomass material. In other aspects, such activated pectin-containing biomass compositions can be characterized by a Qvisc of from about 100 mPa·s to about 220 mPa·s; alternatively, from about 110 mPa·s to about 210 mPa·s; or alternatively, from about 140 mPa·s to about 200 mPa·s.

The activated pectin-containing biomass composition can have a water binding capacity from at or about 14 g/g to at or about 70 g/g, or from at or about 14 g/g to at or about 27 g/g. The activated pectin-containing biomass composition can have a water binding capacity from at or about 18 g/g to at or about 27 g/g. The water binding capacity of the activated pectin-containing composition can be from at or about 20 g/g to at or about 27 g/g.

The activated pectin-containing biomass composition can have a pH of at least at or about 2.5. For example, the activated pectin-containing biomass composition may have a pH from at or about 2.5 to at or about 9, from at or about 2.5 to at or about 5.5, from at or about 2.7 to at or about 4.5, or from at or about 3.5 to at or about 4.5, in a 1 wt. % solution in de-ionized water.

By activating the starting pectin-containing biomass material to become the activated pectin-containing biomass composition, protopectin can be converted to its readily soluble form of pectin in situ. The methods as described below do not remove the natural pectic substances present in the starting pectin-containing biomass material. In some variations, substantially no pectin is extracted from the starting pectin-containing biomass material of the mixture during the activating step. As used herein, "substantially no pectin is extracted" means that less than 1% of the pectin in the starting pectin-containing biomass material is removed during the activating step. Not wishing to be bound by any theory, it is believed that the use of the alcohol during the activating step prevents the pectin from leeching out of the starting pectin-containing biomass material. This results in an activated pectin-containing biomass composition that is not only highly functional, but also closer to nature, resulting in a minimally processed product.

The pectin component can be present in the activated pectin-containing biomass composition in an amount from at or about 20% to at or about 55% by weight of the activated pectin-containing biomass composition. The pectin component can be present in an amount from about 20% to about 45% by weight of the activated pectin-containing biomass composition. The pectin can be present in an amount from at or about 30% to at or about 50% by weight of the activated pectin-containing biomass composition. The pectin component can be present in an amount of about 20%, about 25%, about 30%, about 35%, about 40%, about 45%, about 50%, or about 55% by weight of the activated pectin-containing biomass composition. Further, the pectin component may also be present in the activated pectin-containing biomass composition of this disclosure at an amount in a range between any of these recited values.

The activated pectin-containing biomass composition has a residual sugar content as measured in Protocol 4 of less than about 30% by weight of the activated pectin-containing biomass composition. Using a starting pectin-containing biomass material that has been alcohol washed, as further described below, washes out the sugar and improves therefore the quantity and quality of the pectin component in the activated pectin-containing biomass material. The residual sugar content can be from about 3% to about 30% by weight of the activated pectin-containing biomass composition. The residual sugar content can be about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 21%, about 22%, about 23%, about 24%, about 25%, about 26%, about 27%, about 28%, about 29%, or about 30%. Further, the activated pectin-containing biomass composition of this disclosure may also have a residual sugar content value between any of these recited residual sugar content values.

The activated pectin-containing biomass composition can be dried into a dry particulate form. This dry particulate form can be milled, which turns the activated pectin-containing biomass composition into a powder form suitable for handling, for example adding to a food product.

The activated pectin-containing biomass composition may not be dried but be present undissolved in the mixture in which the material was activated. Such would typically but not always be utilized when pectin within the activated pectin-containing biomass composition were to be extracted. Such extraction can be made by separating the alcohol and more or less water from the activated pectin-containing biomass composition. The separated alcohol may be reused in subsequent production of activated pectin-containing biomass compositions. Alternatively, the activated pectin-containing biomass composition may be extracted without separating alcohol and more or less water from the activated pectin-containing biomass composition.

*Methods*

In one or more exemplary embodiments, methods produce activated pectin-containing biomass compositions with various characteristics as described above. One technical effect of the methods is that the resulting activated pectin-containing biomass composition has an insoluble fiber component with a fibrous open network structure and a pectin component in situ of a high quality and a high content. The methods produce an activated pectin-containing biomass composition from a starting pectin-containing biomass material.

A first method for producing an activated pectin-containing biomass composition can comprise (or consist essentially of, or consist of) A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding hydrochloric acid to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. During this first method, the alcohol present in the mixture is at or greater than about 35 weight percent alcohol, for example at or greater than about 40 weight percent, based on the total weight of the mixture. An acid solution containing from about 3 wt. % to about 37 wt. % hydrochloric acid is added to the mixture in step B), for example from about 5 wt. % to about 37 wt. % hydrochloric acid.

A second method for producing an activated pectin-containing biomass composition can comprise (or consist essentially of, or consist of) A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding sulfuric acid to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. During this second method, the alcohol present in the mixture is at or greater than about 35 weight percent alcohol, for example at or greater than about 40 weight percent, based on the total weight of the mixture. An acid solution containing from about 5 wt. % to about 20 wt. % sulfuric acid is added to the mixture in step B), for example from about 7 wt. % to about 15 wt. % sulfuric acid.

A third method for producing an activated pectin-containing biomass composition can comprise (or consist essentially of, or consist of) a) mixing a starting pectin-containing biomass material comprising an insoluble fiber component and an insoluble protopectin component with an aqueous solution of an alcohol to form a mixture; b) treating the mixture of step a) to reduce the calcium content of the starting pectin-containing biomass material to less than or equal to about 6 mg per g dry matter of the starting pectin-containing biomass material to form a calcium-reduced pectin-containing biomass material; c) activating the calcium-reduced pectin-containing biomass material in the mixture of step b) to form an activated pectin-containing biomass composition comprising the insoluble fiber component and a soluble pectin component by (i) subjecting the calcium-reduced pectin-containing biomass material to an activating solution formed by adding sulfuric acid and/or phosphoric acid to the mixture to adjust the pH of the mixture within the range from at or about 0.5 to at or about 2.5 and (ii) heating to a temperature greater than at or about 40 °C; d) applying mechanical energy (i) to the mixture of step a), (ii) during step b), (iii) during the activating of step c), or (iv) any combination thereof; and e) separating the activated pectin-containing biomass composition from the mixture. During this third method, the alcohol present in the mixture can be at or greater than about 35 weight percent or at or greater than about 40 weight percent alcohol, based on the total weight of the mixture.

A fourth method for producing an activated pectin-containing biomass composition can comprise (or consist essentially of, or consist of) A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding an acid to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. In this fourth method, the starting pectin-containing biomass material comprises citrus fruit vesicles, such as orange vesicles, lemon vesicles, lime vesicles, grapefruit vesicles, tangerine vesicles, and the like, or any combination thereof. During the fourth method the alcohol present in the mixture is at or greater than about 35 weight percent, for example at or greater than about 40 weight percent alcohol, based on the total weight of the mixture.

Also encompassed herein are activated pectin-containing biomass compositions prepared by the any of the methods disclosed herein, such as via the first method, the second method, the third method, and/or the fourth method.

The starting pectin-containing biomass material is a non-activated pectin-containing biomass material that includes an insoluble fiber component and insoluble protopectin (i.e. pectin in its insoluble form). Non-limiting examples of pectin-containing biomass material include citrus fruit and/or its peel (such as orange, lemon, lime, grapefruit, pomelo, oroblanco and tangerine), apple pomace, grape pomace, pear pomace, quince pomace, fodder beet, sugar beet, sugar beet residue from sugar extraction, sunflower residue from oil extraction, potato residue from starch production, Jerusalem artichokes, pineapple peel and core, chicory roots, and other pectin-containing biomass materials. The insoluble fiber component generally includes, for example, predominantly cellulosic fibers such as hemicellulose and cellulose.

Consistent with particular aspects of this invention, the starting pectin-containing biomass material can be obtained from citrus fruit. Hence, the starting pectin-containing biomass material can comprise citrus fruit peels (such as orange peels, lemon peels, lime peels, grapefruit peels, tangerine peels, and the like, as well as combination thereof) and/or citrus fruit vesicles (such as orange vesicles, lemon vesicles, lime vesicles, grapefruit vesicles, tangerine vesicles, and the like, as well as combinations thereof).

The starting pectin-containing biomass material can be cleaned and prepared for use by contact and washing with water ("water washed") according to traditional method used for making water washed material. This method involves taking, for example, fresh and cut citrus peel and washing it with 2-3 volumes of water. This operation may be performed 1-4 times after which the resulting water washed peel is mechanically pressed.

The starting pectin-containing biomass material can be cleaned and prepared for use by contact and washing with alcohol ("alcohol washed"). The alcohol washed starting pectin-containing biomass material can be prepared using the processes, in full or in part, as described in U.S. Patent No. 8,323,513 which is incorporated herein by reference. It is believed that the protopectin present in the starting pectin-containing biomass material may bind water, thereby making removal of water difficult. Treating (i.e. washing) starting pectin-containing biomass material with alcohol has been found to cause the protopectin in situ to lose its water binding ability, which results in water leaching out of the starting pectin-containing biomass material without the protopectin, and therefore ultimately increasing pectin yield.

Non-limiting examples of suitable alcohols include ethanol, isopropanol, methanol, and combinations thereof. The alcohol may be present in the wetting composition in an amount from about 40 to about 85% by weight of the wetting composition or at least about 70% by weight of the wetting composition. The wetting composition may also include water in addition to alcohol, which may constitute all or substantially the remainder of the wetting composition in addition to the alcohol.

When the starting pectin-containing biomass material is alcohol washed, after each wash, the starting pectin-containing biomass material may be mechanically separated from at least a portion of the alcohol-containing wetting composition to form an alcohol washed starting pectin-containing biomass material. The mechanical separation may be done by pressing the wetted starting pectin-containing biomass material, which may be carried out by any suitable pressing device, such as a single screw press-type, or by hand. The pressure during pressing may range from about 0.5 bar to about 8 bar or from about 2 bar to about 4 bar and the duration of pressing may range from about 1 minute to about 25 minutes, or about 10 minutes to about 25 minutes, or about 15 minutes to about 25 minutes.

The starting pectin-containing biomass material may undergo only one alcohol wash, followed by mechanical separation to form an alcohol washed starting pectin-containing biomass material. The starting pectin-containing biomass material may undergo more than one alcohol wash and corresponding mechanical separation to form an alcohol washed starting pectin-containing biomass material. The starting pectin-containing biomass material may undergo a first alcohol wash and corresponding mechanical separation, and thereafter undergo a second alcohol wash and corresponding mechanical separation to form an alcohol washed starting pectin-containing biomass material.

The starting pectin-containing biomass material may optionally be dried by exposure to heat to form a dried starting pectin-containing biomass material.

In step A) and step a), the starting pectin-containing biomass material whether water washed or alcohol washed or wet or dry can be mixed with an aqueous solution of an alcohol to form a mixture wherein the alcohol present in the mixture is at or greater than about 35 weight percent alcohol or at or greater than about 40 weight percent based on the total weight of the mixture. In step A), the alcohol may be present in the mixture in an amount of at or about 35 to at or about 60 weight percent alcohol or at or about 40 to at or about 60 weight percent alcohol. The amount of alcohol to be added or diluted may be calculated by one of ordinary skill in the art depending on the amount of water present in the water washed starting pectin-containing biomass material and depending on the amount of alcohol and water present in the alcohol washed starting pectin-containing biomass material.

Referring now to the first and second methods, prior to the activating in step B), the starting pectin-containing biomass material comprises the insoluble fiber component and insoluble protopectin component. When the starting pectin-containing biomass material is in contact with the activating solution, the protopectin hydrolyzes in situ to yield water soluble pectin within the starting pectin-containing biomass material, thereby resulting in an activated pectin-containing biomass composition including the insoluble fiber component and the soluble pectin component. It is believed that the protopectin converts to water soluble pectin through the action of the acid and, due to the alcohol, does so without leaching out of the starting pectin containing biomass material. As a result, pectin yield may be improved.

The activating solution comprising an alcohol and an acid and may be formed by adding acid to the mixture of step A) to adjust the pH of the mixture within the range from at or about 0.5 to at or about 2.5. Thus, the activating solution can have a pH of about 0.5 to about 2.5 or of about 1.0 to about 2.0. Non-limiting examples of suitable alcohols include isopropyl alcohol, ethanol, methanol, and combinations thereof. Non-limiting examples of suitable acids include organic and inorganic acids such as nitric acid, citric acid, oxalic acid, hydrochloric acid, sulfuric acid, phosphoric acid, and combinations thereof. The alcohol may be a solution may of about 40% to about 80% alcohol, such as ethanol, and the acid may be a solution of about 10% to about 65% hydrochloric acid in the first method, and a solution of about 10% to about 65% sulfuric acid in the second method, in order to provide a pH of the mixture within the range from about 0.5 to about 2.5.

The time period the starting pectin-containing biomass material is in contact with an activating solution will vary depending at least in part on the types of alcohol and acids used, the temperature at which the mixture is heated, and whether or not mechanical energy is applied in step B and to the intensity of the mechanical energy applied. For example, the starting pectin-containing biomass material may be contacted with the activating solution for a period of at least about 5 minutes to at or about 2 hours. The starting pectin-containing biomass material may be contacted with the activating solution for a period of at or about 15 minutes to at or about 1 hour. Further, step B) may be conducted for a period of 5, 10, 15, 20, 25, 30, 35, 40, 45, 50, 55 minutes or 1 hr, 1.1 hr, 1.2 hr, 1.25 hr, 1.3 hr, 1.4 hr, 1.5 hr, 1.6 hr, 1.7 hr, 1.75 hr, 1.8 hr, 1.9 hr, and 2 hr. The mixture can be heated for a period of time that is between any of these recited values.

The activating step B) includes heating the mixture of the starting pectin-containing biomass material and the activating solution to a temperature that is greater than at or about 40 degrees Celsius (°C). The mixture can be heated to a temperature from at or about 40 °C to at or about 90 °C. The mixture can be heated to a temperature that is from at or about 60 °C to at or about 75 °C. The mixture can be heated to a temperature of at or about one of 40°C, 45°C, 50°C, 55°C, 60°C, 65°C, 70°C, 75°C, 80°C, 85°C, and 90°C, or mixture can be heated to a temperature that is between any of these recited values. In a non-limiting example, the temperature in step B) can be in a range of from at or about 45 to at or about 80 °C, or at or about 60 to at or about 80 °C, for a time period within the range from at or about 15 to at or about 60 minutes, or from at or about 20 to at or about 60 minutes.

The mixture throughout its use in the method has a concentration of the starting pectin-containing biomass material limited in accordance with the subsequent mechanical device used for applying the mechanical energy in step C) of the first and second methods. For a more effective device, the concentration of the starting pectin-containing biomass material can be higher. To simplify, the concentration of the starting pectin-containing biomass material can be based on dry matter of the starting pectin-containing biomass material. The concentration of the starting pectin-containing biomass material can be at or about 1 to at or about 5 weight percent, or can be at or about 2 to at or about 4 weigh percent, can be at or about 3 to at or about 4 weight percent, based on the total weight of the mixture.

The first and second methods for producing the activated pectin-containing biomass compositions described herein further include, as in step C), applying mechanical energy at certain stages of the method. Mechanical energy can be applied to the mixture of step A), which as described above is the starting pectin-containing biomass material in an aqueous solution of alcohol. Mechanical energy can be applied during the activating of step B), which as described above as subjecting the starting pectin-containing biomass material to the activating solution and to heat. Mechanical energy can be applied during both step A) and step B). Applying mechanical energy in the method homogenizes the mixture, changes the physical structure of the starting pectin-containing biomass material, increases the coil overlap parameter, and partly allows the cellulose to become micro fibrillated cellulose. The amount of mechanical energy applied in the method depends on at which step applied, the type of starting pectin-containing biomass material, the amount of the starting pectin-containing biomass material used in the mixture, the pH of the mixture, and the temperature of the activating step. The amount of mechanical energy also can influence the amount of time needed to complete the activating of the starting-pectin containing biomass material to form the activated pectin-containing biomass material.

Devices for applying mechanical energy can be a pump, a refiner, a homogenizer, an extruder, a lobe pump, and/or a centrifugal pump. The mixture can be circulated in a closed-loop system that includes a pressure vessel (able to contain a heated solvent mixture), a reflux vessel, a heat exchanger, such as a shell and tube heat exchanger, and a pump for recirculating the heated mixture back to the vessel, allowing multiple passes through the pump in the system. Any pump that can exert a mechanical energy, such as a bi-axial extensional stress, on the fluid as it passes through the pump or through the system can be used. Examples include rotary lobe pumps (available from, *e.g.*, Viking Pump, Inc., Cedar Falls, IA; Johnson Pump, Rockford, IL; and Wright Flow Technologies, Inc., Cedar Falls, IA); centrifugal pumps, and hydro-transport pumps (available from, *e.g.*, Cornell Pump Company, Clackamas, OR; and Alfa Laval Inc., Richmond. VA). Other devices that can be used singularly or in combination to impart mechanical energy, such as a bi-axial extensional stress, include a plate refiner, a disc refiner, a conical refiner, a hydrapulper, an extruder, a friction grinder mill, a hammer mill, and a ball mill. Steam explosion or pressure relief also can be used to impact mechanical energy. The methods can be designed as continuous without circulating back to the pressure vessel.

The pump can be a rotary lobe pump, alone or in combination with another type of pump. The rotary lobe pump is a positive displacement pump and can have a single lobe, bi-wing, tri-lobe, or multi-lobe configuration. During operation, two rotors mesh together and rotate in opposite directions, forming cavities between the rotors and the housing of the pump. The mixture enters and fills the cavities, moving through the pump between the lobes and the casing. The movement of the lobes of the pump forces the mixture through the outlet port of the discharge side of the pump and the mixture is ejected from the pump. The movement of the mixture through the pump exposes the mixture to mechanical energy, which teases apart the cellulosic fibers at least partially into fibrils. The mechanical energy can include a bi-axial extensional stress. The lobe pump can continuously pump the mixture through the heat exchanger and back to the tank or pressure vessel for a set time. The methods can be designed as continuous without circulating back to the tank or pressure vessel.

This mechanical energy imparted, such as by the action by the pump, which can induce turbulent flow within the pump and within the starting pectin-containing biomass material as it is circulated through the closed-loop system or through the continuous process, opens the structure of the cellulosic component, visually changing the physical structure of the material as it takes on a more "fluffy" or "cotton-like" appearance when examined during the process. Turbulent flow leads to flow reversals and thus extension of the starting pectin-containing biomass material within the mixture. The mechanical energy fibrillates at least a portion of the cellulosic fiber into fibrils, increasing the surface area and thus the efficacy of the activating step.

The application of the mechanical energy can transform the starting pectin-containing biomass material in the mixture to its fibrous structure creating an open network allowing more access of the activating solution to the protopectin so that the protopectin is converted to soluble pectin within the fibrous structure. In one example, substantially all the pectin becomes readily water soluble, even in cold water. The micro fibrillated cellulose can be in particulate form and can have a characterizing length in the range of at or about $1 \times 10^{-6}$ meters to at or about $5000 \times 10^{-6}$ meters, at or about $100 \times 10^{-6}$ meters to at or about $3000 \times 10^{-6}$ meters, at or about $500 \times 10^{-6}$ meters to at or about $3000 \times 10^{-6}$ meters, or at or about $1000 \times 10^{-6}$ meters to at or about $3000 \times 10^{-6}$ meters.

Mechanical energy as used herein is defined either in kilojoules (kJ) per kilogram dry matter (DM) in the mixture or as kilojoules per kilogram of the mixture (i.e. the slurry containing the starting pectin-containing biomass material. Specifying the energy input per kg dry matter is independent of the total weight of the mixture being pre-treated and activated. The amount of mechanical energy applied can be at or about 800 kilojoules or greater per kg dry matter, or in the range of from at or about 800 to at or about 15,000 kJ/kg dry matter. The mechanical energy to which the mixture can be subjected can be at least any one of 800 kJ/kg, 1,000 kJ/kg, 1,200 kJ/kg, 1,400 kJ/kg, 1,600 kJ/kg, 1,800 kJ/kg, 1,900 kJ/kg, 2,000 kJ/kg, 2,200 kJ/kg, 2,400 kJ/kg, 2,600 kJ/kg, 2,800 kJ/kg, 3,000 kJ/kg, 3,200 kJ/kg, 3,400 kJ/kg, 3,600 kJ/kg, 3,800 kJ/kg, 4,000 kJ/kg, 4,200 kJ/kg, 4,400 kJ/kg, 4,600 kJ/kg, 4,800 kJ/kg, 5,000 kJ/kg, 5,200 kJ/kg, 5,400 kJ/kg, 5,600 kJ/kg, 5,800 kJ/kg, 6,000 kJ/kg, 6,200 kJ/kg, 6,400 kJ/kg, 6,800 kJ/kg, 7,000 kJ/kg, 7,200 kJ/kg, 7,400 kJ/kg, 7,600 kJ/kg, 7,800 kJ/kg, 8,000 kJ/kg, 8,200 kJ/kg, 8,400 kJ/kg, 8,600 kJ/kg, 8,800 kJ/kg, 9,000 kJ/kg, 9,200 kJ/kg, 9,400 kJ/kg, 9,600 kJ/kg, 9,800 kJ/kg, 10,000 kJ/kg, 10,200 kJ/kg, 10,400 kJ/kg, 10,600 kJ/kg, 10,800 kJ/kg, 11,000 kJ/kg, 11,200 kJ/kg, 11,400 kJ/kg, 11,600 kJ/kg, 11,800 kJ/kg, 12,000 kJ/kg, 12,200 kJ/kg, 12,400 kJ/kg, 12,600 kJ/kg, 12,800 kJ/kg, 13,000 kJ/kg, 13,200 kJ/kg, 13,400 kJ/kg, 13,600 kJ/kg, 13,800 kJ/kg, 14,000 kJ/kg, 14,200 kJ/kg, 14,400 kJ/kg, 14,600 kJ/kg, 14,800 kJ/kg, or 15,000 kJ/kg, or the mixture can be subjected to a mechanical energy in the range of from at or about **a** to at or about **b,** where **a** is any one of the preceding mechanical energy values and **b** is any one of the preceding mechanical energy values that is > **a,** such as from at or about 800 kJ/kg (or 1,200 kJ/kg, or 1,400 kJ/kg, or 1,900 kJ/kg) to at or about 7,800 kJ/kg, or at or about 800 kJ/kg (or 1,200 kJ/kg, or 1,400 kJ/kg, or 1,900 kJ/kg) to at or about 14,400 kJ/kg, etc. For example, for 1 kg material (dry weight basis) in 30 liters of acidified aqueous alcohol processed through a lobe pump (APV type, CL/1/021/10) with a pump motor that is 2 kW at 50 Hz that operated at 10 Hz (0.4 kW) for a period of 50 minutes (3000 seconds), the energy imparted to the sample was 0.4 kW $\times$ 3000 seconds or 1200 kilojoules (per kg dry matter). Mechanical energy for the mixture can be at or about 36 kilojoules or greater per kilogram of the mixture, at or about 40 kilojoules or greater per kilogram of the mixture, or at or about 60 kilojoules or greater per kilogram of the mixture, and can often range up to at or about 150 kilojoules (or 200 kilojoules, or 400 kilojoules, or 600 kilojoules) per kilogram of the mixture.

The mechanical energy input per kilogram dry matter or per kilogram of the mixture depends on the mechanical device. Energy input may be based on the motor size of the pumps, or similar device used, taking into account the use of frequency inverter, amperes, and voltages. For example, when using a lobe pump having a frequency in the range 10-40 Hz, and an effect in the range 0.4-1.6 kW, circulating the mixture through the lobe pump 20-156 passes, corresponds to the mechanical energy input is in the range 800-8600 kJ. With such a lobe pump, the number of passes through the pump can be 20-50 passes, which corresponds to a mechanical energy input of 800-2400 kJ. This exemplary embodiment is used when the starting pectin-containing biomass material is citrus peel.

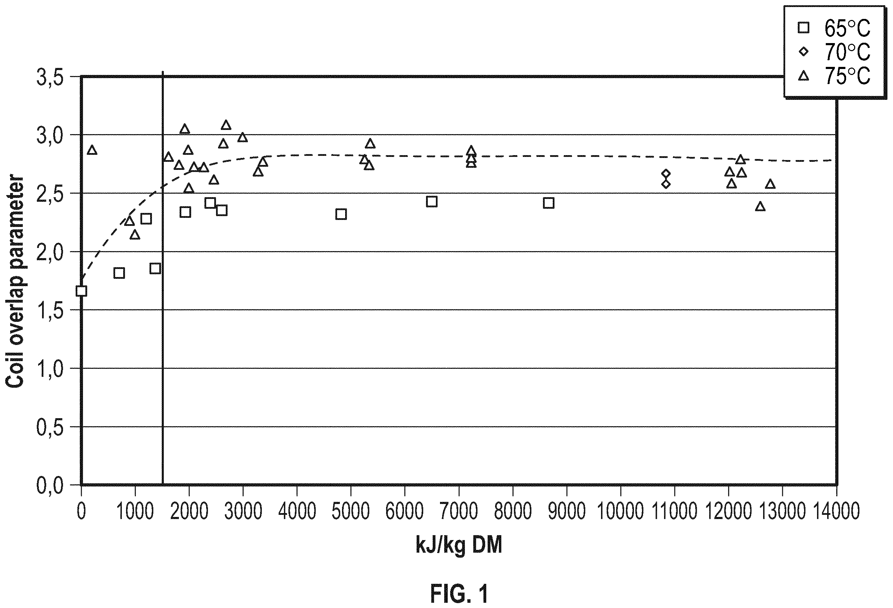

Tables 1-2 and the graph of the values of the coil overlap parameters and the mechanical energy in Figures 1-2 are examples of the effect of the mechanical energy when added to step A) noted below as pre-treatment and/or to step B) noted below as activation. In these examples the following devices were used to add energy: a small lobe pump (2 kW); a big lobe pump (5,5 kW); a lobe pump (2.2 kW); a centrifugal pump (7.5 kW); a Boston Shear Mill (11 kW); an extruder (8 kW); and a refiner (8 kW). The exemplary amounts were 1 kg dry matter (DM) in a 30 kg mixture and about 20 kg dry matter in approximate 360 kg mixture. A dilution of the starting pectin-containing biomass material with alcohol before pre-treatment may be done in order to be able to pump the material. When the starting pectin-containing biomass material is alcohol washed, the pre-treatment can be done without addition of alcohol such as when pumping is not an issue with the type of equipment used. The dilution with alcohol can be in the activation step only. When the starting pectin-containing biomass material is not diluted (e.g. using alcohol washed citrus peel), the pre-treatment may require less energy input.

To calculate the mechanical energy properties in Table 1, the following example calculations can be used:

1) A lobe pump has a 2 kW motor at 50 Hertz but is operating only at 10 Hertz giving an effect of 0.4 kW. The lobe pump is working 30 minutes (1800 sec) which means that the mechanical energy is: 0.4 kW * 1800 sec = 720 kJ. The slurry being recirculated contains 1 kg dry matter (DM) so the specific energy is 720 kJ/kg DM. The total slurry volume is 30 kg. The pump running at 10 Hertz gives a flow of 860 kg/hr, so the total slurry through the pump in 30 minutes is 430 kg. The slurry has then has 430 kg / 30 kg = 14.3 passes.

2) A lobe pump has a 2 kW motor at 50 Hertz and is operating at this frequency. The lobe pump is working 60 minutes (3600 sec) which means that the mechanical energy is: 2 kW * 3600 sec = 7200 kJ. The slurry being recirculated contains 1 kg dry matter (DM) so the specific energy is 7200 kJ/kg DM. The total slurry volume is 30 kg. The pump running at 50 Hertz gives a flow of 4300 kg/hr, so the total slurry through the pump in 60 minutes is 4300 kg. The slurry has then had 4300 kg / 30 kg = 143 passes.

Table 1

| Sample | Dry matter (kg) | Pretreatment device | Total mixture (kg) | Pretreatment energy (kJ) | Pretreatment specific energy (kJ/kg DM) | Pretreatment specific energy mixture (kJ/kg kg mixture) | Activation Device | Total slurry (kg) | Activation energy (kJ) | Activation specific energy DM (kJ/kg DM) | Activation specific energy mixture (kJ/kg mixture) | Total specific energy DM (kJ/kg DM) | Total specific energy mixture (kJ/kg mixture) |
|---|---|---|---|---|---|---|---|---|---|---|---|---|---|
| 1 | 1 | BSM | 30 | 1386 | 1386 | 46.2 | Small lobe | 30 | 1200 | 1200 | 40.0 | 2586 | 86.2 |
| 2 | 1 | BSM | 30 | 1386 | 1386 | 46.2 | None | 30 | 0 | 0 | 0.0 | 1386 | 46.2 |
| 3 | 1 | BSM | 30 | 693 | 693 | 23.1 | Small lobe | 30 | 1200 | 1200 | 40.0 | 1893 | 63.1 |
| 4 | 1 | BSM | 30 | 693 | 693 | 23.1 | None | 30 | 0 | 0 | 0.0 | 693 | 23.1 |
| 5 | 1 | None | 30 | 0 | 0 | 0.0 | Small lobe | 30 | 1200 | 1200 | 40.0 | 1200 | 40.0 |
| 6 | 1 | None | 30 | 0 | 0 | 0.0 | Small lobe | 30 | 2400 | 2400 | 80.0 | 2400 | 80.0 |
| 7 | 1 | None | 30 | 0 | 0 | 0.0 | Small lobe | 30 | 4800 | 4800 | 160.0 | 4800 | 160.0 |
| 8 | 1 | None | 30 | 0 | 0 | 0.0 | None | 30 | 0 | 0 | 0.0 | 0 | 0.0 |
| 9 | 1 | None | 30 | 0 | 0 | 0.0 | Small lobe | 30 | 8640 | 8640 | 288.0 | 8640 | 288.0 |
| 10 | 1 | None | 30 | 0 | 0 | 0.0 | Small lobe | 30 | 6480 | 6480 | 216.0 | 6480 | 216.0 |
| 11 | 1 | None | 30 | 0 | 0 | 0.0 | Small lobe | 30 | 10800 | 10800 | 360.0 | 10800 | 360.0 |
| 12 | 1 | None | 30 | 0 | 0 | 0.0 | Small lobe | 30 | 10800 | 10800 | 360.0 | 10800 | 360.0 |
| 13 | 1 | None | 30 | 0 | 0 | 0.0 | Small lobe | 30 | 1800 | 1800 | 60.0 | 1800 | 60.0 |
| 14 | 1 | None | 30 | 0 | 0 | 0.0 | Small lobe | 30 | 7200 | 7200 | 240.0 | 7200 | 240.0 |
| 15 | 1 | None | 30 | 0 | 0 | 0.0 | Small lobe | 30 | 7200 | 7200 | 240.0 | 7200 | 240.0 |
| 16 | 1 | None | 30 | 0 | 0 | 0.0 | Small lobe | 30 | 7200 | 7200 | 240.0 | 7200 | 240.0 |
| 17 | 20 | Refiner | 360 | 2400 | 120 | 6.7 | Lobe + centrifugal | 360 | 21420 | 1071 | 59.5 | 1191 | 66.2 |
| 18 | 20 | Refiner | 360 | 2400 | 120 | 6.7 | Lobe + centrifugal | 360 | 42840 | 2142 | 119.0 | 2262 | 125.7 |
| 19 | 20 | Refiner | 360 | 9600 | 480 | 26.7 | Lobe + centrifugal | 360 | 32130 | 1606.5 | 89.3 | 2087 | 115.9 |

| Sample | Dry matter (kg) | Pretreatment device | Total mixture (kg) | Pretreatment energy (kJ) | Pretreatment specific energy (kJ/kg DM) | Pretreatment specific energy mixture (kJ/kg mixture) | Activation Device | Total slurry (kg) | Activation energy (kJ) | Activation specific energy DM (kJ/kg DM) | Activation specific energy mixture (kJ/kg mixture) | Total specific energy DM (kJ/kg DM) | Total specific energy mixture (kJ/kg mixture) |
|---|---|---|---|---|---|---|---|---|---|---|---|---|---|
| 20 | 20 | Refiner | 360 | 9600 | 480 | 26.7 | Lobe + centrifugal | 360 | 42840 | 2142 | 119.0 | 2622 | 145.7 |
| 21 | 20 | Refiner | 360 | 16800 | 840 | 46.7 | Lobe + centrifugal | 360 | 21420 | 1071 | 59.5 | 1911 | 106.2 |
| 22 | 20 | Refiner | 360 | 16800 | 840 | 46.7 | Lobe + centrifugal | 360 | 32130 | 1606.5 | 89.3 | 2447 | 135.9 |
| 23 | 20 | Refiner | 360 | 16800 | 840 | 46.7 | Lobe + centrifugal | 360 | 42840 | 2142 | 119.0 | 2982 | 165.7 |
| 24 | 20 | None | 360 | 0 | 0 | 0.0 | Lobe + centrifugal | 360 | 32130 | 1606.5 | 89.3 | 1607 | 89.3 |
| 25 | 20 | None | 360 | 0 | 0 | 0.0 | Lobe + centrifugal | 360 | 53550 | 2677.5 | 148.8 | 2678 | 148.8 |
| 26 | 1 | None | 30 | 0 | 0 | 0.0 | Big lobe | 30 | 990 | 990 | 33.0 | 990 | 33.0 |
| 27 | 1 | None | 30 | 0 | 0 | 0.0 | Big lobe | 30 | 1980 | 1980 | 66.0 | 1980 | 66.0 |
| 28 | 1 | None | 30 | 0 | 0 | 0.0 | Big lobe | 30 | 3366 | 3366 | 112.2 | 3366 | 112.2 |
| 29 | 1 | None | 30 | 0 | 0 | 0.0 | Big lobe | 30 | 5346 | 5346 | 178.2 | 5346 | 178.2 |
| 30 | 1 | None | 30 | 0 | 0 | 0.0 | Big lobe | 30 | 5346 | 5346 | 178.2 | 5346 | 178.2 |
| 31 | 1 | None | 30 | 0 | 0 | 0.0 | Big lobe | 30 | 891 | 891 | 29.7 | 891 | 29.7 |
| 32 | 1 | None | 30 | 0 | 0 | 0.0 | Big lobe | 30 | 1980 | 1980 | 66.0 | 1980 | 66.0 |
| 33 | 1 | None | 30 | 0 | 0 | 0.0 | Big lobe | 30 | 3267 | 3267 | 108.9 | 3267 | 108.9 |
| 34 | 1 | None | 30 | 0 | 0 | 0.0 | Big lobe | 30 | 5247 | 5247 | 174.9 | 5247 | 174.9 |
| 35 | 1 | None | 4.2 | 0 | 0 | 0.0 | Small lobe | 30 | 12000 | 12000 | 400.0 | 12000 | 400.0 |
| 36 | 1 | Extruder | 4.2 | 725 | 725 | 172.6 | Small lobe | 30 | 12000 | 12000 | 400.0 | 12725 | 572.6 |

| Sample | Dry matter (kg) | Pretreatment device | Total mixture (kg) | Pretreatment energy (kJ) | Pretreatment specific energy (kJ/kg DM) | Pretreatment specific energy mixture (kJ/kg mixture) | Activation Device | Total slurry (kg) | Activation energy (kJ) | Activation specific energy DM (kJ/kg DM) | Activation specific energy mixture (kJ/kg mixture) | Total specific energy DM (kJ/kg DM) | Total specific energy mixture (kJ/kg mixture) |
|---|---|---|---|---|---|---|---|---|---|---|---|---|---|
| 37 | 1 | Extruder | 4.2 | 556 | 556 | 132.4 | Small lobe | 30 | 12000 | 12000 | 400.0 | 12556 | 532.4 |
| 38 | 1 | none | 2.5 | 0 | 0 | 0.0 | Small lobe | 30 | 12000 | 12000 | 400.0 | 12000 | 400.0 |
| 39 | 1 | Extruder | 2.5 | 180 | 180 | 72.0 | Small lobe | 30 | 12000 | 12000 | 400.0 | 12180 | 472.0 |
| 40 | 1 | Extruder | 2.5 | 196 | 196 | 78.4 | Small lobe | 30 | 12000 | 12000 | 400.0 | 12196 | 478.4 |
| 41 | 1 | Extruder | 2.5 | 196 | 196 | 78.4 | None | 30 | 0 | 0 | 0.0 | 196 | 78.4 |

Table 2

| Sam-ple | Total specific energy (kJ/kg DM) | Total specific energy (kJ/kg mixture) | Temp (°C) | Time Heating (min) | # of Passes | Nitric Acid 62% (mL/kg) | IV (dL/g) | Recovery (%) | Coil overlap parameter |
|---|---|---|---|---|---|---|---|---|---|
| 1 | 2586 | 86.2 | 65 | 50 | 23 | 100 | 8.4 | 28.2 | 2.4 |
| 2 | 1386 | 46.2 | 65 | 200 | 0 | 100 | 9.6 | 19.5 | 1.9 |
| 3 | 1893 | 63.1 | 65 | 50 | 23 | 100 | 8.2 | 28.6 | 2.3 |
| 4 | 693 | 23.1 | 65 | 200 | 0 | 100 | 10 | 18.3 | 1.8 |
| 5 | 1200 | 40.0 | 65 | 50 | 23 | 100 | 8.9 | 25.8 | 2.3 |
| 6 | 2400 | 80.0 | 65 | 50 | 48 | 100 | 8.2 | 29.6 | 2.4 |
| 7 | 4800 | 160.0 | 65 | 50 | 119 | 100 | 9 | 26 | 2.3 |
| 8 | 0 | 0.0 | 65 | 200 | 0 | 100 | 8.8 | 19.1 | 1.7 |
| 9 | 8640 | 288.0 | 65 | 90 | 215 | 100 | 8 | 30.4 | 2.4 |
| 10 | 6480 | 216.0 | 65 | 90 | 42 | 100 | 8 | 30.4 | 2.4 |
| 11 | 10800 | 360.0 | 70 | 90 | 215 | 100 | 6.7 | 38.8 | 2.6 |
| 12 | 10800 | 360.0 | 70 | 90 | 215 | 100 | 7.2 | 37.2 | 2.7 |
| 13 | 1800 | 60.0 | 75 | 15 | 36 | 150 | 7.3 | 37.8 | 2.8 |
| 14 | 7200 | 240.0 | 75 | 60 | 143 | 150 | 6.9 | 42.0 | 2.9 |
| 15 | 7200 | 240.0 | 75 | 60 | 143 | 150 | 6.2 | 44.8 | 2.8 |
| 16 | 7200 | 240.0 | 75 | 60 | 143 | 150 | 6.5 | 43.4 | 2.8 |
| 17 | 1191 | 66.2 | 75 | 60 | 40 | 240 | 6.7 | 46.0 | 3.1 |
| 18 | 2262 | 125.7 | 75 | 120 | 80 | 240 | 5.8 | 45.6 | 2.6 |
| 19 | 2087 | 115.9 | 75 | 90 | 60 | 240 | 6.4 | 46.6 | 3.0 |
| 20 | 2622 | 145.7 | 75 | 120 | 80 | 240 | 6.0 | 46.9 | 2.8 |
| 21 | 1911 | 106.2 | 75 | 60 | 40 | 330 | 6.7 | 46.1 | 3.1 |
| 22 | 2447 | 135.9 | 75 | 90 | 60 | 330 | 5.9 | 46.5 | 2.7 |
| 23 | 2982 | 165.7 | 75 | 120 | 80 | 330 | 5.8 | 47.1 | 2.7 |
| 24 | 1607 | 89.3 | 75 | 90 | 60 | 240 | 7.9 | 39.6 | 3.1 |
| 25 | 2678 | 148.8 | 75 | 150 | 100 | 240 | 7.5 | 39.9 | 3.0 |
| 26 | 990 | 33.0 | 75 | 5 | 15 | 150 | 7.2 | 29.9 | 2.2 |
| 27 | 1980 | 66.0 | 75 | 10 | 31 | 150 | 7.2 | 35.7 | 2.6 |
| 28 | 3366 | 112.2 | 75 | 17 | 52 | 150 | 7.3 | 38.1 | 2.8 |
| 29 | 5346 | 178.2 | 75 | 27 | 83 | 150 | 7.4 | 39.5 | 2.9 |
| 30 | 5346 | 178.2 | 75 | 27 | 83 | 150 | 7.1 | 38.8 | 2.7 |
| 31 | 891 | 29.7 | 75 | 9 | 14 | 150 | 7.4 | 30.8 | 2.3 |
| 32 | 1980 | 66.0 | 75 | 20 | 31 | 150 | 7.4 | 39.0 | 2.9 |
| 33 | 3267 | 108.9 | 75 | 33 | 50 | 150 | 7.1 | 38.4 | 2.7 |
| 34 | 5247 | 174.9 | 75 | 53 | 81 | 150 | 7.1 | 39.4 | 2.8 |
| 35 | 12000 | 400.0 | 75 | 100 | 239 | 150 | 5.9 | 45.1 | 2.6 |

(continued)

| Sam-ple | Total specific energy (kJ/kg DM) | Total specific energy (kJ/kg mixture) | Temp (°C) | Time Heating (min) | # of Passes | Nitric Acid 62% (mL/kg) | IV (dL/g) | Recovery (%) | Coil overlap parameter |
|---|---|---|---|---|---|---|---|---|---|
| 36 | 12725 | 572.6 | 75 | 100 | 239 | 150 | 5.8 | 45 | 2.6 |
| 37 | 12556 | 532.4 | 75 | 100 | 239 | 150 | 5.3 | 45.7 | 2.4 |
| 38 | 12000 | 400.0 | 75 | 100 | 239 | 150 | 6.1 | 45 | 2.7 |
| 39 | 12180 | 472.0 | 75 | 100 | 239 | 150 | 6.2 | 45.1 | 2.8 |
| 40 | 12196 | 478.4 | 75 | 100 | 239 | 150 | 6.2 | 44.4 | 2.7 |
| 41 | 196 | 78.4 | 75 | 60 | 0 | 150 | 6.6 | 43.4 | 2.9 |

With reference to the data in Tables 1-2 and Figures 1-2, when the coil overlap parameter is plotted against the mechanical energy inputted, the following may be taken from the graphs. If the energy that is added to the starting pectin-containing biomass material, citrus peel in these examples, is 800 kJ/kg DM or greater or 36 kJ/kg of the mixture, then the coil overlap parameter is 2 or greater. With variations in equipment, temperature, pH and point of applying mechanical energy, the coil overlap parameter is affected. The functionality of the activated pectin-containing biomass material increases with increasing coil overlap parameter. Thus the method can produce an activated pectin-containing biomass material with a coil overlap parameter of at or about 2.3 or greater when using mechanical energy of at or about 1200 kJ/kg DM or greater or at or about 40 kJ/kg mixture and a coil overlap parameter of at or about 2.5 or greater when using mechanical energy at or about 1900 kJ/kg DM or at or about 60 kJ/kg mixture.

Turning for example to sample 1 above, a dilution with alcohol was made before pre-treatment. Amount of dry starting pectin-containing biomass material (alcohol washed) = 1 kg (this relates typically to 2.5 kg wet starting pectin containing biomass). Total weight of mixture in pretreatment = 30 kg. Energy input in pre-treatment = 1386 kilojoules (kJ). Energy input during activation = 1200 kJ. Total energy input was energy input in pre-treatment + energy input during activation = 2586 kJ. Total specific energy input (based on dry matter) = (total energy input) / (amount of dry starting pectin containing biomass) = 2586 kJ / 1 kg = 2586 kJ/kg DM. Total specific energy input (based on total weight of slurry) = (total energy input) / (total weight of slurry) = 2586 kJ / 30 kg = 86.2 kJ/kg.

Turning for example to sample 40, a dilution with alcohol was made after pre-treatment. Amount of dry starting pectin containing biomass (alcohol washed) = 1 kg (this relates typically to 2.5 kg wet starting pectin containing biomass). Total weight of mixture = 30 kg. Energy input in pre-treatment = 196 kJ. Energy input during activation = 12000 kJ. Total energy input = energy input in pre-treatment + energy input during activation = 12196 kJ. Total specific energy input (based on dry matter) = (total energy input) / (amount of dry starting pectin containing biomass) = 12196 kJ / 1 kg = 12196 kJ/kg. Total specific energy input (based on total weight of mixture) = (total energy input during pre-treatment) / (total weight of mixture during pre-treatment) + (total energy input during activation) / (total weight of mixture during activation) = 196 kJ / 2.5 kg + 12000 kJ / 30 kg = 478 kJ/kg.

The method for producing the activated pectin-containing biomass compositions described herein includes separating the activated pectin-containing biomass composition from the mixture, referred to as step D). After activating and applying mechanical energy, the now activated pectin-containing biomass composition and activating solution is separated into a liquid phase comprising the activating solution and a wet cake phase comprising the activated pectin-containing biomass composition. The separation may be by draining, pressing, decanting, centrifuging, using membrane filtration, or any combination thereof. For example, the wet cake can be drained by depositing on a perforated belt or screen to allow the fluid portion of the mixture to drain away. Excess fluid in the wet cake can be removed by application of pressure, such as by use of a press, such as a hydraulic press, a pneumatic press, a screw press, a Vincent press, or a cone press, or a centrifuge, or any combination thereof, forming a dewatered activated pectin-containing biomass composition.

The activated pectin-containing biomass material composition comprises about 40 weight percent dry matter, and the liquid is composed primarily of alcohol and acid. In order to remove the residual acid, the separating step D) can include washing the activated pectin-containing biomass composition in an aqueous solution of an alcohol containing at or about 35 to at or about 90 weight percent alcohol or at or about 40 to at or about 90 weight percent alcohol until the pH of the washing liquid is increased to at or about 2.5 to at or about 9, or to at or about 3.5 to at or about 4.5. The alcohol wash also can include an alkalizing agent that can neutralize the acid. Non-limiting examples of alcohols that may be used to wash the drained activated pectin-containing composition include isopropyl alcohol, ethanol, methanol, and combinations thereof. Exemplary alkalizing agents include an alkali metal salt of a carbonate, bicarbonate, or hydroxide, such as potassium carbonate, potassium hydroxide, sodium bicarbonate or sodium hydroxide, or ammonia. This washing may be done as a batch process or as a counter current process. The amount of alcohol present in the alcohol wash can be increased in subsequent washes. For example, a first alcohol wash can include an alcohol content of 45 wt%; a second alcohol wash can include an alcohol content of 55 wt%; and a third alcohol wash can include an alcohol content of 70 wt% or more. Using an alcohol wash with an alcohol content of 70 wt% or more as a final washing step can efficiently dewater the activated pectin-containing biomass composition prior to drying. This can reduce the time and temperature required to achieve a dried product with a targeted moisture content. The presence of the alcohol also can help to minimize or prevent hydrogen-bond formation between fibrils of the cellulosic fibers of the activated pectin-containing biomass composition, thereby minimizing or preventing hornification of the cellulosic fibers upon drying. The process can include a series of successive alcohol washes having higher alcohol concentrations to dehydrate the activated fiber.

After the separating step, the activated pectin-containing biomass composition, may then undergo downstream treatments or processing, in-line or off-line. In the case of using the activated pectin-containing biomass composition for extraction, the activated pectin-containing biomass composition can be in the form of an aqueous suspension.

The activated pectin-containing biomass composition can be dried such that the activated pectin-containing biomass composition is in a dry form. The temperature during drying must be controlled such that the temperature of the activated pectin-containing biomass composition does not exceed about 75-80 degrees Celsius in order not to impact the quality of the activated pectin-containing biomass composition. Exemplary non-limiting drying methods include using mechanical separation techniques to express water from the fibers, solvent exchange to displace residual water, such as by washing with an organic solvent solution, freeze drying, vacuum drying, spray drying, drum drying, drying with heat, drying with an air flow, flash drying, fluidized bed drying, exposure to radiant heat and combinations thereof. A drying agent can be included in the drying process to further inhibit cellulosic to cellulosic interactions. Non-limiting examples of drying agents include glucose syrup, corn syrup, sucrose, dextrins, maltodextrins, and combinations thereof.

The activated pectin-containing biomass composition after drying may be further comminuted, such that the activated pectin-containing biomass composition is in a dry particulate form, e.g. powder. Non-limiting examples of suitable comminuting methods include grinding, milling, and the like. The comminuting can further reduce the particle size of the dried activated pectin-containing biomass composition to provide a product having improved flowability, dispersability, hydration and/or handling properties. The particles can be comminuted to a size of 300 μm or less. The particles can be comminuted to a size of 250 μm or less. The particles can be comminuted to a size of 200 μm or less. The particles can be comminuted to a size of 150 μm or less. The particles can be comminuted to a size of 125 μm or less. The particles can be comminuted to a size of 100 μm or less. The particles can be comminuted to a size of 75 μm or less. For example, the particles can be comminuted to a desired size by milling. Any type of mill can be used. For example, any one or a combination of a hammer mill, a pin mill, a pinned disc mill, a beater mill, a cross beater mill, an air micronizer, a jet mill, a classifier mill, a ball mill, a rotary impact mill, and a turbo mill can be a used.

The activated pectin-containing biomass composition may be a food or a food ingredient, which has the advantage of being accepted by the food industry and critical consumers. Additionally or alternatively, the activated pectin-containing biomass composition can be a food additive. Also encompassed by this invention are products, such as food products, that comprise any of the activated pectin-containing biomass compositions disclosed herein and/or activated pectin-containing biomass compositions prepared by any of the methods disclosed herein.

Referring now to the third method for producing an activated pectin-containing biomass composition, the features of step a) of the third method can be the same as those described herein for step A) of the first and second methods. Likewise, the features of step c) of the third method (using sulfuric acid and/or phosphoric acid) can be the same as those described herein for step B) of the second method (using sulfuric acid).

After step a) of the third method and before step c) is a step of b) treating the mixture of step a) to reduce the calcium content of the starting pectin-containing biomass material to less than or equal to about 6 mg per g dry matter of the starting pectin-containing biomass material to form a calcium-reduced pectin-containing biomass material. In a further aspect, the calcium content can be reduced to less than or equal to about 5 mg/g; alternatively, less than or equal to about 4 mg/g; alternatively, less than or equal to about 3 mg/g; or alternatively, less than or equal to about 2 mg/g. Any suitable treatment can be used to reduce the calcium content. For example, an acid prewashing step can be used, with any suitable acid that forms a soluble salt with calcium and that can reduce the pH to the range of from at or about 0.5 to at or about 3 (or from about 1 to about 3, from about 1 to about 2.2, or from about 1 to about 2).

Thus, in one aspect, treating the mixture in step b) can comprise prewashing the mixture with nitric acid at a pH of the acidified mixture within the range from at or about 0.5 to at or about 3 (or from about 1 to about 3, from about 1 to about 2.2, or from about 1 to about 2.0), and removing at least a portion of the nitric acid and calcium from the mixture prior to step c). In another aspect, treating the mixture in step b) can comprise prewashing the mixture with citric acid at a pH of the acidified mixture within the range from at or about 0.5 to at or about 3 (or from about 1 to about 3, from about 1 to about 2.2, or from about 1 to about 2.0), and removing at least a portion of the citric acid and calcium from the mixture prior to step c). In yet another aspect, treating the mixture in step b) can comprise prewashing the mixture with hydrochloric acid at a pH of the acidified mixture within the range from at or about 0.5 to at or about 3 (or from about 1 to about 3, or from about 1 to about 2.2), and removing at least a portion of the hydrochloric acid and calcium from the mixture prior to step c). In still another aspect, treating the mixture in step b) can comprise prewashing the mixture with phosphoric acid at a pH of the acidified mixture within the range from at or about 0.5 to at or about 3 (or from about 1 to about 3, from about 1 to about 2.2, or from about 1.0 to about 2.0), and removing at least a portion of the phosphoric acid and calcium from the mixture prior to step c). The pH of the acidified mixture of step b) can be greater than the pH of activating solution of step c).

The prewashing in step b) can be conducted at any suitable temperature. In one aspect, for instance, the prewashing temperature can be at or greater than about 20 °C to at or about 80 °C, such as from about 45 °C to about 80 °C. In another aspect, the acidified mixture is not heated, and step b) can conducted at ambient conditions, which often can fall in the 20-30 °C range. This prewashing step can be conducted for any suitable time period, such as from about 15 to about 60 minutes.

Prior to activating in step c), at least a portion of the calcium and at least a portion of the nitric acid, hydrochloric acid, citric acid, phosphoric acid, or combinations thereof, can be removed from the mixture. Any suitable technique or methodology can be used, non-limiting examples of which can include washing, draining, centrifuging, sieving, pressing, and the like. Typically, at least about 80 wt. % of the nitric acid, hydrochloric acid, citric acid, phosphoric acid, or any combination thereof, are removed prior to step c).

In step d) of the third method, mechanical energy can be applied (i) to the mixture of step a), (ii) during step b), (iii) during the activating of step c), or (iv) any combination thereof. The amount and source of mechanical energy in step d) can be the same as that described herein for step C) of the first and second methods. Likewise, the features of step e) of the third method can be the same as those described herein for step D) of the first and second methods.

For the third method, the alcohol present in the mixture can be at or greater than about 35 weight percent alcohol or at or greater than about 40 weight percent (and often up to 60 weight percent, or up to 70 weight percent, or more), based on the total weight of the mixture.

Optionally, any of the methods for producing an activated pectin-containing biomass composition disclosed herein can further comprise a step of post-treating the activated pectin-containing biomass composition to bind calcium in the activated composition and/or to reduce the calcium content of the activated composition, and to increase the Quick viscosity of the activated composition. As described herein for the prewashing step, a suitable acid can be used similarly to reduce the calcium content in a post-treating step. Additionally or alternatively, a suitable material, such as hexametaphosphate (HMP), can be added to the composition to bind calcium. The result of the post-treating step, whether via calcium reduction or calcium binding, is to increase the Quick viscosity.

Also encompassed herein are uses of an acid to reduce the calcium content of the starting pectin-containing biomass material in accordance with any of the methods for producing an activated pectin-containing biomass composition disclosed herein. Suitable acids can include, but are not limited to, nitric acid, hydrochloric acid, citric acid, phosphoric acid, and the like, as well as any combination thereof.

Also encompassed herein is a fourth method for producing an activated pectin-containing biomass composition, in which the method comprises A) mixing a starting pectin-containing biomass material comprising an insoluble fiber component and an insoluble protopectin component with an aqueous solution of an alcohol to form a mixture; B) activating the starting pectin-containing biomass material to form an activated pectin-containing biomass composition comprising the insoluble fiber component and a soluble pectin component by subjecting the starting pectin-containing biomass material to (i) an activating solution formed by adding an acid (e.g., nitric acid, hydrochloric acid, sulfuric acid, citric acid, phosphoric acid, or any combination thereof) to the mixture to adjust the pH of the mixture within the range from at or about 0.5 to at or about 2.5, and (ii) heat to a temperature greater than at or about 40 °C; C) applying mechanical energy either (i) to the mixture of step A), (ii) during the activating of step B), or (iii) to the mixture of step A) and during the activating of step B); and D) separating the activated pectin-containing biomass composition from the mixture. In this fourth method, the starting pectin-containing biomass material can comprise citrus fruit vesicles, such as orange vesicles, lemon vesicles, lime vesicles, grapefruit vesicles, tangerine vesicles, and the like, or any combination thereof. Further, while not required, during the fourth method the alcohol present in the mixture can be at or greater than about 35 weight percent alcohol or at or greater than about 40 weight percent based on the total weight of the mixture.

The activated pectin-containing biomass composition produced in the fourth method often can have a very high water binding capacity, typically ranging from at or about 14 g/g to at or about 70 g/g, or from at or about 40 g/g to at or about 70 g/g. The activated pectin-containing biomass composition produced in the fourth method can have a very high Quick viscosity (Qvisc), often ranging from about 50 mPa·s to about 400 mPa·s, from about 120 mPa·s to about 300 mPa·s, or from about 150 mPa·s to about 300 mPa·s.

Several aspects and embodiments of pectin-containing biomass compositions and methods for manufacture thereof are described herein. Features of the subject matter are described such that, within particular aspects or embodiments, a combination of different features can be envisioned. For each and every aspect and/or embodiment and or feature disclosed herein, all combinations that do not detrimentally affect the designs, compositions, processes, or methods described herein are contemplated and can be interchanged, with or without explicit description of the particular combination. Accordingly, unless explicitly recited otherwise, any aspect, embodiment or feature disclosed herein can be combined to describe inventive designs, compositions, processes, or methods consistent with the present disclosure.

Several types of ranges are disclosed in the present invention. When a range of any type is disclosed or claimed, the intent is to disclose or claim individually each possible number that such a range could reasonably encompass, including end points of the range as well as any sub-ranges and combinations of sub-ranges encompassed therein.

Values or ranges may be expressed herein as "about", from "about" one particular value, and/or to "about" another particular value. When such values or ranges are expressed, other aspects disclosed include the specific value recited, from the one particular value, and/or to the other particular value. Similarly, when values are expressed as approximations, by use of the antecedent "about," it will be understood that the particular value forms another aspect. It will be further understood that there are a number of values disclosed therein, and that each value is also herein disclosed as "about" that particular value in addition to the value itself. In aspects, "about" can be used to mean, for example, within 10% of the recited value, within 5% of the recited value, or within 2% of the recited value.

Concentrations and percent are in weight percent unless the context indicates otherwise.

While compositions and methods are described herein in terms of "comprising" various components or steps, the compositions and methods can also "consist essentially of" or "consist of" the various components or steps, unless stated otherwise.

The terms "a," "an," and "the" are intended to include plural alternatives, e.g., at least one, unless otherwise specified.

For the purposes of describing and defining the present teachings, it is noted that the term "substantially" is utilized herein to represent the inherent degree of uncertainty that may be attributed to any quantitative comparison, value, measurement, or other representation. The term "substantially" is also utilized herein to represent the degree by which a quantitative representation may vary from a stated reference without resulting in a change in the basic function of the subject matter at issue.

*Examples*

The activated pectin-containing biomass compositions and methods may be further understood with the following non-limiting examples. These are merely examples for different starting materials and mechanical energy added for the described method for producing an activated pectin-containing biomass composition and the product comprising such an activated pectin-containing biomass composition

The following protocols were used to analyze the degree of esterification (DE), degree of galacturonic acid (GA), an apparent viscosity (mPa·s), intrinsic viscosity (dL/g), residual sugar content (%), water binding (g/g), SAG, and percent recovery (%).

*Protocol 1: Determination of Degree of Esterification and Degree of Galacturonic Acid*

The degree of esterification (DE) and degree of galacutonic acid (GA) were measured using a modification of the method set forth in FAO JECFA Monographs 4 (2007). 100 mL of the acid alcohol (100 mL 50-60% isopropanol+5 mL HCl fuming 37%) was added to 2.00 g of ground peel while stirring with a magnetic stirrer for 10 min. The mixture was filtered or passed through a Büchner funnel with filter paper and the beaker was rinsed with 6 × 15 mL acid alcohol and also filtered or passed through the Büchner funnel with filter paper. The filtrate was then washed first with approximately 1000 mL 50-60% isopropanol and thereafter with approximately 2 × 50 mL 100% isopropanol. The sample then was dried for approximately 2.5 hours at 105 °C.

Samples weighing approximately 0.40 g were measured for duplicate determination (deviation between duplicate determinations must not exceed 1.5% absolute, otherwise the test was repeated). The samples were first moistened with approximately 2 mL 100% isopropanol. Approximately 50 mL carbon dioxide-free water then was added to the moistened samples while stirring with a magnetic stirrer. The samples were then evaluated by titration, either by means of an indicator or by using a pH meter/autoburette.

Titration Using Indicator. 5 drops of phenolphtalein indicator was added to the sample and it was titrated with 0.1 N NaOH until a change of color was observed (record it as $V_1$ titer). 20.0 mL 0.5 N NaOH was added while stirring and covered with foil for exactly 15 min. 20.0 mL 0.5 N HCl was added while stirring until the color disappeared. 3 drops of phenolphtalein indicator then was added and it was titrated with 0.1 N NaOH until a change of color was observed (record it as $V_2$ titer). In order to compensate for possible inaccuracies of balancing the two portions of 20 mL of 0.5 N NaOH and HCl respectively, a so-called "blind measurement" was performed (i.e., 100 mL of deionized water was treated in the same way as the sample solution, including the titrations). The last titration result was then recorded as $B_1$ titer. The degree of esterification and degree of galacturonic acid were then characterized by the following calculations.

$$\text{(i)}\quad V_t = V_1 + (V_2 - B_1)$$

$$\text{(ii)}\quad \% \text{ DE (Degree of esterification)} = [(V_2 - B_1)/V_t]*100$$

$$\text{(iii)}\quad \% \text{ GA (Degree of galacturonic acid)} = \frac{[194.1*V_t*N*100]}{\text{weight of washed and dried sample (mg)}}$$

wherein N = corrected normality for 0.1 N NaOH used for titration.

*Protocol 2: Determination of Viscosity (VIS)*

A 2% solution of pectin is made up at 25 °C in a medium containing sodium hexametaphosphate. Viscosity is determined with a Brookfield Viscometer type LVT or LVF after adjustment of pH to 4.0.
The apparatus included the following:

1. Analytical balance
2. Beakers; 400 mL and 2000 mL
3. Magnetic stirrer and Teflon-coated stir bars
4. pH-meter with suitable combination electrode
5. Cylinder glass, diameter 50 ± 1 mm
6. Brookfield Viscometer type LVT or LVF
7. Thermometer, 0 - 110 °C
8. Volumetric flasks; 250 mL and 1000 mL
9. Serological (or measuring pipette); 10 mL

The chemicals used were sodium hexametaphosphate (food grade), sodium hydrogen carbonate (NaHCO3) p.a., and 100% isopropanol (C3H8O).
One reagent was sodium hexametaphosphate solution prepared as follows: (i) disperse 11.11 g in 950 mL deionized water in a 2000 mL beaker and stir for 15 minutes; (ii) transfer the solution quantitatively to a 1000 mL volumetric flask, filling to 1000 mL with deionized water; (iii) stir for 15 minutes. A new solution should be prepared if sodium hexametaphosphate is not completely dissolved. The second reagent was sodium bicarbonate solution prepared as follows: (i) dissolve 84.01 g in deionized water, and (ii) fill up to 1000 mL with deionized water.
The procedure was as follows:

1. Weigh 4.00 g of sample and transfer to a tared 400 mL tared beaker containing a magnetic stir bar.
2. Using a serological pipette, add 10.0 mL isopropanol to wet the pectin. Place the beaker on the magnetic stirrer.
3. Add 180 mL sodium hexametaphosphate solution to the pectin dispersion while stirring. Continue stirring for 1 hour at approximately 700 rpm.
4. Place the pH-electrode in the pectin solution. Adjust pH to 3.95 - 4.05 by drop wise addition of sodium bicarbonate solution.
5. Adjust the net weight of the pectin solution to 200.0 g by adding deionized water.
6. Transfer the pectin solution to the cylinder glass. Adjust the temperature to 25 °C by placement of the cylinder glass with solution in a suitable cooling or heating bath.
7. Measure apparent viscosity on a Brookfield Viscometer type LVT or LVF using spindle No. 3, at 60 rpm. After 60 seconds of rotation, the reading is taken and with an accuracy of 0.5 on the scale.

*Protocol 3: Determination of intrinsic Viscosity and Recovery*

Approximately 40 mg of sample was weighed and dispersed in 100 μL ethanol. 40 mL of effluent was added and the mixture was stirred using a magnetic stirrer in a 75 ± 2 °C block heater for 30 minutes.
Effluent preparation for 10 liter effluent for FIPA (Safety: 0.3 M Lithium acetate buffer) was as follows:

1. Pour approx. 3 L Milli-Q water into a 5000-mL graduated beaker.
2. Add a magnetic stir bar and place on a magnetic stirrer to produce a suitable vortex during all additions.
3. Weigh 125.6 g lithium hydroxide monohydrate into a weighing boat and transfer quantitatively to the graduated beaker.

4. Weigh 0.20 g sodium azide into a weighing boat and transfer quantitatively to the graduated beaker.

5. Weigh 360.4 g glacial acetic acid into a 500-mL beaker and transfer quantitatively to the graduated beaker.

6. When all three chemicals are dissolved, add Milli-Q water to 5000 mL and maintain stirring for 5 min.

7. Pour the content into the pressure container.

8. Rinse the graduated beaker with a total volume of 5000 mL Milli-Q water that is transferred to the pressure container, thus producing a total of 10 L effluent.

9. The liquid is filtered using a Pressure filtration unit with Sartopore 2 filter from Sartorius (0.45 + 0.2 $\mu$m).

10. After preparation, check pH of the buffer, which must be 4.6 $\pm$ 0.1.

The sample was transferred to a 5 °C water bath for 5 minutes to cool to room temperature and since the sample contains non-soluble material, it must be manually dissolved and filtrated (0.45 $\mu$m filter) prior to being transferred to an auto sampler vial. The intrinsic viscosity of the samples was then determined using size exclusion chromatography (SEC). The molecules were separated according to their size by gel permeation chromatography with the effluent from the chromatography column passing four detectors (Refractive Index Detector, Right Angle Laser Light Scattering Detector, Low Angle Laser Light Scattering Detector, and a Viscosity Detector). Viscotek software converted the detector signals from the viscosity detector and refractive index detector to intrinsic viscosity.

A Viscotek TDA 302 FIPA instrument mounted with Viscotek pump VE 1122 Solvent delivery system was used along with Thermo Separation Products Auto sampler AS 3000 with a sample preparation module. Columns included Thermo BioBasis SEC60 (150$\times$7.8 mm) that were connected to a computer with OmniSEC software for data collection and calculations. The run time at the auto sampler was set at 10 minutes and a 25 $\mu$L full loop injection was used. The Viscotek TDS 302 FIPA instrument automatically measures the concentration of soluble pectin in the sample, thus, providing the percent recovery of pectin.

*Protocol 4: Determination of Residual Sugar Content*

10 g of a sample was measured in a 600 mL glass beaker. 200 mL 50% isopropanol was added to the sample and stirred for four hours on a magnet stirrer at room temperature. The mixture was transferred to a vacuum-drive Büchner funnel with filter paper and the beaker was rinsed with 250 mL 50% isopropanol to ensure transfer and wash of sample through the Büchner funnel with filter paper. The sample then was dried overnight (minimum of 12 hours) at 65-70 °C in a drying cabinet. The weight of the dried sample was then determined and the residual sugar was calculated:

$$\text{Residual Sugar} = \frac{[(\text{weight of dry sample} - \text{weight of dry, washed sample}) * 100]}{\text{weight of dry sample}}$$

*Protocol 5: Determination of Water Binding Capacity*

Water binding capacity was measured by a modified version of the AAC 56-30.01 method described in Kael Eggie's *Development of an extruded flax-based feed ingredient* (2010). 1.0 g of material was added to a 50 mL centrifuge tube and weighed. Deionized water was added to the centrifuge tube in small, unmeasured increments and stirred after each addition until the mixture was thoroughly wetted. The tube and its contents were vortexed and then centrifuged at 3000 rpm for 10 minutes at room temperature. The supernatant was discarded and, in cases where supernatant did not appear, more water was added and centrifugation was repeated. The final mass of the tube and container was recorded and the water binding capacity (WBC) was calculated by the following formula:

$$\text{Water Binding Capacity} = \frac{(\text{tube mass} + \text{sediment mass}) - (\text{tube mass} + \text{sample mass})}{\text{sample mass}}$$

*Protocol 6: Determination of SAG*

This method is identical to method 5 - 54 of the IFT committee on pectin standardization, apart from the fact that it is modified to use of a mechanic stirrer instead of a potato masher.

The apparatus included the following:

1. Analytical balance

2. Laboratory scale (max. load 3 - 5 kg, accuracy 0.2 g)
3. Stainless steel saucepan, 1.5 1, 15 cm diameter
4. Electric hotplate, 15 cm diameter, 1500 W
5. Stirrer motor, adjustable speed, 500 - 1000 rpm
6. Stirrer shaft (HETO, article No. 000240, drawing No. 0004259)
7. Beakers (1000 ml and 150 ml)
8. Spatula
9. Stop watch
10. Thermometer, 100 °C
11. pH-meter
12. SAG-glasses and tape
13. Ridgelimeter
14. Wire cheese slicer
15. Refractometer
16. Incubator

The chemicals used were sugar, tartaric acid (488 g per liter solution), and deionized water.

The preparation of jelly was as follows:

1. Weigh into 1000 ml beaker 650 - (650 / x) g sugar, where x = assumed firmness of sample.

2. Transfer 20 - 30 g of the weighed sugar into a dry 150 ml beaker and add the weighed sample (the weight of the sample to use in a jelly is expressed as: 650 g/assumed grade).

3. Mix the sample and sugar thoroughly in the beaker by stirring with spatula.

4. Pour 410 ml deionized/distilled water into the 1500 ml tared, stainless steel saucepan and place stirrer shaft in it. Pour the sample/sugar mixture into water - all at once - while stirring at 1000 rpm. It is important as quickly as possible to submerge the sample/sugar solution in the water and transfer any traces of the sample/sugar in the small beaker to the saucepan.

5. Continue stirring for two minutes.

6. After 2 minutes, place saucepan on preheated electric hotplate, and stir at 500 rpm.

7. When contents reach a full rolling boil, add remaining sugar and continue heating and stirring until sugar is dissolved and until net weight of the jelly batch is 1015 g. The electric hotplate should be set so that the entire heating time for the jelly is 5 - 8 minutes (full load, 1500 W).

8. After weighing the 1015 g batch on the laboratory scale, leave it undisturbed on the table for one minute. Then tip the saucepan, so that the contents are just about to overflow, and quickly skim off any foam. Place thermometer in the batch and continue stirring gently until the temperature reaches exactly 95 °C.

9. Quickly pour the batch into two previously prepared SAG glasses each containing 1.75 - 2.25 ml of tartaric acid solution and equipped with adhesive tape allowing filling to approx. 1 cm above the brims.

10. After 15 minutes, cover the glasses with lids, and when the temperature reaches 30 - 35 °C, place the glasses in an incubator at 25 $\pm$ 3 °C for 20 - 24 hours.

The properties of the jelly was measured as follows:

1. After 20 - 24 hours' storage of the jellies, remove lids from glasses and remove tape. Using a wire cheese slicer, the top layer was cut off and discarded.

2. Then carefully turn the jelly out of the glass to an inverted position on a square glass plate furnished with Ridgelimeter.

3. Start stop watch once the jelly is on the glass plate. If the jelly leaned slightly to one side this was corrected by gently tilting the glass plate in the other direction.

4. Place plate and jelly carefully on the base of the Ridgelimeter so that the jelly is centered under the micrometer screw, which should then be screwed down near to the surface of the jelly.

5. Two minutes after the stop watch was started, bring the point of the micrometer screw into contact with the jelly surface and record the Ridgelimeter reading to the nearest 0.1.

6. Measure pH, which must be between 2.2 and 2.4. Otherwise, the sample must be retested.

The jelly grade of the sample is calculated as follows:

1. Using the Ridgelimeter calibration table, convert the Ridgelimeter reading to a Factor 1 (see fig. 1).

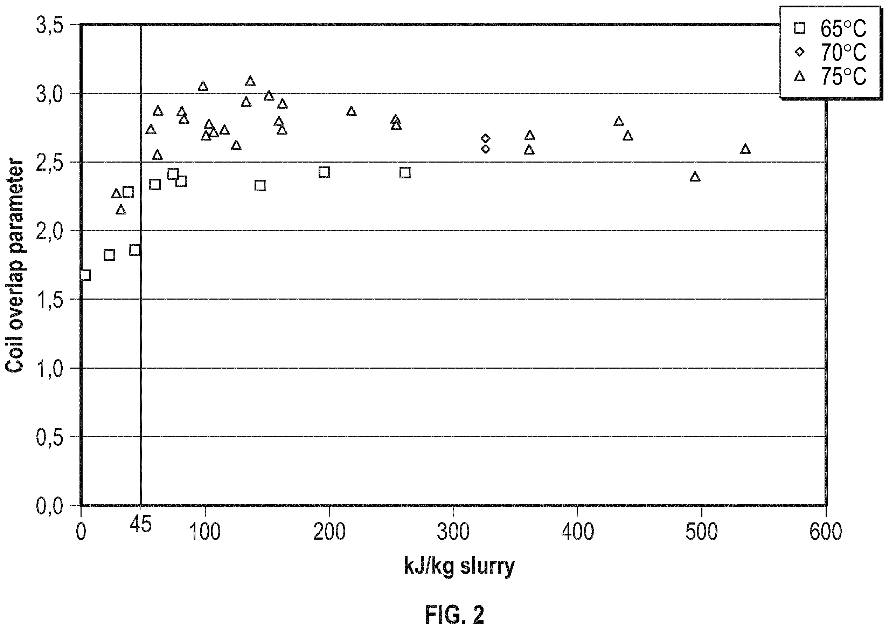

2. Using the soluble solids correcting table, the soluble solids measured is converted into a Factor 2 (see fig. 2).

3. When multiplying the assumed grade of the test by the correction factors, the true grade is obtained using the following formula:

$$\text{Assumed grade x Factor 1 x Factor 2} = \text{true grade}$$

Table 3

| Ridgelimeter reading percent SAG | Factor 1 |
|---|---|
| 19.0 | 1.200 |
| 19.1 | 1.195 |
| 19.2 | 1.190 |
| 19.3 | 1.186 |
| 19.4 | 1.182 |
| 19.5 | 1.177 |
| 19.6 | 1.173 |
| 19.7 | 1.168 |
| 19.8 | 1.163 |
| 19.9 | 1.158 |
| 20.0 | 1.155 |
| 20.1 | 1.150 |
| 20.2 | 1.146 |
| 20.3 | 1.142 |
| 20.4 | 1.137 |
| 20.5 | 1.133 |
| 20.6 | 1.128 |
| 20.7 | 1.124 |
| 20.8 | 1.120 |
| 20.9 | 1.115 |
| 21.0 | 1.110 |
| 21.1 | 1.107 |
| 21.2 | 1.102 |
| 21.3 | 1.097 |
| 21.4 | 1.093 |
| 21.5 | 1.088 |
| 21.6 | 1.084 |
| 21.7 | 1.080 |
| 21.8 | 1.076 |
| 21.9 | 1.072 |
| 22.0 | 1.067 |
| 22.1 | 1.062 |
| 22.2 | 1.057 |
| 22.3 | 1.054 |
| 22.4 | 1.048 |
| 22.5 | 1.044 |
| 22.6 | 1.040 |
| 22.7 | 1.035 |
| 22.8 | 1.031 |

(continued)

| Ridgelimeter reading percent SAG | Factor 1 |
|---|---|
| 22.9 | 1.027 |
| 23.0 | 1.022 |
| 23.1 | 1.018 |
| 23.2 | 1.013 |
| 23.3 | 1.009 |
| 23.4 | 1.005 |
| 23.5 | 1.000 |
| 23.6 | 0.997 |
| 23.7 | 0.992 |
| 23.8 | 0.987 |
| 23.9 | 0.983 |
| 24.0 | 0.978 |
| 24.1 | 0.974 |
| 24.2 | 0.969 |
| 24.3 | 0.965 |
| 24.4 | 0.960 |
| 24.5 | 0.957 |
| 24.6 | 0.953 |
| 24.7 | 0.948 |
| 24.8 | 0.944 |
| 24.9 | 0.940 |
| 25.0 | 0.936 |
| 25.1 | 0.933 |
| 25.2 | 0.928 |
| 25.3 | 0.925 |
| 25.4 | 0.921 |
| 25.5 | 0.917 |
| 25.6 | 0.913 |
| 25.7 | 0.910 |
| 25.8 | 0.906 |
| 25.9 | 0.902 |
| 26.0 | 0.898 |
| 26.1 | 0.895 |
| 26.2 | 0.892 |
| 26.3 | 0.888 |
| 26.4 | 0.885 |
| 26.5 | 0.881 |
| 26.6 | 0.878 |
| 26.7 | 0.875 |
| 26.8 | 0.872 |
| 26.9 | 0.868 |
| 27.0 | 0.864 |
| 27.1 | 0.862 |
| 27.2 | 0.859 |
| 27.3 | 0.856 |
| 27.4 | 0.853 |

(continued)

| Ridgelimeter reading percent SAG | Factor 1 |
|---|---|
| 27.5 | 0.850 |
| 27.6 | 0.847 |
| 27.7 | 0.844 |
| 27.8 | 0.842 |
| 27.9 | 0.838 |

Table 4

Correlation Values Calculated for "Exchanged" SAG Analysis

| Percent SS | Correction Factor 2 |
|---|---|
| 64.0 | 1.034 |
| 64.1 | 1.031 |
| 64.2 | 1.028 |
| 64.3 | 1.024 |
| 64.4 | 1.021 |
| 64.5 | 1.018 |
| 64.6 | 1.015 |
| 64.7 | 1.012 |
| 64.8 | 1.008 |
| 64.9 | 1.004 |
| 65.0 | 1.000 |
| 65.1 | 0.997 |
| 65.2 | 0.993 |
| 65.3 | 0.990 |
| 65.4 | 0.987 |
| 65.5 | 0.984 |
| 65.6 | 0.980 |
| 65.7 | 0.975 |
| 65.8 | 0.970 |
| 65.9 | 0.967 |
| 66.0 | 0.964 |
| 66.1 | 0.960 |
| 66.2 | 0.957 |

*Example 1*

Fresh orange peel was washed in alcohol using the methods described in U.S. Patent No. 8,323,513 and then pressed by hand, followed by a second consecutive wash/press to form alcohol washed starting pectin-containing biomass material. The dry alcohol washed starting pectin-containing biomass material was then divided into four samples-Samples 1, 2, 3, and 4.

Sample 1 (activated/no mechanical energy): 2,500 grams (dry matter) of alcohol washed starting pectin-containing biomass material was activated by contacting the material with alcohol and acid at 60 °C for 1 hour without being subjected to mechanical energy. The amount of acid that was used was selected to correspond to the amount of acid used in a dry peel extraction (0.1 mL acid/gram peel): 2500 gram dry peel, 250 mL 62% nitric acid; 20 L 60% isopropyl alcohol. After conventionally activating-i.e., without mechanical energy-the sample was cooled to 25 °C and was drained. The drained sample was then washed with 100 L 60% isopropyl alcohol, and then dried in a heat cabinet at 65 °C for 10 hours. The dried sample was then milled to a particle size of 250 microns.

Sample 2 (activated/mechanical energy): 1,000 grams (dry matter) of alcohol washed starting pectin-containing biomass material was activated by contacting the material with alcohol and acid at 70 °C for 1 hour under mechanical energy of 10,800 kilojoules. The amount of acid that was used was selected to correspond to the amount of acid used in a dry peel extraction (0.1 mL acid/gram peel): 1000 gram dry peel, 100 mL 62% nitric acid; 30 L 60% isopropyl alcohol.

The mechanical energy was induced by constant recirculation pumping of the sample mixture (material, alcohol, and acid)-more particularly, the sample mixture was continuously recirculated at 5,200 L/hr from a vessel (KOFA ApS, volume 25 L) through a tube heat exchanger (3 meters in length; 6" outer diameter; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 3.5 using 10% sodium carbonate. The washed sample was then dried in a heat cabinet at 65 °C for 10 hours. The dried sample was then milled to a particle size of 250 microns.

Sample 3 (non-activated/no mechanical energy): 30 grams (dry matter) of alcohol washed starting pectin-containing biomass material was milled to a particle size of 250 microns.

Sample 4 (non-activated/mechanical energy): 30 grams (dry matter) of alcohol washed starting pectin-containing biomass material was suspended in 3 L of de-ionized water and then passed through a homogenizer (APV Rannie 1000 homogenizer, type 12.50, reg.no. 113, Copenhagen Denmark) twice at 300 bar to impart comparable mechanical energy to that of Sample 2. The homogenized sample was mixed with 6 L 100% isopropanol and then drained in a 60μ nylon cloth. The drained sample was then dried in a heat cabinet at 65 °C for 10 hours, after which the dried sample was milled to a particle size of 250 microns.

A dry, traditional water washed orange peel was obtained and divided into four samples-Sample 5, 6, 7, and 8.

Sample 5 (activated/no mechanical energy): 500 grams (dry matter) of water washed starting pectin-containing biomass material was activated by contacting the material with 15 L of 60% ethanol and 50 mL of 62% nitric acid at 65 °C for 2 hours without being subjected to mechanical energy. After conventionally activating-i.e., without mechanical energy-the sample was cooled to 25 °C and then was drained. The drained sample was then washed with 15 L 60% ethanol with a pH adjustment to 4.0 with 10% sodium carbonate, and then dried in a heat cabinet at 65 °C for 10 hours. The dried sample was then milled to a particle size of 250 microns.

Sample 6 (activated/mechanical energy): 1,000 grams (dry matter) of water washed starting pectin-containing biomass material was activated by contacting the material with 30 L of 60% ethanol and 100 mL of 62% nitric acid at 70 °C for 1 hour under mechanical energy of 10,800 kilojoules.

The mechanical energy was induced by constant recirculation pumping of the sample mixture (material, alcohol, and acid)-more particularly, the sample mixture was continuously recirculated at 5,200 L/hr from a vessel (KOFA ApS, volume 25 L) through a tube heat exchanger (3 meters in length; 6" outer diameter; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed for 5 minutes in 30 L 60% ethanol with a pH adjustment to 4.0 using 10% sodium carbonate. The washed sample was then dried in a heat cabinet at 65 °C for 10 hours. The dried sample was then milled to a particle size of 250 microns.

Sample 7 (non-activated/no mechanical energy): 30 grams (dry matter) of water washed starting pectin-containing biomass material was milled to a particle size of 250 microns.

Sample 8 (non-activated/mechanical energy): 30 grams (dry matter) of water washed starting pectin-containing biomass material was suspended in 3 L of de-ionized water and then passed through a homogenizer (APV Rannie 1000 homogenizer, type 12.50, reg.no. 113, Copenhagen Denmark) twice at 300 bar to impart comparable mechanical energy to the sample, as in Sample 2. The homogenized sample was mixed with 6 L 100% isopropanol and then drained in a 60μ nylon cloth. The drained sample was then dried in a heat cabinet at 65 °C for 10 hours, after which the dried sample was milled to a particle size of 250 microns.

The recovery (% of soluble pectin within the sample), the intrinsic viscosity (of the pectin extracted from the sample), residual sugar content (% by weight of the sample), degree of esterification of the pectin in the sample (DE), degree of galacturonic acid of the sample (GA), apparent viscosity (VIS) of the sample in a 2% solution/dispersion at pH 4, and water binding capacity of the sample (grams of water/grams of dry matter) were measured and the coil overlap parameter was calculated. The results are summarized in the below table.

Table 5

| Sam-ple | Activated | ME | Recovery (%) | IV (dL/g) | Coil Overlap (dL/g) | Residual Sugar (%) | DE (%) | GA (%) | VIS (mPa·s) | Water Binding (g/g) |
|---|---|---|---|---|---|---|---|---|---|---|
| 1 | Yes | No | 34 | 10 | 3.40 | 2.3 | 72.8 | 49.8 | 1020 | n/a |

(continued)

| Sam-ple | Activated | ME | Recovery (%) | IV (dL/g) | Coil Overlap (dL/g) | Residual Sugar (%) | DE (%) | GA (%) | VIS (mPa·s) | Water Binding (g/g) |
|---|---|---|---|---|---|---|---|---|---|---|
| 2 | Yes | Yes | 38.4 | 9.1 | 3.49 | 2.6 | 73.4 | 48.8 | 1810 | 15 |
| 3 | No | No | 18.4 | 9.8 | 1.80 | 12.2 | 74.6 | 44 | 240 | 13.9 |
| 4 | No | Yes | 22.8 | 7.6 | 1.73 | 12.2 | 74.6 | 44 | 270 | 22.6 |
| 5 | Yes | No | 19.5 | 10 | 1.95 | 0.97 | 67.6 | 45 | 90 | NA |
| 6 | Yes | Yes | 39.4 | 7.7 | 3.03 | 0.7 | 67.4 | 49.4 | 1188 | 18.3 |
| 7 | No | No | 19.9 | 7 | 1.39 | 13.5 | 67.5 | 42.6 | 54 | 9.6 |
| 8 | No | Yes | 23.2 | 6 | 1.39 | 13.5 | 67.5 | 42.6 | 92 | 12.6 |

As illustrated in the Table 5, the alcohol washed sample that was activated under mechanical energy has a higher apparent viscosity than the comparable sample activated without being under mechanical energy. In fact, all the samples that went under mechanical energy had a greater apparent viscosity than the apparent viscosity of their comparable that did undergo mechanical energy.

Further illustrated, the samples that were subjected to mechanical energy also have a greater pectin recovery. This result is surprising as it was conventionally believed that exposing the starting pectin-containing biomass material to mechanical energy of greater than 1,200 kilojoules per kg dry matter would break or disintegrate the material into a form that made separation of the activating solution, and also extraction of the pectin there from more difficult, and therefore undesirably decrease pectin yield.

The coil overlap parameter of Sample 2 indicates that a pectin-containing composition that is alcohol washed and subsequently activated under mechanical energy has the greatest desirable functionality.

*Example 2*

Fresh orange peel was washed in alcohol using the methods described in U.S. Patent No. 8,323,513 and then pressed by hand, followed by a second consecutive wash/press to form alcohol washed starting pectin-containing biomass material. The dry alcohol washed starting pectin-containing biomass material was then divided into two samples, Samples 1 and 2.

Sample 1 (alcohol washed/activated): 1,000 grams (dry matter) of alcohol washed starting pectin-containing biomass material was activated by contacting the material with alcohol and acid at 70 °C for 1 hour under mechanical energy of 10,800 kilojoules. The amount of acid that was used was selected to correspond to the amount of acid used in a dry peel extraction (0.1 mL acid/gram peel): 1000 gram dry peel, 100 mL 62% nitric acid; 30 L 60% isopropyl alcohol.

The mechanical energy was induced by constant recirculation pumping of the sample mixture (material, alcohol, and acid)-more particularly, the sample mixture was continuously recirculated at 5,200 L/hr from a vessel (KOFA ApS, volume 25 L) through a tube heat exchanger (3 meters in length; 6" outer diameter; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 3.5 using 10% sodium carbonate. The washed sample was then dried in a heat cabinet at 65 °C for 10 hours. The dried sample was then milled to a particle size of 250 microns.

Sample 2 (alcohol washed/activated): Sample 2 was prepared similarly as Sample 1, except that Sample 2 was activated at a temperature of 40 °C.

Dry, conventional water-washed orange peel was obtained and divided into two samples-Samples 3 and 4.

Sample 3 (water washed/activated): 1,000 grams (dry matter) of water washed starting pectin-containing biomass material was activated by contacting the material with 30 L of 60% ethanol and 100 mL of 62% nitric acid at 70 °C for 1 hour under mechanical energy of 10,800 kilojoules.

The mechanical energy was induced by constant recirculation pumping of the sample mixture (material, alcohol, and acid)-more particularly, the sample mixture was continuously recirculated at 5,200 L/hr from a vessel (KOFA ApS, volume 25 L) through a tube heat exchanger (3 meters in length; 6" outer diameter; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed for 5 minutes in 30 L 60% ethanol with a pH adjustment to 4.0 using 10% sodium carbonate. The washed sample was then dried in a heat cabinet at 65 °C for 10 hours. The dried sample was then milled to a particle size of 250 microns.

Sample 4 (water washed/activated): Sample 4 was prepared similarly as Sample 3, except that Sample 4 was activated at a temperature of 40 °C.

The recovery (% of soluble pectin within the sample), the intrinsic viscosity (of the pectin extracted from the sample), residual sugar content (% by weight of the sample), degree of esterification of the pectin in the sample (DE), degree of galacturonic acid of the sample (GA), apparent viscosity (of the solution having the sample dissolved or dispersed there through), and water binding capacity of the sample (grams of water/grams of solid matter) were measured and the coil overlap parameter was calculated. The results are summarized in the below table.

Table 6

| Sample | Recovery (%) | IV (dL/g) | Coil Overlap (dL/g) | Residual Sugar (%) | DE (%) | GA (%) | VIS (mPa·s) | Water Binding (g/g) |
|---|---|---|---|---|---|---|---|---|
| 1 | 38.4 | 9.1 | 3.49 | 2.6 | 73.4 | 48.8 | 1810 | 15 |
| 2 | 25 | 8.3 | 2.08 | 1.29 | 71.7 | 44 | 156 | 16.7 |
| 3 | 39.4 | 7.7 | 3.03 | 0.7 | 67.4 | 49.4 | 1188 | 18.3 |
| 4 | 28.3 | 8.3 | 2.35 | 0.97 | 68.4 | 45.9 | 266 | 16.2 |

The samples show that the functional property apparent viscosity is much higher in the samples that have undergone the mechanical treatment at 70 °C than those that were treated at 40 °C. This indicates that processing the starting pectin-containing biomass material at temperatures higher than 40 °C results in material have greater functionality compared to materials processed at temperatures lower than 40 °C.

*Example 3*

Fresh orange peel was washed in alcohol using the methods described in U.S. Patent No. 8,323,513 and then pressed by hand, followed by a second consecutive wash/press, and then dried to form dry, alcohol washed starting pectin-containing biomass material. The dry, alcohol washed starting pectin-containing biomass material was then divided into two samples-Samples 1 and 2.

Sample 1 (dry/no mechanical energy): 2,500 grams (dry matter) of alcohol washed starting pectin-containing biomass material was activated by contacting the material with alcohol and acid at 70 °C for 1 hour without being subjected to mechanical energy. The amount of acid that was used was selected to correspond to the amount of acid used in a dry peel extraction (0.1 mL acid/gram peel): 2500 gram dry peel, 250 mL 62% nitric acid; 20 L 60% isopropyl alcohol. After conventionally activating-i.e., without mechanical energy-the sample was cooled to 25 °C and was drained. The drained sample was then washed with 100 L 60% isopropyl alcohol, and then dried in a heat cabinet at 65 °C for 10 hours. The dried sample was then milled to a particle size of 250 microns.

Sample 2 (dry/ mechanical energy): 1,000 grams (dry matter) of alcohol washed starting pectin-containing biomass material was activated by contacting the material with alcohol and acid at 70 °C for 1 hour under mechanical energy of 10,800 kilojoules. The amount of acid that was used was selected to correspond to the amount of acid used in a dry peel extraction (0.1 mL acid/gram peel): 1000 gram dry peel, 100 mL 62% nitric acid; 30 L 60% isopropyl alcohol.

The mechanical energy was induced by constant recirculation pumping of the sample mixture (material, alcohol, and acid)-more particularly, the sample mixture was continuously recirculated at 5,200 L/hr from a vessel (KOFA ApS, volume 25 L) through a tube heat exchanger (3 meters in length; 6" outer diameter; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 3.5 using 10% sodium carbonate. The washed sample was then dried in a heat cabinet at 65 °C for 10 hours. The dried sample was then milled to a particle size of 250 microns.

Fresh orange peel was washed in alcohol using the methods described in U.S. Patent No. 8,323,513 to form wet and pressed alcohol washed starting pectin-containing biomass material.

Sample 3 (wet/ mechanical energy): 950 grams (dry matter) of wet and pressed alcohol washed starting pectin-containing biomass material was activated by contacting the material with alcohol and acid at 70 °C for 1 hour under mechanical energy of 10,800 kilojoules. The amount of acid that was used was selected to correspond to the amount of acid used in a dry peel extraction (0.1 mL acid/gram peel): 1000 gram dry peel, 100 mL 62% nitric acid; 30 L 60% isopropyl alcohol.

The mechanical energy was induced by constant recirculation pumping of the sample mixture (material, alcohol, and acid)-more particularly, the sample mixture was continuously recirculated at 5,200 L/hr from a 25 L stainless steel vessel (no agitation) through a tube heat exchanger (3 meters in length; 6" outer diameter of 6"; 2 inner tubes, each with a diameter of 1½") and back to the vessel by a lobe pump (APV, CL/1/021/10) that operated at 50 Hz..

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 3.5 using 10% sodium carbonate. The washed sample was then dried in a heat cabinet at 65 °C for 10 hours. The dried sample was then milled to a particle size of 250 microns.

The recovery (% of soluble pectin within the sample), the intrinsic viscosity (of the pectin extracted from the sample), residual sugar content (% by weight of the sample), degree of esterification of the pectin in the sample (DE), degree of galacturonic acid of the sample (GA), apparent viscosity (of the solution having the sample dissolved or dispersed there through), and water binding capacity of the sample (grams of water/grams of solid matter) were measured and the coil overlap parameter was calculated. The results are summarized in the below table.

Table 7

| Sample | Recovery (%) | IV (dL/g) | Coil Overlap (dL/g) | Residual Sugar (%) | DE (%) | GA (%) | VIS (mPa·s) | Water Binding (g/g) | SAG |
|---|---|---|---|---|---|---|---|---|---|
| 1 | 34 | 10 | 3.40 | 2.3 | 72.8 | 49.8 | 1020 | n/a | 111 |
| 2 | 38.4 | 9.1 | 3.49 | 2.6 | 73.4 | 48.8 | 1810 | 15 | 122 |
| 3 | 50.7 | 9.1 | 4.61 | 2.1 | 73.5 | 50 | 3100 | 24.6 | 142 |

As illustrated in Table 7, the functional property apparent viscosity is much higher in the sample in which the starting pectin-containing biomass material was washed, but not subsequently dried. This shows that it may be desirable, in certain instances, to avoid drying the washed starting pectin-containing biomass material prior to activation (contacting the starting pectin-containing biomass material with an activating solution and subjecting the mixture to mechanical energy). Also as illustrated in the table, the functional property SAG follows the same pattern as the functional property viscosity.

*Example 4*

Fresh orange peel was washed in alcohol using the methods described in U.S. Patent No. 8,323,513 and then pressed by hand, followed by a second consecutive wash/press to form alcohol washed and dried starting pectin-containing biomass material.

Sample 1: 1,000 grams (dry matter) of alcohol washed starting pectin-containing biomass material was activated by contacting the material with alcohol and acid at 70 °C for 1 hour under mechanical energy of 10,800 kilojoules. The amount of acid that was used was selected to correspond to the amount of acid used in a dry peel extraction (0.1 mL acid/gram peel): 1000 gram dry peel, 100 mL 62% nitric acid; 30 L 60% isopropyl alcohol.

The mechanical energy was induced by constant recirculation pumping of the sample mixture (material, alcohol, and acid)-more particularly, the sample mixture was continuously recirculated at 5,200 L/hr from a vessel (KOFA ApS, volume 25 L) through a tube heat exchanger (3 meters in length; 6" outer diameter; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 3.5 using 10% sodium carbonate. The washed sample was then dried in a heat cabinet at 65 °C for 10 hours. The dried sample was then milled and then sifted on a 100 micron screen in order for all samples being of same mesh size.

Sample 2: Fresh orange peel was washed in alcohol using the methods described in U.S. Patent No. 8,323,513 and then pressed by hand, followed by a second consecutive wash/press to form wet, alcohol washed starting pectin-containing biomass material.

950 grams (dry matter) of wet, alcohol washed starting pectin-containing biomass material was activated by contacting the material with alcohol and acid at 70 °C for 1 hour under mechanical energy of 10,800 kilojoules. The amount of acid that was used was selected to correspond to the amount of acid used in a dry peel extraction (0.1 mL acid/gram peel): 1000 gram dry peel, 100 mL 62% nitric acid; 30 L 60% isopropyl alcohol.

The mechanical energy was induced by constant recirculation pumping of the sample mixture (material, alcohol, and acid)-more particularly, the sample mixture was continuously recirculated at 5,200 L/hr from a 25 L stainless steel vessel (no agitation) through a tube heat exchanger (3 meters in length; 6" outer diameter of 6"; 2 inner tubes, each with a diameter of 1½") and back to the vessel by a lobe pump (APV, CL/1/021/10) that operated at 50 Hz.

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 3.5 using 10% sodium carbonate. The washed sample was then dried in a heat cabinet at 65 °C for 10 hours. The dried sample was then milled and then sifted on a 100 micron screen in order for all samples being of same mesh size

Four comparative samples were also obtained, all having been sieved on a 100 micron sieve. These comparative samples were commercial citrus fiber products as indicated in the below table:

Table 8

| Commerical Samples | Commerical Name | Commerical Batch No. |
|---|---|---|
| C 1 | CitriFi 100M40 | R13162M40 |
| C 2 | Herbacel AQ Plus citrus | 31210020 |
| C 3 | FiberGel Citrus 5100 | 510015M21A |
| C 4 | Ceamfibre 7000 | PT52825 |

The recovery (% of soluble pectin within the sample), the intrinsic viscosity (of the pectin extracted from the sample), residual sugar content (% by weight of the sample), degree of esterification of the pectin in the sample (DE), degree of galacturonic acid of the sample (GA), apparent viscosity (of the solution having the sample dissolved or dispersed there through), water binding capacity of the sample (grams of water/grams of solid matter), and SAG of the sample were measured and the coil overlap parameter was calculated. The results are summarized in the below table.

Table 9

| Sample | Recovery (%) | IV (dL/g) | Coil Overlap (dL/g) | Residual Sugar (%) | DE (%) | GA (%) | VIS (mPa·s) | Water Binding (g/g) | SAG |
|---|---|---|---|---|---|---|---|---|---|
| 1 | 37.2 | 7.2 | 2.68 | 3.7 | 73.3 | 49.9 | 558 | 18.2 | 101 |
| 2 | 43.8 | 7.5 | 3.29 | 2.8 | 73.1 | 51.1 | 1266 | 24.6 | 128 |
| C 1 | 18.2 | 6.1 | 1.11 | 21.1 | 67.6 | 44.3 | 56 | 13.1 | <<60 |
| C2 | 10.3 | 3.4 | 0.35 | 1.9 | 60.9 | 22.5 | 180 | 16.5 | No gel |
| C3 | 20.9 | 2.7 | 0.56 | 39.6 | 6.6 | 43.8 | 10 | 8.1 | No gel |
| C4 | 0.6 | 2.2 | 0.01 | N/A | 19 | 3.5 | 4 | 7.1 | No gel |

As illustrated in the Table 9, none of the comparative samples have a coil overlap parameter that is greater, and therefore, as compared to Samples 1-2, has lower functionality. Furthermore, Samples 1-2 have greater apparent viscosity and water binding capacity, as well as, unlike the comparative samples, have the capability of gelling. These results show the functional superiority of exemplary pectin-containing biomass compositions of the present disclosure as compared to conventional pectin-containing biomass compositions.

*Example 5*

Fresh orange peel was washed in alcohol using the methods described in U.S. Patent No. 8,323,513 and then pressed by hand, followed by a second consecutive wash/press, and then subsequently dried at 65 °C for 10 hours to form dried, alcohol washed starting pectin-containing biomass material (5-10% residual moisture).

Fresh orange peel was washed in alcohol using the methods described in U.S. Patent No. 8,323,513 and then pressed by hand, followed by a second consecutive wash/press to form wet, alcohol washed starting pectin-containing biomass material (35-45% dry matter).

Pre-Treated Samples (Samples 1-4): For each sample, a mixture of 1,000 grams (dry matter) of dried alcohol washed starting pectin-containing biomass material and an activating solution (100 mL of 62% nitric acid: 30 L 60% alcohol) underwent pre-treatment by being passed once through a Boston Shear Mill (BSM) at room temperature (model BSM-25 with a motor size of 15 HP (11 kW) and an outlet diameter of 1" (25 mm)). The pre-treated mixture for each sample was then further processed. The amount of mechanical energy imparted to Samples 1, 2, 3, and 4, by the Boston Shear Mill was calculated from the effect of the BSM and the time to process the sample. For sample 1 and 2, the time to process the 33 liters through the BSM was 125 seconds; the energy added to the sample was 11 kW * 125 seconds, or 1380 kilojoules. For samples 3 and 4 the flow was higher and the processing time only 63 seconds, hence the energy added was 690 kilojoules (per kg dry matter).

Sample 2 and Sample 4: For each sample, the pre-treated mixture was transferred to a closed plastic bag and placed at 65 °C for 3-4 hours with no mechanical input. The sample was subsequently drained, washed in 20 L 80% isopropyl alcohol at pH of 4. Then the sample was drained, pressed and dried. The dried sample was then milled to a particle size of 250 microns.

Sample 1 and Sample 3: For each sample, the pre-treated mixture (material, alcohol, and acid) was further processed. Mechanical energy was induced by constant recirculation pumping of the sample mixture (material, alcohol, and acid)-more particularly, the sample mixture was continuously recirculated at about 1,000 L/hr from a 25 L stainless steel vessel (no agitation) through a tube heat exchanger (3 meters in length; 6" outer diameter of 6"; 2 inner tubes, each with a diameter of 1½") maintaining a temperature of 65 °C and back to the vessel by a lobe pump (APV, CL/1/021/10) that operated at 10 Hz for a period of 50 minutes (3000 seconds), including heating (15 minutes) and cooling (15 minutes).

The pump motor is 2 kW at 50 Hz; at 10 Hz the effect is only 0.4 kW; the energy imparted to the sample 1 and 3 was 0.4 kW * 3000 seconds, or 1200 kilojoules (per kg dry matter).

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 4 using 10% sodium carbonate. The washed sample was then dried in a heat cabinet at 65 °C for 10 hours. The dried sample was then milled and then sifted on a 250 micron screen.

Non-Pretreated Samples: For each sample, a mixture of 1,000 grams (dry matter) of dried alcohol washed and an activating solution (100 mL of 62% nitric acid: 30 L 60% alcohol) was processed. Mechanical energy was induced by constant recirculation pumping of the sample mixture (material, alcohol, and acid)-more particularly, the sample mixture was continuously recirculated at about 1,000 L/hr from a 25 L stainless steel vessel (no agitation) through a tube heat exchanger (3 meters in length; 6" outer diameter of 6"; 2 inner tubes, each with a diameter of 1½") maintaining a temperature of 65 °C and back to the vessel by a lobe pump (APV, CL/1/021/10) that operated at different frequencies (Hz) and for different periods of time.

After being activated under mechanical energy, the sample mixture was cooled to 15 °C and then was drained using a Vincent press (model CP-4). The drained sample was then conventionally washed twice, where each wash was for 5 minutes in 30 L 60% isopropyl alcohol with a pH adjustment to 4 using 10% sodium carbonate. The washed sample was then dried in a heat cabinet at 65 °C for 10 hours. The dried sample was then milled and then sifted on a 250 micron screen.

The processing parameters for the non-pretreated samples are summarized in the below table:

Table 10

| Sample | Lobe pump speed and corresponding effect | Time including heating and cooling (minutes) |
|---|---|---|
| 5 | 10 Hz (0.4 kW) | 50 |
| 6 | 20 Hz (0.8 kW) | 50 |
| 7 | 40 Hz (1.6 kW) | 50 |
| 9 | 40 Hz (1.6 kW) | 90 |
| 10 | 30 Hz (1.2 kW) | 90 |

Sample 8: 1,000 (dry matter) of alcohol washed starting pectin-containing biomass material was activated by contacting the material with alcohol and acid at 65 °C for 3 - 4 hours without being subjected to mechanical energy. The amount of acid that was used was selected to correspond to the amount of acid used in a dry peel extraction (0.1 mL acid/gram peel): 1,000 gram dry peel, 100 mL 62 nitric acid; 30 L 60% isopropyl alcohol.

After conventionally activating-i.e., without mechanical energy-the sample was cooled to 25 °C and then was drained. The drained sample was then conventionally washed for 30 minutes in 30 L 80% isopropanol with a pH adjustment to 4.0 using 10% sodium carbonate. The washed peel was then dried in a heat cabinet at 65 °C for 10 hours. The dried sample was then milled to a particle size of 250 microns.

The total amount of mechanical energy imparted to each sample is summarized in the below table:

Table 11

| Sample | BSM Energy (kJ) | Mechanical Energy* (kJ) | Total Energy** (kJ) |
| --- | --- | --- | --- |
| 1 | 1380 | 1200 | 2580 |
| 2 | 1380 | 0 | 1380 |
| 3 | 690 | 1200 | 1890 |
| 4 | 690 | 0 | 690 |
| 5 | 0 | 1200 | 1200 |
| 6 | 0 | 2400 | 2400 |
| 7 | 0 | 4800 | 4800 |
| 8 | 0 | 0 | 0 |
| 9 | 0 | 8640 | 8640 |
| 10 | 0 | 6480 | 6480 |
| *Mechanical Energy was calculated by the effect of the pump and the operating time | | | |
| **Total Energy is the summation of the BSM Energy and Mechanical Energy | | | |

The recovery (% of soluble pectin within the sample), the intrinsic viscosity (of the pectin extracted from the sample), degree of esterification of the pectin in the sample (DE), apparent viscosity (of the solution having the sample dissolved or dispersed there through), and water binding capacity of the sample (grams of water/grams of solid matter), were measured and the coil overlap parameter was calculated. The results are summarized in the below table.

Table 12

| Sample | Recovery (%) | IV (dL/g) | Coil Overlap (dL/g) | DE (%) | VIS (mPa·s) | Water Binding (g/g) |
| --- | --- | --- | --- | --- | --- | --- |
| 1 | 28.2 | 8.4 | 2.4 | 66.3 | 583 | 26.7 |
| 2 | 19.5 | 9.6 | 1.9 | 67.9 | 219 | 20.7 |
| 3 | 28.6 | 8.2 | 2.3 | 68.4 | 730 | 24.6 |
| 4 | 18.3 | 10 | 1.8 | 68.7 | 238 | 21.7 |
| 5 | 25.8 | 8.9 | 2.3 | 69.4 | 439 | 21.5 |
| 6 | 29.6 | 8.2 | 2.4 | 69.5 | 573 | 21.2 |
| 7 | 26 | 9 | 2.3 | 69.6 | 512 | 22.2 |
| 8 | 19.1 | 8.8 | 1.7 | 68.8 | 165 | 15.6 |
| 9 | 30.4 | 8 | 2.4 | 69.4 | 628 | 22.4 |
| 10 | 30.4 | 8 | 2.4 | 69.6 | 691 | 20 |

As illustrated in the table, when the amount of mechanical energy imparted to the sample exceeds 1,500 kilojoules per kg dry matter, the coil overlap parameter is greater than 2 and therefore has apparent viscosity above 500 mPa·s.

*Example 6*

Fresh orange peel was washed in alcohol using the methods described in U.S. Patent No. 8,323,513 and then pressed by hand, followed by a second consecutive wash/press, to form alcohol washed starting pectin-containing biomass material.

Samples 1-3 (Heating and Mechanical Energy): For each sample, a mixture of 1,000 grams (dry matter) of alcohol washed, pressed peel and an activating solution (100 mL of 62% nitric acid: 30 L 60% alcohol) was processed as follows.

Mechanical energy was induced by constant recirculation pumping of the sample mixture (material, alcohol, and acid)-more particularly, the sample mixture was continuously recirculated from a 25 L stainless steel vessel (no agitation) through a tube heat exchanger (3 meters in length; 6" outer diameter of 6"; 2 inner tubes, each with a diameter of 1½") maintaining a temperature of 70 °C and back to the vessel by a lobe pump (APV, CL/1/021/10) that operated at 40 Hz (Sample 1) for a period of 50 minutes (3000 seconds), including heating and cooling; 40 Hz (Sample 2) for a period of 90 minutes (5400 seconds), including heating and cooling; 50 Hz (Sample 3) for a period of 50 minutes (3000 seconds), including heating and cooling.

The drained sample was then conventionally washed for 30 minutes in 30 L 80% isopropanol with a pH adjustment to 4.0 using 10% sodium carbonate. The washed peel was then dried in a heat cabinet at 65 °C for 10 hours. The dried sample was then milled to a particle size of 250 microns.

Samples 4-9 (Heating after Mechanical Energy): For each sample, a mixture of 1,000 grams (dry matter) of alcohol washed, pressed peel and an activating solution (100 mL of 62% nitric acid: 30 L 60% alcohol) was processed as described for samples 1-3 but the process was run at 25 °C and the pump was operating at 50 Hz. The samples 4-6 were all treated for a period of 20 minutes (1200 seconds) and the samples 7-9 were treated for a period of 60 minutes (3600 seconds). After the Mechanical treatment, the mixture was separated into peel and the activating solution. The activating solution was heated to 70 °C in a stirred vessel and the peel was added into the vessel. The heating time at 70 °C was 5 minutes (sample 4), 20 minutes (sample 5) and 60 minutes (sample 6), 5 minutes (sample 7), 20 minutes (sample 8), and 60 minutes (sample 9).

The drained sample was then conventionally washed for 30 minutes in 30 L 80% isopropanol with a pH adjustment to 4.0 using 10% sodium carbonate. The washed peel was then dried in a heat cabinet at 65 °C for 10 hours. The dried sample was then milled to a particle size of 250 microns.

The recovery (% of soluble pectin within the sample), the intrinsic viscosity (of the pectin extracted from the sample), degree of esterification of the pectin in the sample (DE), apparent viscosity (of the solution having the sample dissolved or dispersed there through), and water binding capacity of the sample (grams of water/grams of solid matter), were measured and the coil overlap parameter was calculated. The results are summarized in the below table.

Table 13

| Sample | Recovery (%) | IV (dL/g) | Coil Overlap (dL/g) | DE (%) | Water Binding (g/g) |
|--------|--------------|-----------|---------------------|--------|---------------------|
| 1 | 32.42 | 8.82 | 2.86 | 70.2 | 17.8 |
| 2 | 38.06 | 8.23 | 3.13 | 69.3 | 20.3 |
| 3 | 33.84 | 8.72 | 2.95 | 69.4 | 18.2 |
| 4 | 26.23 | 10.43 | 2.74 | 70.6 | 17.1 |
| 5 | 29.79 | 9.46 | 2.82 | 69.5 | 18.1 |
| 6 | 38.25 | 8.24 | 3.15 | 70 | 21.3 |
| 7 | 27.79 | 8.77 | 2.44 | 67.6 | 18.4 |
| 8 | 31.81 | 8.91 | 2.83 | 70.5 | 16.6 |
| 9 | 30.97 | 9.17 | 2.84 | 70.5 | 15.8 |

As illustrated in the above table, the functionality of the resulting activated pectin-containing biomass composition is not necessarily affected by whether the mixture of starting pectin-containing biomass material and activating solution is heated during or subsequent to subjecting the mixture to mechanical energy. Thus, suitable activated pectin-containing biomass compositions may be provided irrespective of when the mixture is heated, i.e., either during or after mechanical energy treatment.

*Example 7*

Fresh orange peel was washed in alcohol using the methods described in U.S. Patent No. 8,323,513 and then pressed by hand, followed by a second consecutive wash/press and drying, to form dry alcohol washed starting pectin-containing biomass material.

For each sample, a mixture of 1,000 grams (95% dry matter) of alcohol washed, dry peel and an activating solution (150 mL of 62% nitric acid: 30 L 60% alcohol) was processed as follows.

Mechanical energy was induced by constant recirculation pumping of the sample mixture (material, alcohol, and acid)-more particularly, the sample mixture was continuously recirculated from a 25 L stainless steel vessel (no agitation) through a tube heat exchanger (3 meters in length; 6" outer diameter of 6"; 2 inner tubes, each with a diameter of 1½") maintaining a temperature of 55 °C (Sample 1), 65 °C (Sample 2), or 75 °C (Sample 3), and back to the vessel by a lobe pump (APV, CL/1/021/10) that operated at 50 Hz for a period of 30 minutes.

The drained sample was then conventionally washed for 30 minutes in 30 L 80% isopropanol with a pH adjustment to 4.0 using 10% sodium carbonate. The washed peel was then dried in a heat cabinet at 65 °C for 10 hours. The dried sample was then milled to a particle size of 250 microns.

The recovery (% of soluble pectin within the sample), the intrinsic viscosity (of the pectin extracted from the sample), degree of esterification of the pectin in the sample (DE), apparent viscosity (of the solution having the sample dissolved or dispersed there through), and water binding capacity of the sample (grams of water/grams of solid matter), were measured and the coil overlap parameter was calculated. The results are summarized in the below table.

Table 14

| Sample | IV (dL/g) | Recovery (%) | Coil Overlap (dl/g) | DE (%) | VIS (mPa·s) | Water Binding (g/g) |
|--------|-----------|--------------|---------------------|--------|-------------|---------------------|
| 1 | 7.1 | 30.4 | 2.16 | 67.4 | 196 | 16.6 |
| 2 | 6.5 | 36.1 | 2.35 | 66.2 | 276 | 16.6 |
| 3 | 6.1 | 41.9 | 2.56 | 66.1 | 353 | 22.0 |

As illustrated in the above table, the functionality of the resulting activated pectin-containing biomass composition is affected by the temperature of the activation. At higher temperature of activations, IV tends to decrease, while recovery, coil overlap, apparent viscosity and water binding tend to increase. DE remains practically constant.

*Example 8*

Fresh orange peel was washed in alcohol using the methods described in U.S. Patent No. 8,323,513 and then pressed by hand, followed by a second consecutive wash/press, to form alcohol washed starting pectin-containing biomass material.

For each sample, a mixture of 1,000 grams (dry matter) of alcohol washed, pressed peel and an activating solution containing different concentrations of 62% nitric acid in 30 L 60% alcohol, and processed as follows.

Mechanical energy was induced by constant recirculation pumping of the sample mixture (material, alcohol, and acid)-more particularly, the sample mixture was continuously recirculated from a 25 L stainless steel vessel (no agitation) through a tube heat exchanger (3 meters in length; 6" outer diameter of 6"; 2 inner tubes, each with a diameter of 1½") maintaining a temperature from 55 - 75 °C, and back to the vessel by a lobe pump (APV, CL/1/021/10) that operated at 40-50 Hz for a period of 5 - 60 minutes.

The drained sample was then conventionally washed for 30 minutes in 30 L 80% isopropanol with a pH adjustment to 4.0 using 10% sodium carbonate. The washed peel was then dried in a heat cabinet at 65 °C for 10 hours. The dried sample was then milled to a particle size of 250 microns.

The recovery (% of soluble pectin within the sample), the intrinsic viscosity (of the pectin extracted from the sample), degree of esterification of the pectin in the sample (DE), and water binding capacity of the sample (grams of water/grams of solid matter) were measured and the coil overlap parameter was calculated. The results are summarized in the below tables with respect to the effect of acid, temperature, energy input and treatment time.

Table 15

| Sample | Acid (ml/kg DM) | Temp (°C) | Time (min) | Energy (kJ) | IV (dl/g) | Recovery (%) | Coil Overlap (dl/g) | DE (%) | Water Binding (g/g) |
|---|---|---|---|---|---|---|---|---|---|
| 1 | 150 | 75 | 15 | 1800 | 7.9 | 35.0 | 2.8 | 69.8 | 21.7 |
| 2 | 150 | 75 | 60 | 7200 | 7.4 | 39.0 | 2.9 | 68.3 | 20.9 |

At fixed acid concentration and temperature with varying treatment time as shown in Table 15, IV tends to be somewhat reduced with longer treatment time, recovery tends to increase somewhat with longer treatment time, coil overlap remains practically constant independent of treatment time, and DE and water binding remain practically constant.

Table 16

| Sample | Acid (ml/kg DM) | Temp (°C) | Time (min) | Energy (kJ) | IV (dl/g) | Recovery (%) | Coil Overlap (dl/g) | DE (%) | Water Binding (g/g) |
|---|---|---|---|---|---|---|---|---|---|
| 3 | 100 | 70 | 20 | 1920 | 8.8 | 32.4 | 2.9 | 70.2 | 17.8 |
| 4 | 100 | 70 | 60 | 5760 | 8.2 | 38.1 | 3.1 | 69.3 | 20.3 |
| 5 | 100 | 70 | 20 | 2400 | 8.7 | 33.8 | 3.0 | 69.4 | 18.2 |

At a lower acid concentration and a lower temperature with varying treatment times as shown in Table 16 as compared to Table 15, IV tends to be somewhat reduced with longer treatment time, recovery tends to increase somewhat with longer treatment time, coil overlap remains practically constant independent of treatment time, and DE remains practically constant. However, water binding tends to increase with increasing treatment time.

Table 17

| Sample | Acid (ml/kg DM) | Temp (°C) | Time (min) | Energy (kJ) | IV (dl/g) | Recovery (%) | Coil Overlap (dl/g) | DE (%) | Water Binding (g/g) |
|---|---|---|---|---|---|---|---|---|---|
| 6 | 150 | 65 | 5 | 600 | 7.3 | 32.9 | 2.4 | 67.1 | 19.0 |
| 7 | 150 | 65 | 30 | 3600 | 7.5 | 38.5 | 2.9 | 68.1 | 19.0 |
| 8 | 150 | 65 | 60 | 7200 | 7.2 | 42.4 | 3.1 | 66.7 | 20.1 |

At a constant acid concentration and a constant low treatment temperature with varying treatment times as shown in Table 17, IV remains pretty constant with treatment times in the range 5-60 minutes, recovery increases with increasing treatment time, coil overlap increases with increasing treatment time, and DE and water binding are practically constant.

Table 18

| Sample | Acid (ml/kg DM) | Temp (°C) | Time (min) | Energy (kJ) | IV (dl/g) | Recovery (%) | Coil Overlap (dl/g) | DE (%) | Water Binding (g/g) |
|---|---|---|---|---|---|---|---|---|---|
| 9 | 250 | 55 | 5 | 600 | 7.9 | 30.8 | 2.4 | 67 | 18.6 |
| 10 | 250 | 55 | 60 | 7200 | 7.2 | 37.9 | 2.7 | 65 | 19.1 |

At a higher acid concentration and even lower treatment temperature with varying treatment time as shown in Table 18, IV tends to decrease with short treatment time, recovery tends to increase with increasing treatment time, coil overlap tends to increase with increasing treatment time, and DE and water binding remain practically constant with treatment times in the range 5-60 minutes.

Table 19

| Sample | Acid (ml/kg DM) | Temp (°C) | Time (min) | Energy (kJ) | IV (dl/g) | Recovery (%) | Coil Overlap (dl/g) | DE (%) | Water Binding (g/g) |
|---|---|---|---|---|---|---|---|---|---|
| 11 | 50 | 65 | 30 | 3600 | 10.1 | 22.1 | 2.2 | 68.9 | 13.7 |
| 12 | 150 | 65 | 30 | 3600 | 7.6 | 36.9 | 2.8 | 67.1 | 19.9 |
| 13 | 250 | 65 | 30 | 3600 | 7.0 | 41.2 | 2.9 | 65.7 | 19.7 |

At constant temperature and treatment time with increasing acid concentration as shown in Table 19, IV is reduced, the recovery is increased, the coil overlap is increased, DE is reduced, and water binding is increased.

Thus, these results show that one can change acid concentration, treatment temperature and treatment time to provide a number of options to optimize the treatment of the activated pectin-containing biomass composition.

The acid concentration is in the range of 50 - 250 ml 62% nitric acid per kg dry matter, preferably in the range of 100 - 250 ml 62% nitric acid per kg dry matter, and more preferably 150 - 250 ml 62% nitric acid per kg dry matter.

The treatment temperature is in the range 55 - 75 °C, preferably 65 - 75 °C and more preferably 70 - 75 °C.

The treatment time is in the range 5-60 minutes, preferably 15 - 60 minutes and more preferably 20 - 60 minutes.

The ideal combination is an acid concentration 150 ml of 62% nitric acid (concentrated nitric acid) per kg dry matter, a treatment temperature of 70 °C and a treatment time of 15 minutes, and if a lower temperature is wished, a higher acid concentration can be applied.

*Example 9*

This example demonstrates the use of different starting pectin-containing biomass materials and the resulting properties of the activated pectin-containing biomass compositions, which can be used as starting materials for the pectin extraction process.

Apples were pressed. To the pressed pomace was added 63% isopropanol and the pomace was then washed for 5 minutes and pressed. One sample was washed another time in 80% isopropanol, pressed and dried in the drying cabinet. For the other sample, 1 kg dry matter of pressed apple pomace was mixed with 24 kg of 60% isopropanol. 100 mL concentrated nitric acid was added per kg dry matter. It was activated at 70°C for 60 minutes while circulating over the small Lobe pump. After activation, the pomace was pressed. Then it was washed in 60% isopropanol and pressed. Then it was washed in 80% isopropanol and pressed and dried.

Jerusalem artichokes were pressed. To the pressed pomace was added 63% isopropanol and the pomace was then washed for 5 minutes and pressed. One sample was washed another time in 80% isopropanol, pressed and dried in the drying cabinet. For the other sample, 1 kg dry matter of pressed apple pomace was mixed with 24 kg of 60% isopropanol. 100 mL concentrated nitric acid was added per kg dry matter. It was activated at 70°C for 60 minutes while circulating over the small Lobe pump. After activation, the pomace was pressed. Then it was washed in 60% isopropanol and pressed. Then it was washed in 80% isopropanol and pressed and dried.

Oranges were pressed. To the pressed peel was added 63% isopropanol and the peel was then washed for 5 minutes and pressed. One sample was washed another time in 80% isopropanol, pressed and dried in the drying cabinet. For the other sample, 1 kg DM of pressed orange peel was mixed with 24 kg of 60% isopropanol. 100 mL concentrated nitric acid was added per kg dry matter. It was activated at 70°C for 60 minutes while circulating over the small Lobe pump. After activation, the peel was pressed. Then it was washed in 60% isopropanol and pressed. Then it was washed in 80% isopropanol and pressed and dried.

Sugar beet cossettes from the sugar extraction were selected. To the cossettes were added 63% isopropanol and washed for 5 minutes and pressed. One sample was washed another time in 80% isopropanol, pressed and dried in the drying cabinet. For the other sample, 1 kg DM of pressed cossettes was mixed with 27 kg of 60% isopropanol. 100 mL concentrated nitric acid was added per kg dry matter. It was activated at 70°C for 60 minutes while circulating over the small Lobe pump. After activation, the cossettes were pressed. Then they were washed in 60% isopropanol and pressed. Then they were washed in 80% isopropanol and pressed and dried.

Table 20

| Sample | Description | Specific energy (kJ/kg DM) | Total mixture (kg) | Specific energy (kJ/kg mixture) | DE (%) | Recovery (%) | IV (dl/g) | Coil overlap (dl/g) |
|---|---|---|---|---|---|---|---|---|
| 1 | Apple | 10800 | 27 | 400 | 77.4 | 3.0 | 14.5 | 0.4 |
| 2 | Activated apple | 10800 | 27 | 400 | 76.9 | 14.8 | 12.1 | 1.8 |
| 3 | Jerusalem Artichoke | 10800 | 27 | 400 | 54.8 | 9.1 | 1.3 | 0.1 |
| 4 | Activated Jerusalem Artichoke | 10800 | 27 | 400 | 56.8 | 22.2 | 5.5 | 1.2 |
| 5 | Orange | 10800 | 27 | 400 | 70.2 | 15 | 7.8 | 1.2 |
| 6 | Activated orange | 10800 | 27 | 400 | 68.9 | 39 | 7.5 | 2.9 |
| 7 | Beet | 10800 | 30 | 360 | 54.1 | 1.7 | 2.9 | 0.05 |
| 8 | Activated beet | 10800 | 30 | 360 | 54.4 | 15.0 | 3.3 | 0.5 |

Similar patterns were found for of all raw materials tested, i.e. the pectin is made soluble in situ by the activation process. Both the recovery as the coil overlap parameter are several time higher than the corresponding alcohol washed sample without the activation. Activated apple, which is a fruit shows COP close to 2, whereas activated vegetables like Jerusalem Artichoke and activated sugar beet show COP in the range 0.5 to 1.2. Activated orange (citrus) shows the highest COP being greater than 2.

The pectin-containing biomass compositions containing the activated pectin-containing biomass composition having both soluble and insoluble fiber components may be used in many applications, including but not limited to savory products such as soups, sauces and dressings; food supplements; and prebiotics for animal feed. The water holding capacity of the insoluble fiber component facilitates the use of the activated pectin-containing biomass compositions as a liquid absorbent in, for instance, disposable diapers and female hygiene products such as sanitary napkins and panty liners. The soluble pectin component in the activated pectin-containing biomass compositions make them useful in the same applications as extracted pectin, for instance, as disclosed in European Patent No. 1812120B1. By combining the properties of the soluble pectin component to neutralize ammonia and thus eliminate bad odor and the insoluble fiber component to absorb liquid, the activated pectin-containing biomass compositions are also useful in cat litter to absorb liquid and to neutralize ammonia. Additionally, the activated pectin-containing biomass compositions are useful as the starting material for extraction process to make pectin.

*Example 10*

This example compares the performance of different acids, and the impact of calcium, on the viscosity and stability of the activated pectin-containing biomass composition, in this case an activated citrus fiber. A quick viscosity (30-min) and stability test (visual evaluation of the stability of the fiber suspension) were used to assess the extent of activation of the citrus fiber (CF) samples.

A 0.25 wt. % dispersion of activated CF in de-ionized water was prepared using a blender, allowing the dispersion to settle and measure the viscosity and stability of samples after 30 min. This provides a quick assessment on how well the activated CF based on the acid treatment performs in a dispersion.

Analytical apparatus included a magnetic stirrer + magnetic bar, 600 mL beaker, LB20EG Waring laboratory blender (0-20,000 rpm), viscosity glass, 10 mL centrifuge tube with 10 mL scale (Scherf), beaker, centrifuge (5000 rpm), and Brookfield viscometer LV equipped with spindle no. 2. Reagents and Chemicals included the activated CF samples milled with mesh size DIN24, deionized water, 10% KOH, and 10% $HNO_3$.

The first step in the procedure was to weigh 240 g de-ionized water into a 600 mL beaker, and then disperse 0.63 g of the sample CF in the water while stirring on a magnetic stirrer for 5 min. While stirring, the pH was adjusted to $4.2 \pm 0.2$ with either 10% $HNO_3$ or 10% KOH. Upon nearing target pH, diluted versions of $HNO_3$ or KOH at 0.5% were used. The weight was adjusted to 250 g with de-ionized water, then the dispersion was transferred to a blender glass, and mixed at 20,000 rpm for 2 min. The solution was poured into a beaker, and the dispersion was allowed to settle for 30 min. The dispersion was poured into viscosity glass, 1 cm from the rim, and 10 mL was poured into 2 centrifuge tubes. The viscosity of the dispersion was measured using a Brookfield viscometer LV after 30 min determining the Quick Viscosity (Qvis). The viscosity test parameters were a temperature of 23-24 °C, spindle number 2, 60 rpm, and taking the viscosity reading after 1 min. The viscosity reading was multiplied by a translation number, depending upon spindle number (for example, Brookfield reading = 28, then viscosity is (28*5) = 140 mPa.s).

The centrifuge tubes were centrifuged for 10 min at 5000 rpm, corresponding to 2430 G. The amount of separation between the fiber matrix (cloudy phase) and water (clear phase) in the tubes was evaluated according to the scale 0-10 mL and given a stability score in which a higher number equates with better stability: (1) 0-2.5 mL cloudy phase, (2) 2.5-5 mL cloudy phase, (3) 5-7.5 mL cloudy phase, (4) 7.5-10 mL cloudy phase (can have a small clear layer at the top of the sample), or (5) sample is stable with full cloudy phase and no clear layer.

Analogous procedures to those described above in Example 4 were used for evaluating different acids and calcium contents in Example 10. The general procedure included mixing washed citrus peel with isopropyl alcohol or ethanol (40-55 wt. % alcohol based on total mixture) and the respective acid at a temperature of 70-75 °C, and the pH of the mixture was measured. Mechanical energy was applied for 30-90 minutes (with a typical mechanical energy amount for 30 min of 3600 kJ/kg dry matter or 120 kJ/kg of total mixture, for 60 min of 7200 kJ/kg dry matter or 240 kJ/kg of total mixture, and for 90 min of 10,800 kJ/kg dry matter or 360 kJ/kg of total mixture), following by cooling, separating, pressing, and drying. The acid used and its respective amount (undiluted in mL per kg of dry matter), the activating time (minutes), pH, IV (dL/g), pectin recovery (%), Coil Overlap parameter (dL/g), Quick Viscosity (Qvisc, in mPa.s), Stability, and Calcium (in mg per gram of dry matter) are summarized in Table 21. An additional treatment column also is included in Table 21, to be discussed further below.

HCl performed very well as the acid during activation (a solution containing 37 wt. % HCl was used). The activated pectin-containing biomass compositions of Samples 1-4 and 48-49 in Table 21 had a coil overlap parameter of 2.2-3.0 and a Qvisc of 125-180 mPa•s. Likewise, using nitric acid (62 wt. %, diluted to 6-7 wt. %), the activated pectin-containing biomass compositions of Samples 5-8 in Table 21 had a coil overlap parameter of 2.4-2.8 and a Qvisc of 140-193 mPa•s. Citric acid (Samples 20-21), Oxalic acid (Samples 50-51), and Phosphoric acid (Samples 52-53) were not considered suitable alternatives to HCl or nitric acid due to high pH levels and/or low Qvisc values.

Referring now to Samples 9-16, the coil overlap parameter using sulfuric acid (96 wt. %, diluted to ~10 wt. %) was 2.0-3.0, but the Qvisc was in the 50-95 mPa•s range, and much lower than when hydrochloric or nitric acid was used. Typical sulfate content was ~2.5-4 wt. %. Unexpectedly, it was found that calcium was a factor in the lower Qvisc values for sulfuric acid, and that a pre-wash step to remove some of the calcium would improve the sulfuric acid activation. Similarly, phosphoric acid Sample 54 also had a high calcium content (6.9 mg/g) and low Qvisc, like sulfuric acid Samples 12 and 28, in contrast with nitric and hydrochloric acid Samples 8, 23, and 48 (which contained less than 3 mg/g of calcium). The composition of Sample 54 also contained ~5 wt. % phosphorus.

In Samples 18-19 and 42-46, the starting mixture containing alcohol and orange peels was treated (prewashed) with nitric acid to adjust the pH of the mixture to less than 3 and maintained for 30-60 min at a temperature of 25 °C. This pre-wash step resulted in a surprising reduction in the calcium content of the activated citrus fiber after activation with sulfuric acid. The calcium content was in the 7.5-10.1 mg/g range for Samples 9-16 but was reduced to 1.7-2.3 mg/g using the prewash step. This unexpectedly resulted in an increase in the Qvisc from 50-95 mPa•s (average of 64) for Samples 9-16 to 128-197.5 mPa•s (average of 166) using the prewash step.

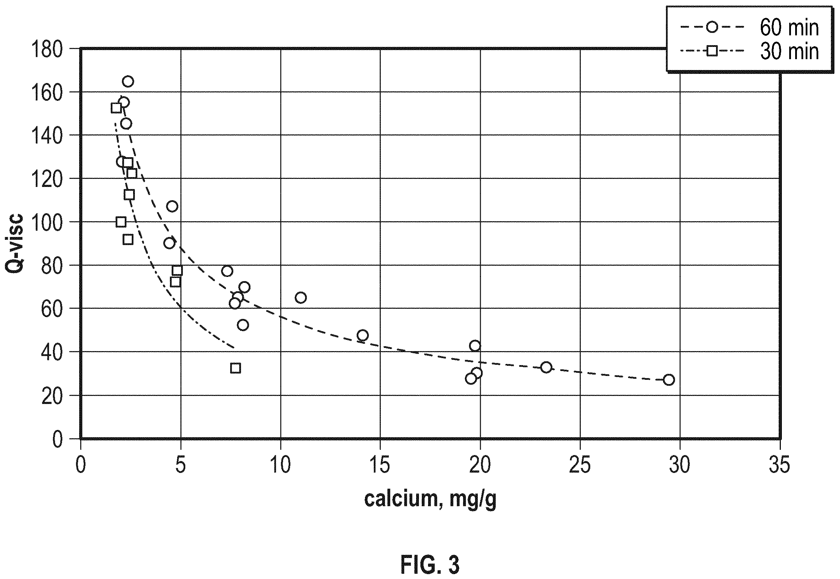

To confirm the impact of calcium on Qvisc, activated CF samples activated with nitric acid (Samples 24-25), sulfuric acid (Samples 24-26, 29-31) and HCl (Sample 50) were post-treated with the addition of calcium, as shown in Table 21. In all cases, the Qvisc decreased significantly due to the addition of calcium. The impact of calcium content (of the activated CF) on Qvisc is illustrated graphically in FIG. 3 for 30 min and 60 min activation steps. The typical level of calcium in dry orange peel is approximately 8 mg/g. Clearly, calcium amounts in excess of 8 mg/g reduce the value of Qvisc. However, it was unexpectedly found that much lower levels of calcium, such as less than 4 mg/g or less than 3 mg/g, resulted in higher Qvisc performance.

Post-treatments to remove or bind calcium also can increase Qvisc results. The addition of citrate in Samples 33-35 resulted in a very slight increase in Qvisc compared to Sample 32, which was activated with sulfuric acid and had no additional treatment. However, in Samples 37-39 as compared to Sample 36, the addition of hexametaphosphate significantly increased Qvisc to an average of 126 mPa•s, even though the calcium content was minimally reduced. The calcium that is present appears to be bound by the hexametaphosphate and does not negatively impact Qvisc values.

Samples 55-68 show parameter variations in third method and the effect on the activated CF composition. With a lower pH in the pretreatment step, calcium levels were reduced, and stability was generally improved.

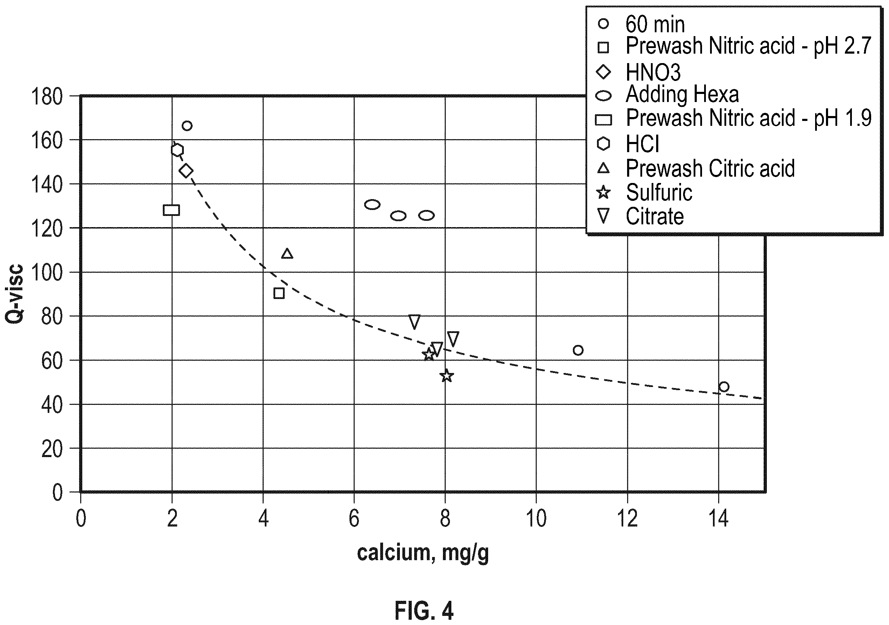

Using certain samples from Table 21, FIG. 4 illustrates the impact of calcium content (of the activated CF) on Qvisc. Notably, calcium levels of less than 5 mg/g - and more particularly, less than 4 mg/g or less than 3 mg/g - result in higher Qvisc values. Further, the use of an agent that binds calcium (like hexametaphosphate) also increases Qvisc.

From FIG. 3-4 and Table 21, the following conclusions can be made. Activation with nitric acid or hydrochloric acid reduced the calcium level to 2-3 mg/g of calcium, and typical Qvisc values were approximately 150 mPa•s. Activation with sulfuric acid alone resulted in ~8 mg/g calcium and lower Qvisc values of approximately 60. Prewashing the mixture with nitric acid or citric acid at a pH of the acidified mixture of 2.7 before sulfuric acid activation improved Qvisc and removed about half of the calcium (to 4-5 mg/g). A similar pre-wash at a pH of the mixture of less than 2 with nitric acid before sulfuric acid activation removed most of the calcium (to 1.7-2.4 mg/g), and Qvisc increased to over 100 mPa•s, and in most instances, over 125 mPa•s.

While not wishing to be bound by the following theory, it is believed that pectin will normally bind the calcium in the peel, as it is negatively charged, but as the pH approaches 2, pectin is no longer charged, so calcium can be washed out. This appears to be the case for hydrochloric acid and nitric acid activation. It also appears to occur for sulfuric acid, but the calcium forms calcium sulfate and stays in the activated CF composition. By removing the calcium prior to the acid activation, the activation with sulfuric acid will be similar to hydrochloric acid and nitric acid. If not removed prior to activation, calcium can be bound by hexametaphosphate (and other materials that function similarly).

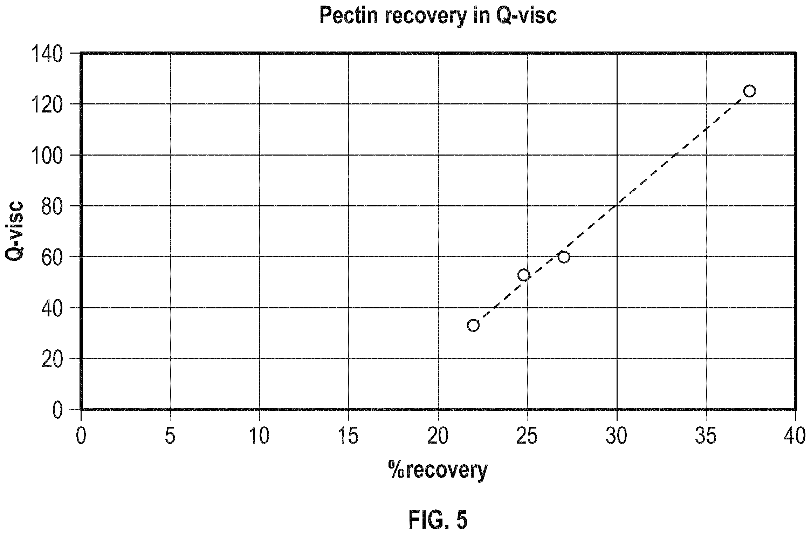

From the IV and pectin recovery data for Samples 23-26, it is clear that calcium addition has not affected the quality nor the amount of pectin in the activated citrus fiber. The free pectin of these samples was evaluated by centrifuging the respective samples and testing the liquid. The results are shown in FIG. 5. When more calcium was present in the activated citrus fiber (resulting in lower Qvisc), less pectin dissolved during the Qvisc test. Calcium appears to be preventing the liberation of pectin.

*Example 11*

For Example 11, analogous procedures to those described above in Example 10 (see Sample 6 in particular) were used for evaluating orange vesicles that were washed twice in ethanol, pressed to 35.5 wt. % dry matter, and activated in nitric acid.

The acid used and its respective amount (undiluted in mL per kg of dry matter), the activating time (minutes), pH, IV (dL/g), pectin recovery (%), Coil Overlap parameter (dL/g), Quick Viscosity (Qvisc, in mPa.s), Stability, and Water Binding Capacity (g/g) are summarized in Table 22.

At a comparable activating time of 60 minutes to Sample 6 of Example 10, the activated pectin-containing biomass compositions of Samples 3-4 of Example 11 had much higher Qvisc (of 265-272 mPa•s). Further, the water binding capacity values for Samples 3-4 were in the 56-67 g/g range.

Table 21

| Sample | Acid | mL/kg DM | Min | pH | Additional Treatment | IV (dL/g) | Recovery (%) | Coil Overlap (dL/g) | Qvisc (mPa·s) | Stability | Calcium (mg/g) |
|---|---|---|---|---|---|---|---|---|---|---|---|
| 1 | HCl | 166 | 90 | 1.6 | None | 6.2 | 41.2 | 2.5 | 180 | 4 | - |
| 2 | HCl | 166 | 90 | 1.7 | None | 6.2 | 42.8 | 2.6 | 175 | 4 | - |
| 3 | HCl | 166 | 30 | 1.4 | None | 5.6 | 43.7 | 2.4 | 125 | 4 | - |
| 4 | HCl | 166 | 60 | 1.5 | None | 5.2 | 43.1 | 2.2 | 143 | 4 | - |
| 5 | HNO3 | 150 | 30 | 1.5 | None | 5.5 | 44.4 | 2.4 | 148 | 4 | - |
| 6 | HNO3 | 150 | 60 | 1.5 | None | 5.2 | 45.3 | 2.4 | 148 | 4 | - |
| 7 | HNO3 | 200 | 30 | 1.67 | None | 6.6 | 41.7 | 2.8 | 140 | 4 | - |
| 8 | HNO3 | 200 | 60 | 1.67 | None | 6.4 | 44.3 | 2.8 | 193 | 4 | 2.7 |
| 9 | H2SO4 | 66 | 30 | 1.69 | None | 5.0 | 40.3 | 2.0 | 63 | 2 | - |
| 10 | H2SO4 | 66 | 60 | 1.71 | None | 4.9 | 41.5 | 2.0 | 58 | 4 | 10.1 |
| 11 | H2SO4 | 75 | 30 | 1.75 | None | 7.2 | 37.9 | 2.7 | 50 | 2 | 7.6 |
| 12 | H2SO4 | 75 | 60 | 1.75 | None | 7.4 | 39.6 | 2.9 | 55 | 2 | 7.5 |
| 13 | H2SO4 | 150 | 30 | - | None | 7.2 | 41.2 | 3.0 | 75 | 4 | 8.1 |
| 14 | H2SO4 | 150 | 60 | - | None | 6.4 | 43.1 | 2.8 | 95 | 4 | 8.4 |
| 15 | H2SO4 | 115 | 30 | 1.55 | None | 7.2 | 40.0 | 2.9 | 50 | 2 | 8.1 |
| 16 | H2SO4 | 115 | 60 | 1.55 | None | 7.0 | 41.5 | 2.9 | 60 | 2 | 8.0 |
| 17 | HNO3 | 125 | 30 | 1.83 | None | 8.1 | 35.9 | 2.9 | 93 | 4 | 2.3 |
| 18 | H2SO4 | 100 | 30 | 1.83 | HNO3, 1.8 pH, 30 min, 25°C, 55 wt% alcohol | 7.0 | 43.7 | 3.0 | 128 | 3 | 2.3 |
| 19 | H2SO4 | 100 | 60 | 1.83 | HNO3, 1.8 pH, 30 min, 25°C, 55 wt% alcohol | 6.5 | 43.8 | 2.8 | 153 | 3 | 1.7 |
| 20 | Citric | 500 | 30 | 2.75 | None | 6.1 | 33.4 | 2.04 | 20 | 3 | - |
| 21 | Citric | 500 | 60 | 2.75 | None | 6.0 | 35.2 | 2.11 | 23 | 2 | 9.84 |
| 22 | HNO3 | 200 | 30 | 1.46 | None | 7.1 | 40.1 | 2.8 | 123 | 5 | 2.5 |

| Sample | Acid | mL/kg DM | Min | pH | Additional Treatment | IV (dL/g) | Recovery (%) | Coil Overlap (dL/g) | Qvisc (mPa•s) | Stability | Calcium (mg/g) |
|--------|------|----------|-----|------|----------------------|-----------|--------------|---------------------|---------------|-----------|----------------|
| 23 | HNO3 | 200 | 60 | 1.46 | None | 6.3 | 41.3 | 2.6 | 145 | 5 | 2.3 |
| 24 | HNO3 | 200 | 60 | 1.46 | +calcium | 7.1 | 41.1 | 2.9 | 65 | 2 | 11.0 |
| 25 | HNO3 | 200 | 60 | 1.46 | +calcium | 7.3 | 40.1 | 2.9 | 48 | 2 | 14.1 |
| 26 | HNO3 | 200 | 60 | 1.46 | +calcium | 7.4 | 38.6 | 2.9 | 28 | 2 | 19.5 |
| 27 | H2SO4 | 150 | 30 | 1.40 | None | 5,6 | 39.5 | 2.2 | 33 | 2 | 7.7 |
| 28 | H2SO4 | 150 | 60 | 1.40 | None | 6.6 | 43.9 | 2.9 | 63 | 2 | 7.7 |
| 29 | H2SO4 | 150 | 60 | 1.40 | +calcium | 6.2 | 38.8 | 2.4 | 30 | 2 | 19.8 |
| 30 | H2SO4 | 150 | 60 | 1.40 | +calcium | 6.5 | 37.3 | 2.4 | 33 | 2 | 23.3 |
| 31 | H2SO4 | 150 | 60 | 1.40 | +calcium | 6.4 | 35.2 | 2.3 | 28 | 2 | 29.4 |
| 32 | H2SO4 | 150 | 60 | 1.30 | None | 6.7 | 40.7 | 2.7 | 53 | 1 | 8.0 |
| 33 | H2SO4 | 150 | 60 | 1.30 | +citrate | 6.8 | 41.2 | 2.8 | 70 | 1 | 8.2 |
| 34 | H2SO4 | 150 | 60 | 1.30 | +citrate | 6.3 | 39.7 | 2.5 | 65 | 2 | 7.8 |
| 35 | H2SO4 | 150 | 60 | 1.30 | +citrate | 5.7 | 39.3 | 2.2 | 78 | 4 | 7.3 |
| 36 | H2SO4 | 150 | 60 | 1.30 | None | 6.7 | 40.7 | 2.7 | 53 | 1 | 8.0 |
| 37 | H2SO4 | 150 | 60 | 1.30 | +HMP | 6.4 | 42.7 | 2.7 | 125 | 5 | 7.6 |
| 38 | H2SO4 | 150 | 60 | 1.30 | +HMP | 5.9 | 43 | 2.5 | 125 | 5 | 7.0 |
| 39 | H2SO4 | 150 | 60 | 1.30 | +HMP | 5.8 | 42.1 | 2.4 | 130 | 4 | 6.4 |
| 40 | H2SO4 | 150 | 30 | 1.28 | Citric acid | 6.9 | 38.9 | 2.7 | 73 | 4 | 4.7 |
| 41 | H2SO4 | 150 | 60 | 1.28 | Citric acid | 6.1 | 43.1 | 2.6 | 108 | 5 | 4.5 |
| 42 | H2SO4 | 200 | 60 | 1.30 | HNO3, 1.7 pH, 60 min, 25°C, 45 wt% alcohol | 6.1 | 42.9 | 2.6 | 197.5 | 4 | 1.71 |
| 43 | H2SO4 | 200 | 60 | 1.40 | HNO3, 1.9 pH, 60 min, 25°C, 45 wt% alcohol | 6.17 | 43.92 | 2.7 | 161.5 | 5 | 1.82 |
| 44 | H2SO4 | 200 | 60 | 1.30 | HNO3, 1.7 pH, 60 min, 25°C, 45 wt% alcohol | 6.71 | 44.67 | 2.9 | 188 | 4 | 1.34 |

EP 3 837 288 B1

41

| Sample | Acid | mL/kg DM | Min | pH | Additional Treatment | IV (dL/g) | Recovery (%) | Coil Overlap (dL/g) | Qvisc (mPa•s) | Stability | Calcium (mg/g) |
|---|---|---|---|---|---|---|---|---|---|---|---|
| 45 | H2SO4 | 200 | 60 | 1.10 | HNO3, 1.5 pH, 60 min, 25°C, 45 wt% alcohol | 6.21 | 43.02 | 2.7 | 167 | 5 | 1.37 |
| 46 | H2SO4 | 200 | 60 | 1.10 | HNO3, 1.6 pH, 60 min, 25°C, 45 wt% alcohol | 6.04 | 44.2 | 2.7 | 166 | 5 | 1.65 |
| 47 | HCl | 221 | 30 | 1.50 | None | 4.3 | 39.8 | 1.7 | 100 | 5 | 2.0 |
| 48 | HCl | 221 | 60 | 1.50 | None | 6.7 | 41.6 | 2.8 | 155 | 5 | 2.1 |
| 49 | HCl | 221 | 60 | 1.50 | None | 7 | 42.5 | 3.0 | 165 | 5 | 2.3 |
| 50 | HCl | 221 | 60 | 1.50 | +calcium | 7.5 | 39.7 | 3.0 | 43 | 1 | 19.7 |
| 51 | Oxalic | | 30 | 1.72 | None | | | | 100 | 3 | |
| 52 | Oxalic | | 60 | 1.72 | None | 5.6 | 38.8 | 2.17 | 105 | 3 | 8.4 |
| 53 | Phosphoric | | 30 | 1.7 | None | | | | 50 | 2 | |
| 54 | Phosphoric | | 60 | 1.8 | None | 5.5 | 33.1 | 1.82 | 45 | 1 | 6.9 |
| 55 | H2SO4 | 150 | 30 | 1.31 | HNO3, 2.7 pH, 30 min, 75°C, 55 wt% alcohol | 6.7 | 39.9 | 2.7 | 78 | 4 | 4.8 |
| 56 | H2SO4 | 150 | 60 | 1.31 | HNO3, 2.7 pH, 30 min, 75°C, 55 wt% alcohol | 6.4 | 40.6 | 2.6 | 90 | 3 | 4.4 |
| 57 | H2SO4 | 125 | 30 | 1.3 | HNO3, 1.9 pH, 30 min, 75°C, 55 wt% alcohol | 6.9 | 41.6 | 2.9 | 113 | 5 | 2.4 |
| 58 | H2SO4 | 125 | 60 | 1.3 | HNO3, 1.9 pH, 30 min, 75°C, 55 wt% alcohol | 6.8 | 43.6 | 3.0 | 128 | 5 | 2.1 |
| 59 | H2SO4 | 100 | 30 | 1.51 | HNO3, 1.83 pH, 30 min, 70°C, 55 wt% alcohol | 7.0 | 43.7 | 3.0 | 128 | 3 | 2.3 |
| 60 | H2SO4 | 100 | 60 | 1.51 | HNO3, 1.83 pH, 30 min, 70°C, 55 wt% alcohol | 6.5 | 43.8 | 2.8 | 153 | 3 | 1.7 |
| 61 | H2SO4 | 150 | 30 | 1.5 | No acid, 6.7 pH, 20 min, 75°C, 55 wt% alcohol | 5.9 | 42.5 | 2.5 | 63 | 1 | 7.6 |

(continued)

| Sample | Acid | mL/kg DM | Min | pH | Additional Treatment | IV (dL/g) | Recovery (%) | Coil Overlap (dL/g) | Qvisc (mPa•s) | Stability | Calcium (mg/g) |
|---|---|---|---|---|---|---|---|---|---|---|---|
| 62 | H2SO4 | 150 | 60 | 1.5 | No acid, 6.7 pH, 20 min, 75°C, 55 wt% alcohol | 5.6 | 44.2 | 2.5 | 93 | 3 | 7.3 |
| 63 | H2SO4 | 140 | 30 | 1.3 | HNO3, 2.49 pH, 20 min, 75°C, 55 wt% alcohol | 7.3 | 41.8 | 3.1 | 113 | 2 | 3.5 |
| 64 | H2SO4 | 140 | 60 | 1.3 | HNO3, 2.49 pH, 20 min, 75°C, 55 wt% alcohol | 6.8 | 43.2 | 2.9 | 125 | 2 | 3.3 |
| 65 | H2SO4 | 125 | 30 | 1.4 | HNO3, 2.05 pH, 20 min, 75°C, 55 wt% alcohol | 6.3 | 40.7 | 2.6 | 130 | 5 | 2.1 |
| 66 | H2SO4 | 125 | 60 | 1.4 | HNO3, 2.05 pH, 20 min, 75°C, 55 wt% alcohol | 7.2 | 42.7 | 3.1 | 163 | 4 | 2.1 |
| 67 | H2SO4 | 110 | 30 | 1.5 | HNO3, 1.74 pH, 20 min, 75°C, 55 wt% alcohol | 5.7 | 38.8 | 2.2 | 115 | 5 | 1.6 |
| 68 | H2SO4 | 110 | 60 | 1.5 | HNO3, 1.74 pH, 20 min, 75°C, 55 wt% alcohol | 6.7 | 43.3 | 2.9 | 138 | 4 | 1.4 |

Table 22

| Sample | Acid | mL/kg DM | Min | pH | IV (dL/g) | Recovery (%) | Coil Overlap (dL/g) | Qvisc (mPa•s) | Stability | Water Binding (g/g) |
|---|---|---|---|---|---|---|---|---|---|---|
| 1 | HNO3 | 150 | 15 | 1.6 | 4.5 | 32.6 | 1.5 | 120 | 4 | 23 |
| 2 | HNO3 | 150 | 30 | 1.6 | 5.7 | 35.9 | 2.1 | 175 | 4 | 41 |
| 3 | HNO3 | 150 | 60 | 1.6 | 6.7 | 40.1 | 2.7 | 265 | 4 | 56 |
| 4 | HNO3 | 150 | 60 | 1.6 | 6.6 | 38.0 | 2.5 | 272 | 4 | 67 |
| 5 | HNO3 | 150 | 90 | 1.6 | 6.0 | 41.6 | 2.5 | 272 | 4 | 63 |

**Claims**

1. A method for producing an activated pectin-containing biomass composition, the method comprising:

A) mixing a starting pectin-containing biomass material comprising an insoluble fiber component and an insoluble protopectin component with an aqueous solution of an alcohol to form a mixture;
B) activating the starting pectin-containing biomass material to form an activated pectin-containing biomass composition comprising the insoluble fiber component and a soluble pectin component by subjecting the starting pectin-containing biomass material to (i) an activating solution formed by adding hydrochloric acid to the mixture to adjust the pH of the mixture within the range from 0.5 to 2.5, and (ii) heat to a temperature greater than 40 °C;
C) applying mechanical energy either (i) to the mixture of step A), (ii) during the activating of step B), or (iii) to the mixture of step A) and during the activating of step B); and
D) separating the activated pectin-containing biomass composition from the mixture;
wherein during the method the alcohol present in the mixture is at or greater than 35 weight percent based on the total weight of the mixture;
wherein an acid solution containing from 3 wt. % to 37 wt. % hydrochloric acid is added to the mixture in step B).

2. A method for producing an activated pectin-containing biomass composition, the method comprising:

A) mixing a starting pectin-containing biomass material comprising an insoluble fiber component and an insoluble protopectin component with an aqueous solution of an alcohol to form a mixture;
B) activating the starting pectin-containing biomass material to form an activated pectin-containing biomass composition comprising the insoluble fiber component and a soluble pectin component by subjecting the starting pectin-containing biomass material to (i) an activating solution formed by adding sulfuric acid to the mixture to adjust the pH of the mixture within the range from 0.5 to 2.5, and (ii) heat to a temperature greater than 40 °C;
C) applying mechanical energy either (i) to the mixture of step A), (ii) during the activating of step B), or (iii) to the mixture of step A) and during the activating of step B); and
D) separating the activated pectin-containing biomass composition from the mixture;
wherein during the method the alcohol present in the mixture is at or greater than 35 weight percent, based on the total weight of the mixture;
wherein an acid solution containing from 5 wt. % to 20 wt. % sulfuric acid is added to the mixture in step B).

3. A method for producing an activated pectin-containing biomass composition, the method comprising:

a) mixing a starting pectin-containing biomass material comprising an insoluble fiber component and an insoluble protopectin component with an aqueous solution of an alcohol to form a mixture;
b) treating the mixture of step a) to reduce the calcium content of the starting pectin-containing biomass material to less than or equal to 6 mg per g dry matter of the starting pectin-containing biomass material to form a calcium-reduced pectin-containing biomass material;
c) activating the calcium-reduced pectin-containing biomass material in the mixture of step b) to form an activated pectin-containing biomass composition comprising the insoluble fiber component and a soluble pectin component by subjecting the calcium-reduced pectin-containing biomass material to an activating solution formed by adding sulfuric acid and/or phosphoric acid to the mixture to adjust the pH of the mixture within the range from 0.5 to 2.5, and heating to a temperature greater than 40 °C;

d) applying mechanical energy (i) to the mixture of step a), (ii) during step b), (iii) during the activating of step c), or (iv) any combination thereof; and

e) separating the activated pectin-containing biomass composition from the mixture.

4. The method of claim 3, wherein an acid solution containing from 5 wt. % to 20 wt. % sulfuric acid is added to the mixture in step c).

5. The method of claim 3 or 4, wherein treating the mixture in step b) comprises prewashing the mixture with nitric acid, citric acid, hydrochloric acid or phosphoric acid to adjust the pH of the mixture to within the range from 0.5 to 3, or from 1 to 2.2, and removing at least a portion of the acid and calcium from the mixture prior to step c).

6. The method of claim 5, wherein the prewashing is conducted at a prewashing temperature of at or greater than 20 °C to 80 °C; and/or wherein during the method the alcohol present in the mixture is at or greater than 3 5 weight percent, preferably at or greater than 40 weight percent, based on the total weight of the mixture.

7. The method of any one of the preceding claims, wherein a pump, a plate refiner, a disc refiner, an extruder, a lobe pump, a centrifugal pump, a homogenizer, or any combination thereof, is used for applying the mechanical energy.

8. The method of any one of the preceding claims, wherein the mechanical energy is at or about 800 kJ or greater, at or about 1200 kJ or greater, or at or about 1900 kJ or greater, per kg dry matter of the starting pectin-containing biomass material.

9. The method of any one of the preceding claims, wherein the mechanical energy is at or about 36 kJ or greater, at or about 40 kJ or greater, or at or about 60 kJ or greater, per kg of the mixture.

10. The method of any one of the preceding claims, wherein the starting pectin-containing biomass material is obtained from citrus fruit comprising:

   citrus fruit peels comprising orange peels, lemon peels, lime peels, grapefruit peels, tangerine peels, or any combination thereof; and/or

   citrus fruit vesicles comprising orange vesicles, lemon vesicles, lime vesicles, grapefruit vesicles, tangerine vesicles, or any combination thereof; and

   optionally wherein the starting pectin-containing biomass material comprises alcohol washed citrus fruit peels.

11. The method of any one of the preceding claims, wherein the activated pectin-containing biomass composition has:

   a coil overlap parameter of 1.2 or greater, 2 or greater, 2.5 or greater, from 1.2 to 4.5, from 2 to 4.5, or from 2.5 to 4.5.

   a degree of esterification of the soluble pectin component of 50 percent or higher, or 60 percent or higher; and/or

   an apparent viscosity from 150 mPa•s to 3500 mPa•s, when measured in a 2 wt. % aqueous solution at a temperature of 25 °C and pH 4.0 using a Brookfield Viscometer; and/or

   a water binding capacity from 14 g/g to 70 g/g, or from 14 g/g to 27 g/g; and/or

   a pH from 2.5 to 9, or from 2.5 to 5.5, in a 1 wt. % solution in de-ionized water; and/or

   a Quick viscosity (Qvisc) in a range from 50 mPa s to 300 mPa·s, from 100 mPa s to 220 mPa·s, from 110 mPa·s to 210 mPa·s, or from 140 mPa·s to 200 mPa·s.

12. The method of any one of claims 3-11, wherein the calcium content is reduced to less than or equal to 5 mg/g, less than or equal to 4 mg/g, less than or equal to 3 mg/g, or less than or equal to 2 mg/g; and/or

   wherein the method further comprises a step of post-treating the activated pectin-containing biomass composition to bind calcium and/or to reduce the calcium content, and to increase the Quick viscosity.

13. An activated pectin-containing biomass composition prepared by the method of any one of the preceding claims, wherein the composition comprises:

   an insoluble fiber component comprising cellulosic material; and

   a soluble pectin component comprising readily soluble pectin

   wherein the activated pectin-containing biomass composition has a Quick viscosity (Qvisc) in a range of from 50 mPa s to 300 mPa s and a calcium content of less than or equal to 2 mg/g.

14. The composition of claim 13, wherein the composition is a food ingredient or the composition is used a starting material for extracting pectin.

15. A product comprising the composition of claim 13 or claim 14.

16. Use of an acid to reduce the calcium content of the starting pectin-containing biomass material in the method of any one of claims 3-12 to less than or equal 6 mg per g dry matter of the starting pectin-containing biomass.

17. The use of claim 16, wherein the acid comprises nitric acid, hydrochloric acid, citric acid, phosphoric acid, or any combination thereof.

18. A method for producing an activated pectin-containing biomass composition, the method comprising:

A) mixing a starting pectin-containing biomass material comprising an insoluble fiber component and an insoluble protopectin component with an aqueous solution of an alcohol to form a mixture;
B) activating the starting pectin-containing biomass material to form an activated pectin-containing biomass composition comprising the insoluble fiber component and a soluble pectin component by subjecting the starting pectin-containing biomass material to (i) an activating solution formed by adding an acid to the mixture to adjust the pH of the mixture within the range from 0.5 to 2.5, and (ii) heat to a temperature greater than 40 °C;
C) applying mechanical energy either (i) to the mixture of step A), (ii) during the activating of step B), or (iii) to the mixture of step A) and during the activating of step B); and
D) separating the activated pectin-containing biomass composition from the mixture;
wherein during the method the alcohol present in the mixture is at or greater than 35 weight percent based on the total weight of the mixture;
wherein the starting pectin-containing biomass material comprises citrus fruit vesicles comprising orange vesicles, lemon vesicles, lime vesicles, grapefruit vesicles, tangerine vesicles, or any combination thereof; and
wherein the starting pectin-containing biomass material is in contact with the activating solution for a time period of 30 minutes to 2 hours.

19. The method of claim 18, wherein the acid comprises nitric acid, hydrochloric acid, sulfuric acid, citric acid, phosphoric acid, or any combination thereof; and/or
wherein the activated pectin-containing biomass composition has a water binding capacity from 14 g/g to 70 g/g, from 20 g/g to 70 g/g, or from 40 g/g to 70 g/g.

20. An activated pectin-containing biomass composition prepared by the method of claim 18 or claim 19, wherein the composition comprises:

an insoluble fiber component comprising cellulosic material; and
a soluble pectin component comprising readily soluble pectin

wherein the activated pectin-containing biomass composition has a Quick viscosity (Qvisc) in a range of from 50 mPa s to 400 mPa·s and a water binding capacity of 40 g/g to 70 g/g.

**Patentansprüche**

1. Ein Verfahren zum Produzieren einer aktivierten pektinhaltigen Biomassezusammensetzung, wobei das Verfahren Folgendes beinhaltet:

A) Mischen eines pektinhaltigen Ausgangsbiomassematerials, das eine unlösliche Faserkomponente und eine unlösliche Protopektinkomponente beinhaltet, mit einer wässrigen Lösung eines Alkohols, um eine Mischung zu bilden;
B) Aktivieren des pektinhaltigen Ausgangsbiomassematerials, um eine aktivierte pektinhaltige Biomassezusammensetzung, die die unlösliche Faserkomponente und eine lösliche Pektinkomponente beinhaltet, zu bilden, indem das pektinhaltige Ausgangsbiomassematerial Folgendem ausgesetzt wird: (i) einer aktivierenden Lösung, gebildet durch das Hinzugeben von Salzsäure zu der Mischung, um den pH-Wert der Mischung innerhalb des Bereichs von 0,5 bis 2,5 einzustellen, und (ii) Wärme bis zu einer Temperatur von mehr als 40 °C;

C) Anwenden von mechanischer Energie entweder (i) auf die Mischung von Schritt A), (ii) während des Aktivierens von Schritt B) oder (iii) auf die Mischung von Schritt A) und während des Aktivierens von Schritt B); und

D) Trennen der aktivierten pektinhaltigen Biomassezusammensetzung aus der Mischung;

wobei während des Verfahrens der in der Mischung vorhandene Alkohol bezogen auf das Gesamtgewicht der Mischung 35 Gewichtsprozent oder mehr beträgt;

wobei der Mischung in Schritt B) eine Säurelösung, die 3 Gew.-% bis 37 Gew.-% Salzsäure enthält, hinzugegeben wird.

2. Ein Verfahren zum Produzieren einer aktivierten pektinhaltigen Biomassezusammensetzung, wobei das Verfahren Folgendes beinhaltet:

A) Mischen eines pektinhaltigen Ausgangsbiomassematerials, das eine unlösliche Faserkomponente und eine unlösliche Protopektinkomponente beinhaltet, mit einer wässrigen Lösung eines Alkohols, um eine Mischung zu bilden;

B) Aktivieren des pektinhaltigen Ausgangsbiomassematerials, um eine aktivierte pektinhaltige Biomassezusammensetzung, die die unlösliche Faserkomponente und eine lösliche Pektinkomponente beinhaltet, zu bilden, indem das pektinhaltige Ausgangsbiomassematerial Folgendem ausgesetzt wird: (i) einer aktivierenden Lösung, gebildet durch das Hinzugeben von Schwefelsäure zu der Mischung, um den pH-Wert der Mischung innerhalb des Bereichs von 0,5 bis 2,5 einzustellen, und (ii) Wärme bis zu einer Temperatur von mehr als 40 °C;

C) Anwenden von mechanischer Energie entweder (i) auf die Mischung von Schritt A), (ii) während des Aktivierens von Schritt B) oder (iii) auf die Mischung von Schritt A) und während des Aktivierens von Schritt B); und

D) Trennen der aktivierten pektinhaltigen Biomassezusammensetzung aus der Mischung;

wobei während des Verfahrens der in der Mischung vorhandene Alkohol bezogen auf das Gesamtgewicht der Mischung 35 Gewichtsprozent oder mehr beträgt;

wobei der Mischung in Schritt B) eine Säurelösung, die 5 Gew.-% bis 20 Gew.-% Schwefelsäure enthält, hinzugegeben wird.

3. Ein Verfahren zum Produzieren einer aktivierten pektinhaltigen Biomassezusammensetzung, wobei das Verfahren Folgendes beinhaltet:

a) Mischen eines pektinhaltigen Ausgangsbiomassematerials, das eine unlösliche Faserkomponente und eine unlösliche Protopektinkomponente beinhaltet, mit einer wässrigen Lösung eines Alkohols, um eine Mischung zu bilden;

b) Behandeln der Mischung von Schritt a), um den Calciumgehalt des pektinhaltigen Ausgangsbiomassematerials auf weniger als oder gleich 6 mg pro g Trockensubstanz des pektinhaltigen Ausgangsbiomassematerials zu reduzieren, um ein calciumreduziertes pektinhaltiges Biomassematerial zu bilden;

c) Aktivieren des calciumreduzierten pektinhaltigen Biomassematerials in der Mischung von Schritt b), um eine aktivierte pektinhaltige Biomassezusammensetzung, die die unlösliche Faserkomponente und eine lösliche Pektinkomponente beinhaltet, zu bilden, indem das calciumreduzierte pektinhaltige Biomassematerial einer aktivierenden Lösung, gebildet durch das Hinzugeben von Schwefelsäure und/oder Phosphorsäure zu der Mischung, um den pH-Wert der Mischung innerhalb des Bereichs von 0,5 bis 2,5 einzustellen, ausgesetzt wird und auf eine Temperatur von mehr als 40 °C erwärmt wird;

d) Anwenden von mechanischer Energie (i) auf die Mischung von Schritt a), (ii) während Schritt b), (iii) während des Aktivierens von Schritt c) oder (iv) eine beliebige Kombination davon; und

e) Trennen der aktivierten pektinhaltigen Biomassezusammensetzung aus der Mischung.

4. Verfahren gemäß Anspruch 3, wobei der Mischung in Schritt c) eine Säurelösung, die 5 Gew.-% bis 20 Gew.-% Schwefelsäure enthält, hinzugegeben wird.

5. Verfahren gemäß Anspruch 3 oder 4, wobei das Behandeln der Mischung in Schritt b) das Vorwaschen der Mischung mit Salpetersäure, Zitronensäure, Salzsäure oder Phosphorsäure, um den pH-Wert der Mischung auf innerhalb des Bereichs von 0,5 bis 3 oder von 1 bis 2,2 einzustellen, und das Entfernen mindestens eines Anteils der Säure und des Calciums aus der Mischung vor Schritt c) beinhaltet.

6. Verfahren gemäß Anspruch 5, wobei das Vorwaschen bei einer Vorwaschtemperatur von 20 °C oder mehr bis 80 °C durchgeführt wird; und/oder wobei während des Verfahrens der in der Mischung vorhandene Alkohol bezogen auf das Gesamtgewicht der Mischung 35 Gewichtsprozent oder mehr, vorzugsweise 40 Gewichtsprozent oder mehr beträgt.

**7.** Verfahren gemäß einem der vorhergehenden Ansprüche, wobei eine Pumpe, ein Plattenrefiner, ein Scheibenrefiner, ein Extruder, eine Drehkolbenpumpe, eine Zentrifugalpumpe, ein Homogenisator oder eine beliebige Kombination davon zum Anwenden der mechanischen Energie verwendet wird.

**8.** Verfahren gemäß einem der vorhergehenden Ansprüche, wobei die mechanische Energie 800 oder ungefähr 800 kJ oder mehr, 1200 oder ungefähr 1200 kJ oder mehr oder 1900 oder ungefähr 1900 kJ oder mehr pro kg Trockensubstanz des pektinhaltigen Ausgangsbiomassematerials beträgt.

**9.** Verfahren gemäß einem der vorhergehenden Ansprüche, wobei die mechanische Energie 36 oder ungefähr 36 kJ oder mehr, 40 oder ungefähr 40 kJ oder mehr oder 60 oder ungefähr 60 kJ oder mehr pro kg der Mischung beträgt.

**10.** Verfahren gemäß einem der vorhergehenden Ansprüche, wobei das pektinhaltige Ausgangsbiomassematerial von Zitrusfrüchten erhalten wird, beinhaltend:

Zitrusfruchtschalen, beinhaltend Orangenschalen, Zitronenschalen, Limettenschalen, Grapefruitschalen, Tangerinenschalen oder eine beliebige Kombination davon;
und/oder
Zitrusfruchtpulpa, beinhaltend Orangenpulpa, Zitronenpulpa, Limettenpulpa, Grapefruitpulpa, Tangerinenpulpa oder eine beliebige Kombination davon; und
wobei das pektinhaltige Ausgangsbiomassematerial optional mit Alkohol gewaschene Zitrusfruchtschalen beinhaltet.

**11.** Verfahren gemäß einem der vorhergehenden Ansprüche, wobei die aktivierte pektinhaltige Biomassezusammensetzung Folgendes aufweist:

einen Kettenüberlappungsparametervon 1,2 oder mehr, 2 oder mehr, 2,5 oder mehr, von 1,2 bis 4,5, von 2 bis 4,5 oder von 2,5 bis 4,5;
einen Veresterungsgrad der löslichen Pektinkomponente von 50 Prozent oder höher oder 60 Prozent oder höher; und/oder
eine scheinbare Viskosität von 150 mPa•s bis 3500 mPa•s, wenn in einer 2-gew.-%igen wässrigen Lösung bei einer Temperatur von 25 °C und einem pH-Wert von 4,0 unter Verwendung eines Brookfield-Viskosimeters gemessen; und/oder eine Wasserbindungsfähigkeit von 14 g/g bis 70 g/g oder von 14 g/g bis 27 g/g; und/oder
einen pH-Wert von 2,5 bis 9 oder von 2,5 bis 5,5 in einer 1-gew.-%igen Lösung in entionisiertem Wasser; und/oder eine Schnell-Viskosität (Qvisc) in einem Bereich von 50 mPa·s bis 300 mPa·s, von 100 mPa·s bis 220 mPa·s, von 110 mPa·s bis 210 mPa·s oder von 140 mPa·s bis 200 mPa·s.

**12.** Verfahren gemäß einem der Ansprüche 3-11, wobei der Calciumgehalt auf weniger als oder gleich 5 mg/g, weniger als oder gleich 4 mg/g, weniger als oder gleich 3 mg/g oder weniger als oder gleich 2 mg/g reduziert wird; und/oder wobei das Verfahren ferner einen Schritt des Nachbehandelns der aktivierten pektinhaltigen Biomassezusammensetzung zum Binden von Calcium und/oder Reduzieren des Calciumgehalts und zum Erhöhen der Schnell-Viskosität beinhaltet.

**13.** Eine durch das Verfahren gemäß einem der vorhergehenden Ansprüche hergestellte aktivierte pektinhaltige Biomassezusammensetzung, wobei die Zusammensetzung Folgendes beinhaltet:

eine unlösliche Faserkomponente, die zellulosisches Material beinhaltet; und
eine lösliche Pektinkomponente, die leicht lösliches Pektin beinhaltet,
wobei die aktivierte pektinhaltige Biomassezusammensetzung eine Schnell-Viskosität (Qvisc) in einem Bereich von 50 mPa·s bis 300 mPa·s und einen Calciumgehalt von weniger als oder gleich 2 mg/g aufweist.

**14.** Zusammensetzung gemäß Anspruch 13, wobei die Zusammensetzung ein Nahrungsmittelbestandteil ist oder die Zusammensetzung als Ausgangsmaterial zum Extrahieren von Pektin verwendet wird.

**15.** Ein Produkt, das die Zusammensetzung gemäß Anspruch 13 oder Anspruch 14 beinhaltet.

**16.** Eine Verwendung einer Säure zum Reduzieren des Calciumgehalts des pektinhaltigen Ausgangsbiomassematerials in dem Verfahren gemäß einem der Ansprüche 3-12 auf weniger als oder gleich 6 mg pro g Trockensubstanz der pektinhaltigen Ausgangsbiomasse.

**17.** Verwendung gemäß Anspruch 16, wobei die Säure Salpetersäure, Salzsäure, Zitronensäure, Phosphorsäure oder eine beliebige Kombination davon beinhaltet.

**18.** Ein Verfahren zum Produzieren einer aktivierten pektinhaltigen Biomassezusammensetzung, wobei das Verfahren Folgendes beinhaltet:

A) Mischen eines pektinhaltigen Ausgangsbiomassematerials, das eine unlösliche Faserkomponente und eine unlösliche Protopektinkomponente beinhaltet, mit einer wässrigen Lösung eines Alkohols, um eine Mischung zu bilden;
B) Aktivieren des pektinhaltigen Ausgangsbiomassematerials, um eine aktivierte pektinhaltige Biomassezusammensetzung, die die unlösliche Faserkomponente und eine lösliche Pektinkomponente beinhaltet, zu bilden, indem das pektinhaltige Ausgangsbiomassematerial Folgendem ausgesetzt wird: (i) einer aktivierenden Lösung, gebildet durch das Hinzugeben einer Säure zu der Mischung, um den pH-Wert der Mischung innerhalb des Bereichs von 0,5 bis 2,5 einzustellen, und (ii) Wärme bis zu einer Temperatur von mehr als 40 °C;
C) Anwenden von mechanischer Energie entweder (i) auf die Mischung von Schritt A), (ii) während des Aktivierens von Schritt B) oder (iii) auf die Mischung von Schritt A) und während des Aktivierens von Schritt B); und
D) Trennen der aktivierten pektinhaltigen Biomassezusammensetzung aus der Mischung;
wobei während des Verfahrens der in der Mischung vorhandene Alkohol bezogen auf das Gesamtgewicht der Mischung 35 Gewichtsprozent oder mehr beträgt;
wobei das pektinhaltige Ausgangsbiomassematerial Zitrusfruchtpulpa, beinhaltend Orangenpulpa, Zitronenpulpa, Limettenpulpa, Grapefruitpulpa, Tangerinenpulpa oder eine beliebige Kombination davon, beinhaltet; und
wobei das pektinhaltige Ausgangsbiomassematerial mit der aktivierenden Lösung über einen Zeitraum von 30 Minuten bis 2 Stunden in Kontakt ist.

**19.** Verfahren gemäß Anspruch 18, wobei die Säure Salpetersäure, Salzsäure, Schwefelsäure, Zitronensäure, Phosphorsäure oder eine beliebige Kombination davon beinhaltet; und/oder
wobei die aktivierte pektinhaltige Biomassezusammensetzung eine Wasserbindungsfähigkeit von 14 g/g bis 70 g/g, von 20 g/g bis 70 g/g oder von 40 g/g bis 70 g/g aufweist.

**20.** Eine durch das Verfahren gemäß Anspruch 18 oder Anspruch 19 hergestellte aktivierte pektinhaltige Biomassezusammensetzung, wobei die Zusammensetzung Folgendes beinhaltet:

eine unlösliche Faserkomponente, die zellulosisches Material beinhaltet; und
eine lösliche Pektinkomponente, die leicht lösliches Pektin beinhaltet,
wobei die aktivierte pektinhaltige Biomassezusammensetzung eine Schnell-Viskosität (Qvisc) in einem Bereich von 50 mPa·s bis 400 mPa·s und eine Wasserbindungsfähigkeit von 40 g/g bis 70 g/g aufweist.

**Revendications**

**1.** Un procédé pour la production d'une composition de biomasse contenant de la pectine activée, le procédé comprenant :

A) le mélange d'une matière de biomasse contenant de la pectine de départ comprenant un constituant à fibre insoluble et un constituant à protopectine insoluble avec une solution aqueuse d'un alcool afin de former un mélange ;
B) l'activation de la matière de biomasse contenant de la pectine de départ afin de former une composition de biomasse contenant de la pectine activée comprenant le constituant à fibre insoluble et un constituant à pectine soluble en soumettant la matière de biomasse contenant de la pectine de départ (i) à une solution d'activation formée par l'ajout d'acide chlorhydrique au mélange afin d'ajuster le pH du mélange au sein de l'intervalle allant de 0,5 à 2,5 et (ii) à de la chaleur jusqu'à une température faisant plus de 40 °C ;
C) l'application d'énergie mécanique soit (i) au mélange de l'étape A), soit (ii) durant l'activation de l'étape B), soit (iii) au mélange de l'étape A) et durant l'activation de l'étape B) ; et
D) la séparation de la composition de biomasse contenant de la pectine activée du mélange ;

où durant le procédé l'alcool présent dans le mélange fait 35 pour cent en poids ou plus rapporté au poids total du mélange ;

où une solution acide contenant de 3 % en poids à 37 % en poids d'acide chlorhydrique est ajoutée au mélange dans l'étape B).

2. Un procédé pour la production d'une composition de biomasse contenant de la pectine activée, le procédé comprenant :

A) le mélange d'une matière de biomasse contenant de la pectine de départ comprenant un constituant à fibre insoluble et un constituant à protopectine insoluble avec une solution aqueuse d'un alcool afin de former un mélange ;

B) l'activation de la matière de biomasse contenant de la pectine de départ afin de former une composition de biomasse contenant de la pectine activée comprenant le constituant à fibre insoluble et un constituant à pectine soluble en soumettant la matière de biomasse contenant de la pectine de départ (i) à une solution d'activation formée par l'ajout d'acide sulfurique au mélange afin d'ajuster le pH du mélange au sein de l'intervalle allant de 0,5 à 2,5, et (ii) à de la chaleur jusqu'à une température faisant plus de 40 °C ;

C) l'application d'énergie mécanique soit (i) au mélange de l'étape A), soit (ii) durant l'activation de l'étape B), soit (iii) au mélange de l'étape A) et durant l'activation de l'étape B) ; et

D) la séparation de la composition de biomasse contenant de la pectine activée du mélange ;

où durant le procédé l'alcool présent dans le mélange fait 35 pour cent en poids ou plus, rapporté au poids total du mélange ;

où une solution acide contenant de 5 % en poids à 20 % en poids d'acide sulfurique est ajoutée au mélange dans l'étape B).

3. Un procédé pour la production d'une composition de biomasse contenant de la pectine activée, le procédé comprenant :

a) le mélange d'une matière de biomasse contenant de la pectine de départ comprenant un constituant à fibre insoluble et un constituant à protopectine insoluble avec une solution aqueuse d'un alcool afin de former un mélange ;

b) le traitement du mélange de l'étape a) afin de réduire la teneur en calcium de la matière de biomasse contenant de la pectine de départ jusqu'à ce qu'elle soit inférieure ou égale à 6 mg par g d'extrait sec de la matière de biomasse contenant de la pectine de départ afin de former une matière de biomasse contenant de la pectine à calcium réduit ;

c) l'activation de la matière de biomasse contenant de la pectine à calcium réduit dans le mélange de l'étape b) afin de former une composition de biomasse contenant de la pectine activée comprenant le constituant à fibre insoluble et un constituant à pectine soluble en soumettant la matière de biomasse contenant de la pectine à calcium réduit à une solution d'activation formée par l'ajout d'acide sulfurique et/ou d'acide phosphorique au mélange afin d'ajuster le pH du mélange au sein de l'intervalle allant de 0,5 à 2,5, et à un chauffage jusqu'à une température faisant plus de 40 °C ;

d) l'application d'énergie mécanique (i) au mélange de l'étape a), (ii) durant l'étape b), (iii) durant l'activation de l'étape c), ou (iv) toute combinaison de ceux-ci ; et

e) la séparation de la composition de biomasse contenant de la pectine activée du mélange.

4. Le procédé de la revendication 3, où une solution acide contenant de 5 % en poids à 20 % en poids d'acide sulfurique est ajoutée au mélange dans l'étape c).

5. Le procédé de la revendication 3 ou de la revendication 4, où le traitement du mélange dans l'étape b) comprend le prélavage du mélange avec de l'acide nitrique, de l'acide citrique, de l'acide chlorhydrique ou de l'acide phosphorique afin d'ajuster le pH du mélange jusqu'à ce qu'il soit au sein de l'intervalle allant de 0,5 à 3, ou de 1 à 2,2, et le retrait d'au moins une portion de l'acide et du calcium du mélange préalablement à l'étape c).

6. Le procédé de la revendication 5, où le prélavage est effectué à une température de prélavage allant de 20 °C ou plus à 80 °C ; et/ou où durant le procédé l'alcool présent dans le mélange fait 35 pour cent en poids ou plus, préférablement 40 pour cent en poids ou plus, rapporté au poids total du mélange.

7. Le procédé de n'importe laquelle des revendications précédentes, où il est utilisé, pour l'application de l'énergie mécanique, une pompe, un raffineur à plateaux, un raffineur à disques, une extrudeuse, une pompe à lobes, une pompe centrifuge, un homogénéiseur, ou toute combinaison de ceux-ci.

8. Le procédé de n'importe laquelle des revendications précédentes, où l'énergie mécanique fait 800 kJ ou environ 800 kJ ou plus, 1 200 kJ ou environ 1 200 kJ ou plus, ou 1 900 kJ ou environ 1 900 kJ ou plus, par kg d'extrait sec de la matière de biomasse contenant de la pectine de départ.

9. Le procédé de n'importe laquelle des revendications précédentes, où l'énergie mécanique fait 36 kJ ou environ 36 kJ ou plus, 40 kJ ou environ 40 kJ ou plus, ou 60 kJ ou environ 60 kJ ou plus, par kg du mélange.

10. Le procédé de n'importe laquelle des revendications précédentes, où la matière de biomasse contenant de la pectine de départ est obtenue à partir d'un agrume comprenant :

des zestes d'agrume comprenant des zestes d'orange, des zestes de citron, des zestes de citron vert, des zestes de pamplemousse, des zestes de mandarine, ou toute combinaison de ceux-ci ; et/ou
des vésicules d'agrume comprenant des vésicules d'orange, des vésicules de citron,
des vésicules de citron vert, des vésicules de pamplemousse, des vésicules de mandarine, ou toute combinaison de celles-ci ; et
facultativement où la matière de biomasse contenant de la pectine de départ comprend des zestes d'agrume lavés à l'alcool.

11. Le procédé de n'importe laquelle des revendications précédentes, où la composition de biomasse contenant de la pectine activée a :

un paramètre de recouvrement de pelotes de 1,2 ou plus, de 2 ou plus, de 2,5 ou plus, allant de 1,2 à 4,5, de 2 à 4,5, ou de 2,5 à 4,5 ;
un degré d'estérification du constituant à pectine soluble de 50 pour cent ou plus, ou de 60 pour cent ou plus ; et/ou
une viscosité apparente allant de 150 mPa•s à 3 500 mPa•s, lorsque mesurée dans une solution aqueuse à 2 % en poids à une température de 25 °C et un pH de 4,0 à l'aide d'un viscosimètre Brookfield ; et/ou
une capacité de fixation de l'eau allant de 14 g/g à 70 g/g, ou allant de 14 g/g à 27 g/g ; et/ou
un pH allant de 2,5 à 9, ou de 2,5 à 5,5, dans une solution à 1 % en poids dans de l'eau désionisée ; et/ou
une viscosité rapide (Qvisc, *Quick viscosity*) comprise dans un intervalle allant de 50 mPa•s à 300 mPa•s, de 100 mPa•s à 220 mPa•s, de 110 mPa•s à 210 mPa•s, ou de 140 mPa•s à 200 mPa•s.

12. Le procédé de n'importe laquelle des revendications 3 à 11, où la teneur en calcium est réduite jusqu'à être inférieure ou égale à 5 mg/g, inférieure ou égale à 4 mg/g, inférieure ou égale à 3 mg/g, ou inférieure ou égale à 2 mg/g ; et/ou où le procédé comprend en sus une étape de post-traitement de la composition de biomasse contenant de la pectine activée afin de fixer le calcium et/ou de réduire la teneur en calcium, et afin d'augmenter la viscosité rapide.

13. Une composition de biomasse contenant de la pectine activée préparée par le procédé de n'importe laquelle des revendications précédentes, où la composition comprend :

un constituant à fibre insoluble comprenant de la matière cellulosique ; et
un constituant à pectine soluble comprenant de la pectine facilement soluble
où la composition de biomasse contenant de la pectine activée a une viscosité rapide (Qvisc, *Quick viscosity*) comprise dans un intervalle allant de 50 mPa•s à 300 mPa•s et une teneur en calcium inférieure ou égale à 2 mg/g.

14. La composition de la revendication 13, où la composition est un ingrédient alimentaire ou la composition est utilisée comme matière de départ pour l'extraction de pectine.

15. Un produit comprenant la composition de la revendication 13 ou de la revendication 14.

16. Utilisation d'un acide afin de réduire la teneur en calcium de la matière de biomasse contenant de la pectine de départ dans le procédé de n'importe laquelle des revendications 3 à 12 jusqu'à ce qu'elle soit inférieure ou égale à 6 mg par g d'extrait sec de la biomasse contenant de la pectine de départ.

17. L'utilisation de la revendication 16, où l'acide comprend de l'acide nitrique, de l'acide chlorhydrique, de l'acide citrique, de l'acide phosphorique, ou toute combinaison de ceux-ci.

**18.** Un procédé pour la production d'une composition de biomasse contenant de la pectine activée, le procédé comprenant :

A) le mélange d'une matière de biomasse contenant de la pectine de départ comprenant un constituant à fibre insoluble et un constituant à protopectine insoluble avec une solution aqueuse d'un alcool afin de former un mélange ;

B) l'activation de la matière de biomasse contenant de la pectine de départ afin de former une composition de biomasse contenant de la pectine activée comprenant le constituant à fibre insoluble et un constituant à pectine soluble en soumettant la matière de biomasse contenant de la pectine de départ (i) à une solution d'activation formée par l'ajout d'un acide au mélange afin d'ajuster le pH du mélange au sein de l'intervalle allant de 0,5 à 2,5, et (ii) à de la chaleur jusqu'à une température faisant plus de 40 °C ;

C) l'application d'énergie mécanique soit (i) au mélange de l'étape A), soit (ii) durant l'activation de l'étape B), soit (iii) au mélange de l'étape A) et durant l'activation de l'étape B) ; et

D) la séparation de la composition de biomasse contenant de la pectine activée du mélange ;

où durant le procédé l'alcool présent dans le mélange fait 35 pour cent en poids ou plus rapporté au poids total du mélange ;

où la matière de biomasse contenant de la pectine de départ comprend des vésicules d'agrume comprenant des vésicules d'orange, des vésicules de citron, des vésicules de citron vert, des vésicules de pamplemousse, des vésicules de mandarine, ou toute combinaison de celles-ci ; et

où la matière de biomasse contenant de la pectine de départ est en contact avec la solution d'activation pendant un laps de temps de 30 minutes à 2 heures.

**19.** Le procédé de la revendication 18, où l'acide comprend de l'acide nitrique, de l'acide chlorhydrique, de l'acide sulfurique, de l'acide citrique, de l'acide phosphorique, ou toute combinaison de ceux-ci ; et/ou

où la composition de biomasse contenant de la pectine activée a une capacité de fixation de l'eau allant de 14 g/g à 70 g/g, de 20 g/g à 70 g/g, ou de 40 g/g à 70 g/g.

**20.** Une composition de biomasse contenant de la pectine activée préparée par le procédé de la revendication 18 ou de la revendication 19, où la composition comprend :

un constituant à fibre insoluble comprenant de la matière cellulosique ; et

un constituant à pectine soluble comprenant de la pectine facilement soluble

où la composition de biomasse contenant de la pectine activée a une viscosité rapide (Qvisc, *Quick viscosity*) comprise dans un intervalle allant de 50 mPa•s à 400 mPa•s et une capacité de fixation de l'eau de 40 g/g à 70 g/g.

FIG. 1

**FIG. 2**

FIG. 3

FIG. 4

**FIG. 5**

EP 3 837 288 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8323513 B

- EP 1812120 B1